(19) Europäisches Patentamt
European Patent Office
Office européen des brevets

(11) **EP 2 431 856 A1**

(12) **EUROPEAN PATENT APPLICATION**

(43) Date of publication:
**21.03.2012  Bulletin 2012/12**

(51) Int Cl.:
***G06F 3/048*** (2006.01)

(21) Application number: **11181630.2**

(22) Date of filing: **16.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.09.2010  JP 2010210910**

(71) Applicant: **Nintendo Co., Ltd.
Minami-ku,
Kyoto 601-8501 (JP)**

(72) Inventor: **Akifusa, Yusuke
Kyoto, 601-8501 (JP)**

(74) Representative: **Lang, Johannes
Bardehle Pagenberg
Prinzregentenplatz 7
81675 München (DE)**

(54) **Display control program, display control system, and display control method**

(57)    When a scroll target consisting of an object or a group of objects is scrolled and displayed in a display area representing one part or the whole of a display screen, a uniform-velocity scrolling parameter representing a scroll amount for which the scroll target is scrolled at a uniform velocity is calculated in accordance with a scrolling operation by a user, and a scrolling including at least a uniform-velocity scrolling is executed for the scroll amount determined based on the uniform-velocity scrolling parameter.

FIG. 15

**Description**

CROSS REFERENCE TO RELATED APPLICATION

The disclosure of Japanese Patent Application No. 2010-210910, filed on September 21, 2010, is incorporated herein by reference.

BACKGROUND OF THE INVENTION

Field of the Invention

The present invention relates to a display control program, a display control system, and a display control method; and more specifically, relates to a display control program, a display control system, and a display control method for controlling scrolling of objects.

Description of the Background Art

Devices for scrolling images and objects in accordance with coordinate information outputted from touch panels have been conventionally proposed (cf., Japanese Laid-Open Patent Publication No. 2007-018040). In a data processing device disclosed in the above described Japanese Laid-Open Patent Publication No. 2007-018040, when a contact between a touch panel and a physical object has been broken, objects and images are scrolled and displayed on a display, with initial velocities that depend on a change rate of contact coordinates.

However, with the data processing device disclosed in the above described Japanese Laid-Open Patent Publication No. 2007-018040, when a large object or a plurality of objects are to be scrolled and displayed on a display screen, a user has to repeatedly conduct an operation using the touch panel to largely change the contact coordinates; and thereby the user will perceive this experience as being a hassle.

SUMMARY OF THE INVENTION

Therefore, an objective of the present invention is to provide a display control program, a display control method, and a display control system which provide a user with a hassle-free experience.

In order to achieve the above described objective, the present invention includes the following features.

A display control program of the present invention is executed by a computer of a display control apparatus for integrally scrolling an object or a group of objects as a scroll target and displaying one part of the scroll target in a display area representing one part or the whole of a display screen. The display control program causes the computer to function as scrolling operation accepting means, scrolling motion setting means, and scrolling means. The scrolling operation accepting means accepts a scrolling operation to scroll the scroll target in the display screen. The scrolling motion setting means calculates, in accordance with the scrolling operation accepted by the scrolling operation accepting means, a uniform-velocity scrolling parameter representing a scroll amount for which the scroll target is scrolled at a uniform velocity, based on a size of the scroll target, or on the number of objects included in the scroll target or on a scrollable amount for which the scroll target is scrollable in a scroll direction determined in accordance with the scrolling operation, and the scrolling motion setting means sets a scrolling motion which includes, at least as one part of the motion, a uniform-velocity scrolling for the scroll amount determined based on the uniform-velocity scrolling parameter. The scrolling means scrolls the scroll target in accordance with the scrolling motion set by the scrolling motion setting means.

According to the above described feature, since a uniform-velocity scrolling is included as one part of the scrolling motion and a scrolling using an arbitrary method can be executed after the uniform-velocity scrolling, the user can avoid experiencing a hassle when finding an object.

Furthermore, the scrolling motion setting means may use, as the scrollable amount, the number of objects existing in the scroll direction among the objects included in the scroll target, and may calculate the uniform-velocity scrolling parameter based on said number of the objects existing in the scroll direction.

According to the above described feature, said number of objects existing in the scroll direction is used as the scrollable amount, and the appropriate uniform-velocity scrolling parameter in accordance with the scrollable amount can be calculated.

Furthermore, the scrolling motion setting means may use, as the scrollable amount, a length to an object existing at an end in the scroll direction among the objects included in the scroll target, and may calculate the uniform-velocity scrolling parameter based on the length to the object at the end.

According to the above described feature, the length to an object existing at an end in the scroll direction among the plurality of objects included in the scroll target is used as the scrollable amount, and the appropriate uniform-velocity scrolling parameter can be calculated in accordance with the scrollable amount.

Furthermore, the scrolling motion setting means may calculate the uniform-velocity scrolling parameter based on a ratio between the size of the scroll target and the size of the display area.

According to the above described feature, the appropriate uniform-velocity scrolling parameter for scrolling the scroll target at a uniform velocity in an arbitrary direction can be calculated, based on the ratio between the size of the scroll target and the size of the display area.

Furthermore, the scrolling motion setting means may calculate the uniform-velocity scrolling parameter based on a ratio between the scrollable amount and a length of the display area corresponding to the scrollable amount.

According to the above described feature, since the scroll amount is calculated based on the ratio between the scrollable amount for scrolling the scroll target and the length of the display area corresponding to the scrollable amount, the appropriate uniform-velocity scrolling parameter can be calculated in accordance with an arbitrary direction to which the scroll target is scrolled.

Furthermore, the scrolling motion setting means may calculate the uniform-velocity scrolling parameter based on the scrollable amount.

According to the above described feature, the appropriate uniform-velocity scrolling parameter for scrolling the scroll target to an arbitrary direction can be calculated, based only on the scrollable amount for scrolling the scroll target.

Furthermore, when the scrolling motion setting means calculates the uniform-velocity scrolling parameter based on said number of the objects included in the scroll target, the scrolling motion setting means may calculate the uniform-velocity scrolling parameter so as to be proportional to said number.

According to the above described feature, the appropriate uniform-velocity scrolling parameter can be calculated such that the larger said number of the objects included in the scroll target is, the larger the uniform-velocity scrolling parameter becomes.

Furthermore, when the scrolling motion setting means uses, as the scrollable amount, said number of the objects existing in the scroll direction determined in accordance with the scrolling operation among the objects included in the scroll target, and calculates the uniform-velocity scrolling parameter based on said number of the objects existing in the scroll direction; the uniform-velocity scrolling parameter may be calculated so as to be proportional to said number.

According to the above described feature, when said number of objects existing in the scroll direction is used as the scrollable amount, the appropriate uniform-velocity scrolling parameter can be calculated such that the larger the scrollable amount is, the larger the uniform-velocity scrolling parameter becomes.

Furthermore, when the scrolling motion setting means uses, as the scrollable amount, the length to the object existing at the end in the scroll direction among the objects included in the scroll target, and calculates the uniform-velocity scrolling parameter based on the length to the object at the end; the uniform-velocity scrolling parameter may be calculated so as to be proportional to the length to the object at the end.

According to the above described feature, the appropriate uniform-velocity scrolling parameter can be calculated such that the longer the length to the object existing at the end in the scroll direction among the plurality of objects included in the scroll target is, the larger the uniform-velocity scrolling parameter becomes.

Furthermore, when the scrolling motion setting means calculates the uniform-velocity scrolling parameter based on the ratio between the size of the scroll target and the size of the display area, the uniform-velocity scrolling parameter may be calculated so as to be proportional to a ratio of the size of the scroll target with respect to the size of the display area.

According to the above described feature, since the uniform-velocity scrolling parameter is calculated so as to be proportional to the ratio of the size of the scroll target with respect to the size of the display area, the appropriate uniform-velocity scrolling parameter can be calculated such that the larger the size of the scroll target is, the larger the uniform-velocity scrolling parameter becomes.

Furthermore, when the scrolling motion setting means calculates the uniform-velocity scrolling parameter based on the ratio between the scrollable amount and the length of the display area corresponding to the scrollable amount, the uniform-velocity scrolling parameter may be calculated so as to be proportional to a ratio of the scrollable amount with respect to the length of the display area corresponding to the scrollable amount.

According to the above described feature, since the uniform-velocity scrolling parameter is calculated so as to be proportional to the ratio of the scrollable amount with respect to the length of the display area corresponding to the scrollable amount, the appropriate uniform-velocity scrolling parameter can be calculated such that the larger the scrollable amount is with respect to the display area in accordance with an arbitrary direction when scrolling the scroll target, the larger the uniform-velocity scrolling parameter becomes.

Furthermore, when the scrolling motion setting means calculates the uniform-velocity scrolling parameter based on the scrollable amount, the uniform-velocity scrolling parameter may be calculated so as to be proportional to the scrollable amount.

According to the above described feature, the appropriate uniform-velocity scrolling parameter can be calculated such that the larger the scrollable amount is, the larger the uniform-velocity scrolling parameter becomes, based on the scrollable amount of the scroll target.

Furthermore, the display control program may further cause the computer to function as object arrangement means for arranging the group of objects as the scroll target, such that each of the objects in the group is aligned in a predetermined direction. The scrolling motion setting means may set the scrolling motion so as to scroll the scroll target in the predetermined direction.

According to the above described feature, since the arrangement direction and the scroll direction of the objects match, the user can scroll the group of objects without losing track of the object due to a mismatch between the arrangement direction and the scroll direction of the objects.

Furthermore, the scrolling operation accepting means may include coordinate instruction detection means for detecting a coordinate instruction by a user using an input device, and slide velocity detection means for detecting, when the scroll target is selected and slid, a slide velocity obtained immediately before releasing the selected scroll target based on the coordinate instruction detected by coordinate instruction detection means. The scrolling motion setting means may determine the initial velocity of the scrolling motion based on the slide velocity detected by the slide velocity detection means.

According to the above described feature, the initial velocity of the scrolling can be determined in accordance with a user's operation sensation when the user conducts an operation to start the scrolling.

Furthermore, the scrolling motion setting means may calculate, as the uniform-velocity scrolling parameter, the length of time for which the scroll target is scrolled at a uniform velocity.

According to the above described feature, the uniform-velocity scrolling can be controlled through time, and thereby the user can avoid experiencing a hassle due to the execution time of the uniform-velocity scrolling being excessively lengthy.

Furthermore, the scrolling motion setting means may calculate, as the uniform-velocity scrolling parameter, a length of a distance for which the scroll target is scrolled at a uniform velocity.

According to the above described feature, the uniform-velocity scrolling can be controlled through distance, and thereby a target thumbnail can be prevented from shifting away from the display area and being out of the user's sight due to over- scrolling caused by scrolling for an excessively long distance at a uniform velocity.

Furthermore, after a uniform-velocity scrolling, the scrolling motion setting means may set the scrolling motion so as to further include a deceleration-scrolling of decelerating a scroll velocity at a predetermined deceleration regardless of the magnitude of the uniform-velocity scrolling parameter.

According to the above described feature, even with different scroll target objects, a natural sensation of operation can be attained by using an identical deceleration to stop the scrolling and by providing the user with a uniform operation sensation.

Furthermore, the scrolling motion setting means may set the scrolling motion so as to further include a deceleration-scrolling of decelerating a scroll velocity at a deceleration calculated based on a parameter representing, from among the scroll amount of all motions included in the scrolling motion, a remaining scroll amount after the uniform-velocity scrolling.

According to the above described feature, the scrolling can be stopped at an appropriate smoothness, regardless of the scroll amount of the uniform-velocity scrolling in the scrolling motion.

Furthermore, if the scroll target is a plurality of objects, the scrolling motion setting means may set the scrolling motion so as to further include a deceleration-scrolling of reducing a scroll velocity at a deceleration calculated such that, when the scroll target is scrolled for the parameter representing the remaining scroll amount, an object existing at a position closest to the center of the display area is stopped at the center.

According to the above described feature, the positions of the objects can be the same after the scrolling stops, and the user can easily select an object after the scrolling stops.

Furthermore, the present invention also includes another display control program executed by a computer of a display control apparatus for integrally scrolling an object or a group of objects as a scroll target, and displaying one part of the scroll target in a display area representing one part or the whole of a display screen. The other display control program causes the computer to function as scrolling operation accepting means, scrolling motion setting means, and scrolling means. The scrolling operation accepting means accepts a scrolling operation to scroll the scroll target in the display screen. The scrolling motion setting means calculates, in accordance with the scrolling operation accepted by the scrolling operation accepting means, a scroll parameter representing a scroll amount for which the scroll target is scrolled from a start to a stop of the scrolling, based on a size of the scroll target, or on the number of objects included in the scroll target or on a scrollable amount for which the scroll target is scrollable in a scroll direction determined in accordance with the scrolling operation, and the scrolling motion setting means sets a scrolling motion having a scroll amount determined based on the scroll parameter. The scrolling means scrolls the scroll target in accordance with the scrolling motion set by the scrolling motion setting means.

According to the above described feature, when a scrolling operation by the user is performed as an operational input, a parameter, indicating a scroll amount for which an object or a group of objects displayed in the display screen as a scroll target is scrolled, is calculated based on a size of the scroll target, or on the number of objects included in the scroll target or on a scrollable amount for which the scroll target is scrollable in a scroll direction. As a result, an optimal parameter representing the scroll amount is calculated, and scrolling and displaying can be executed without having the user experience a hassle when finding an object.

Furthermore, the present invention may be implemented in modes such as a display control system including each of the above described means, and as a display control method including motions performed by each of the above described means.

According to the present invention, a display capable of preventing a user from experiencing a hassle can be achieved.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a front view showing one example of a game apparatus 10 in an opened state;
FIG. 2 is a side view showing one example of the game apparatus 10 in the opened state;
FIG. 3 is a front view showing one example of the game apparatus 10 in a closed state;
FIG. 4 is a block diagram showing one example of the internal configuration of the game apparatus 10;
FIG. 5 shows one example of album creation screens displayed on an upper LCD 22 and a lower LCD 12 in FIG. 1;
FIG. 6 shows one example of album data used in the present invention;
FIG. 7 shows examples of screens in an album display process;
FIG. 8 shows examples of screens in the album display process;
FIG. 9 shows one example of a thumbnail arrangement;
FIG. 10A shows examples of basic positions used when determining the arrangement of thumbnails;
FIG. 10B shows one example of rates used when determining the arrangement of the thumbnails;
FIG. 10C shows a thumbnail arrangement example determined by using the basic positions and the rates;
FIG. 11 shows one example of an initial position of a thumbnail;
FIG. 12 shows one example of an initial screen in the album display process, which is displayed on the lower LCD 12 in FIG. 1;
FIG. 13 shows one example of a slide operation performed on a touch panel in the album display process;
FIG. 14 shows one example of a follow-scrolling conducted when the slide operation is performed on the touch panel in the album display process;
FIG. 15 shows an example of the relationship between scroll velocity and scroll time when a uniform-velocity scrolling is conducted;
FIG. 16 shows one example of a stopping distance used in a process to stop the scrolling;
FIG. 17 show an example of the display screen after when the scrolling is stopped by using the stopping distance;
FIG. 18 shows examples of various data stored in a main memory 32 when a display control program is executed by the game apparatus 10 in FIG. 1;
FIG. 19 is a flowchart showing one example of a display control action performed by the game apparatus 10 as a result of the display control program being executed by the game apparatus 10 in FIG. 1;
FIG. 20 shows one example of a detailed action by a subroutine for the album creation process at step 103 in FIG. 19;
FIG. 21 shows one example of a detail action by a subroutine for the album creation process at step 103 in FIG. 19;
FIG. 22 shows one example of a detailed action by a subroutine for the album display process at step 105 in FIG. 19;
FIG. 23 shows one example of a detailed action by a subroutine for the thumbnail arrangement process at step 302 in FIG. 22;
FIG. 24 shows one example of a detailed action by a subroutine for the thumbnail arrangement process at step 302 in FIG. 22;
FIG. 25 shows one example of a detailed action by a subroutine for a scroll display process at step 307 in FIG. 22;
FIG. 26 shows one example of a detailed action by a subroutine for the scroll display process at step 307 in FIG. 22;
FIG. 27 shows one example of a detailed action by a subroutine for the scroll display process at step 307 in FIG. 22;
FIG. 28 shows one example of a detailed action by a subroutine for the scroll display process at step 307 in FIG. 22;
FIG. 29 shows another thumbnail arrangement example;
FIG. 30 shows an example of the relationship between scroll velocity and scrolling distance when a uniform-velocity scrolling is conducted;
FIG. 31 shows one example of a calculated scrolling distance Zk and a total scrolling distance Sk, which are used when calculating a uniform-velocity scrolling period Tt;

FIG. 32 shows a modification of the detailed action by the subroutine for the scroll display process at step 307 in FIG. 22;

FIG. 33 shows one example of a distance used when calculating the uniform-velocity scrolling period Tt;

FIG. 34 shows one example of a positional relationship when scrolling a display object in a display area of the lower LCD 12; and

FIG. 35 shows one example of a positional relationship when scrolling a display object in the display area of the lower LCD 12.

DESCRIPTION OF THE PREFERRED EMBODIMENTS

(First Embodiment)

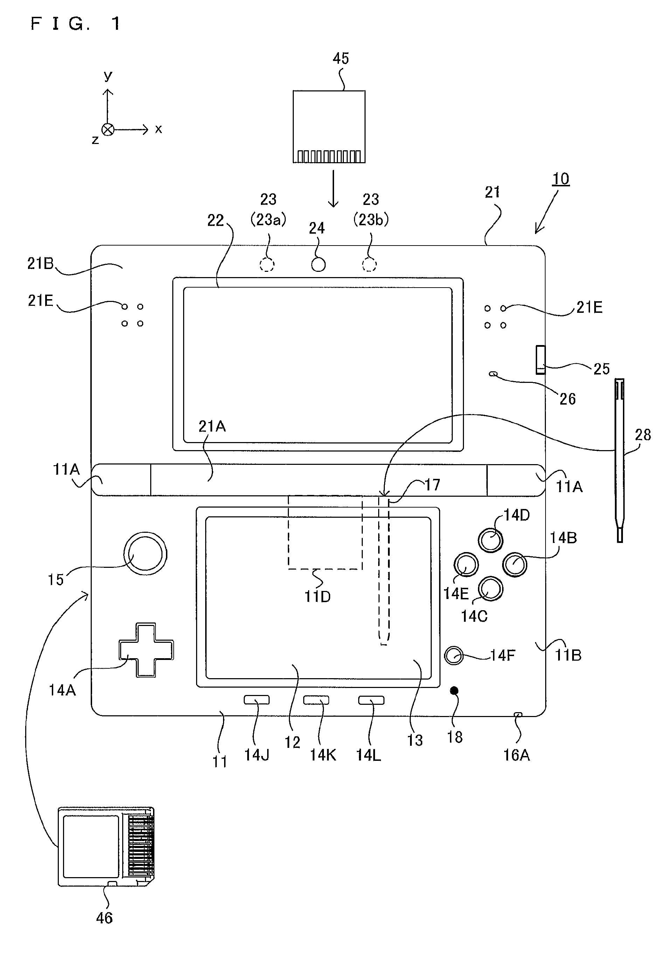

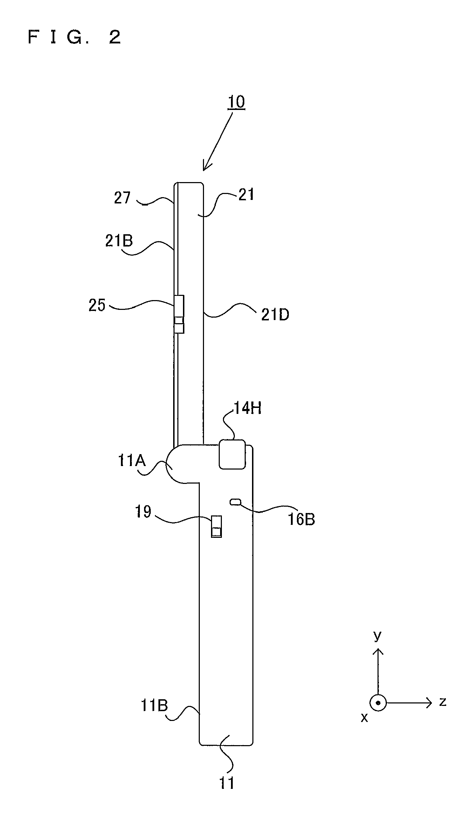

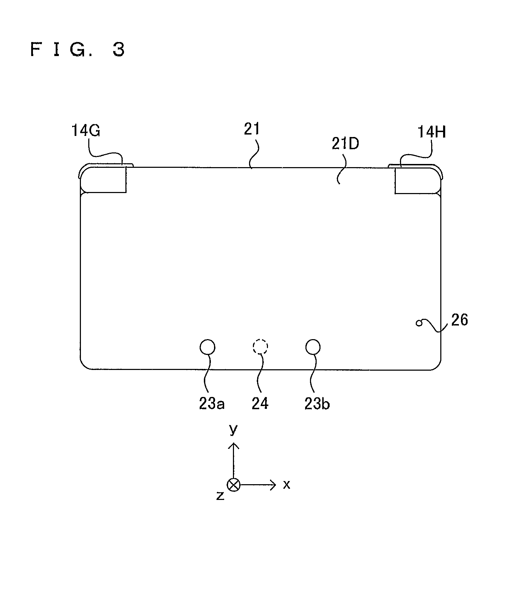

A display control apparatus which executes a display control program according to a first embodiment of the present invention is described in the following with reference to the drawings. Although the display control program of the present invention can be used by being executed on an arbitrary computer system; here, a portable game apparatus 10 is used as one example of the display control apparatus, and the description is provided by using a display control program executed by the game apparatus 10. FIG. 1 to FIG. 3 are plain views showing examples of exterior views of the game apparatus 10. Here, as one example, the game apparatus 10 is a portable game apparatus, and is configured to be foldable as shown in FIG. 1 to FIG. 3. FIG. 1 is a front view showing one example of the game apparatus 10 in an opened state. FIG. 2 is a right side view showing one example of the game apparatus 10 in the opened state. FIG. 3B is a front view showing one example of the game apparatus 10 in a closed state. The game apparatus 10 includes an imaging section, and is capable of, taking an image by means of the imaging section, displaying the taken image on a screen, and storing data of the taken image. Furthermore, the game apparatus 10 can execute a game program which is stored in an exchangeable memory card or can execute a game program which is received from a server or another game apparatus.

In FIG. 1 to FIG. 3, the game apparatus 10 includes a lower housing 11 and an upper housing 21. The lower housing 11 and the upper housing 21 are connected to each other so as to be openable and closable (foldable). In the example in FIG. 1, the lower housing 11 and the upper housing 21 are each formed in a horizontally long plate-like rectangular shape, and are connected to each other at long side portions thereof so as to be pivotable with respect to each other. Usually, a user uses the game apparatus 10 in the opened state. When not using the game apparatus 10, the user keeps the game apparatus 10 in a closed state. In addition to the above described closed state and opened state, an angle between the lower housing 11 and the upper housing 21 of the game apparatus 10 can be maintained at any angle ranging between the closed state and the opened state, by frictional force or the like generated at a connecting portion. In other words, with respect to the lower housing 11, the upper housing 21 can be maintained at any angle in a stationary manner.

As shown in FIG. 1 and FIG. 2, projections 11A, each of which projects in a direction perpendicular to an inner side surface (main surface) 11B of the lower housing 11, are provided at the upper long side portion of the lower housing 11. Furthermore, a projection 21A, which projects from the lower side surface of the upper housing 21 in a direction perpendicular to the lower side surface, is provided at the lower long side portion of the upper housing 21. Since the projections 11A of the lower housing 11 and the projection 21A of the upper housing 21 are connected to each other, the lower housing 11 and the upper housing 21 are foldably connected to each other.

Provided on the lower housing 11 are a lower LCD (Liquid Crystal Display) 12, a touch panel 13, operation buttons 14A to 14L (FIG. 1 to FIG. 3), an analog stick 15, LEDs 16A and 16B, an insertion opening 17, and a microphone hole 18. Detailed descriptions of these are provided in the following.

As shown in FIG. 1, the lower LCD 12 is accommodated in the lower housing 11. The lower LCD 12 has a horizontally long shape, and is arranged such that a long side direction thereof corresponds to a long side direction of the lower housing 11. The lower LCD 12 is arranged at the center of the lower housing 11. The lower LCD 12 is provided on the inner side surface (main surface) of the lower housing 11, and a screen of the lower LCD 12 is exposed at an opening provided on the inner side surface of the lower housing 11. By having the game apparatus 10 in the closed state when it is not used, the screen of the lower LCD 12 can be prevented from becoming dirty, being scratched, or being damaged. The number of pixels on the lower LCD 12 is, for example, 256 dots $\times$ 192 dots (horizontal x vertical). The lower LCD 12 is a display device for displaying an image in a planar manner (not in a stereoscopically visible manner), which is different from an upper LCD 22 described below. Although an LCD is used as a display device in the present embodiment, any other display device utilizing, for example, EL (Electro Luminescence), or the like may be used as the display device. In addition, a display device having any resolution can be used as the lower LCD 12.

As shown in FIG. 1, the game apparatus 10 includes the touch panel 13 as an input device. The touch panel 13 is mounted so as to cover the screen of the lower LCD 12. In the present embodiment, for example, a resistive film type touch panel is used as the touch panel 13. However, the touch panel 13 is not limited to the resistive film type, and, any press-type touch panel including, for example, an electrostatic capacitance type can be used. In the present embodiment, the touch panel 13 has the same resolution (detection accuracy) as the resolution of the lower LCD 12. However, the resolution of the touch panel 13 and the resolution of the lower LCD 12 do not necessarily have to be the same. Further, the insertion opening 17 (indicated by a dashed line in FIG. 1) is provided on the upper side surface of the lower housing 11. The insertion opening 17 is used for accommodating a stylus pen 28 which is used for performing an operation on the touch panel 13. Although an input on the touch panel 13 is usually made by using the stylus pen 28, a finger of the user can also be used for making an input on the touch panel 13, in addition to the stylus pen 28.

The operation buttons 14A to 14L are input devices for making predetermined inputs. As shown in FIG. 1, among the operation buttons 14A to 14L, a cross button 14A (direction input button 14A), a button 14B, a button 14C, a button 14D, a button 14E, a power button 14F, a select button 14J, a HOME button 14K, and a start button 14L are provided on the inner side surface (main surface) of the lower housing 11. The cross button 14A is cross-shaped, and includes buttons for indicating upward, downward, rightward, and leftward directions. The button 14B, the button 14C, the button 14D, and the button 14E are arranged so as to form a cross shape. The buttons 14A to 14E, the select button 14J, the HOME button 14K, and the start button 14L are assigned with functions in accordance with a program executed by the game apparatus 10, as necessary. For example, the cross button 14A is used for selection operation and the like, and the operation buttons 14B to 14E are used for, for example, determination operation, cancellation operation, and the like. Furthermore, the power button 14F is used for turning ON/OFF a power supply of the game apparatus 10.

The analog stick 15 is a device for indicating a direction, and is provided to the left of the lower LCD 12 in an upper portion of the inner side surface of the lower housing 11. As shown in FIG. 1, the cross button 14A is provided to the left of the lower LCD 12 in the lower portion of the lower housing 11. That is, the analog stick 15 is provided above the cross button 14A. The analog stick 15 and the cross button 14A are positioned so as to be operated by a thumb of a left hand with which the lower housing is held. Further, the analog stick 15 is provided in the upper area, and thus the analog stick 15 is positioned such that a thumb of a left hand with which the lower housing 11 is held is naturally positioned on the position of the analog stick 15, and the cross button 14A is positioned such that the thumb of the left hand is positioned on the position of the cross button 14A when the thumb of the left hand is slightly moved downward from the analog stick 15. The analog stick 15 has a top, corresponding to a key, which slides parallel to the inner side surface of the lower housing 11. The analog stick 15 acts in accordance with a program executed by the game apparatus 10. For example, when a game in which a predetermined object appears in a three-dimensional virtual space is executed by the game apparatus 10, the analog stick 15 acts as an input device for moving the predetermined object in the three-dimensional virtual space. In this case, the predetermined object is moved in a direction in which the top corresponding to the key of the analog stick 15 slides. As the analog stick 15, a component which enables an analog input by being tilted by a predetermined amount, in any direction, such as the upward, the downward, the rightward, the leftward, or the diagonal direction, may be used.

The button 14B, the button 14C, the button 14D, and the button 14E, which are positioned so as to form a cross shape, are arranged in a position where a thumb of a right hand holding the lower housing 11 is naturally located. In addition, these four buttons and the analog stick 15 are positioned so as to be symmetrical about the lower LCD 12. Thus, depending on a game program, for example, a left-handed user can perform a direction instruction input by using these four buttons.

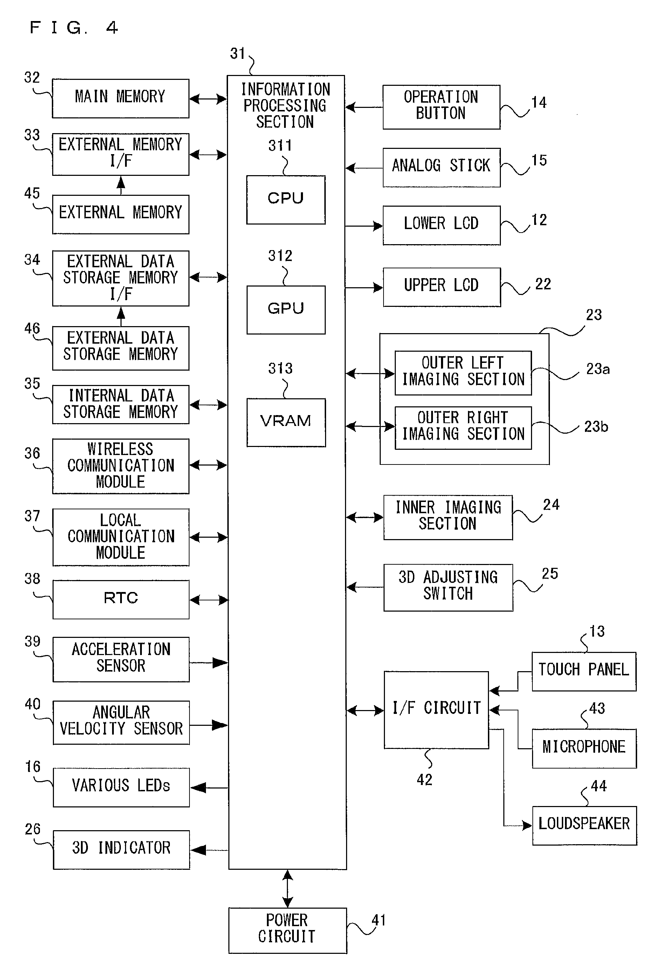

Further, the microphone hole 18 is provided on the inner side surface of the lower housing 11. Under the microphone hole 18, a microphone (refer to FIG. 4) is provided as a sound input device described below, and the microphone detects for a sound from the outside of the game apparatus 10.

As shown in FIG. 3, an L button 14G and an R button 14H are provided on the upper side surface of the lower housing 11. The L button 14G is provided on the left end portion of the upper surface of the lower housing 11, and the R button 14H is provided on the right end portion of the upper surface of the lower housing 11. As described later, the L button 14G and the R button 14H function as shutter buttons (imaging instruction buttons) for the imaging section. Furthermore, a volume button 14I (not shown) is provided on the left side surface of the lower housing 11. The volume button 14I is used to adjust the volume of a loudspeaker included in the game apparatus 10.

Further, in the left side surface of the lower housing 11, a cover 11C (not shown) is provided so as to be openable and closable. Inside the cover 11C, a connector (not shown) is provided for electrically connecting between the game apparatus 10 and an external data storage memory 46. The external data storage memory 46 is detachably connected to the connector. The external data storage memory 46 is used for, for example, recording (storing) data of an image taken by the game apparatus 10. The connector and the cover 11C may be provided on the right side surface of the lower housing 11.

As shown in FIG. 1, an insertion opening 11D, through which an external memory 45 having stored thereon a game program is inserted, is provided on the upper side surface of the lower housing 11. A connector (not shown) for electrically connecting between the game apparatus 10 and the external memory 45 in a detachable manner is provided inside the insertion opening 11D. A predetermined game program is executed by connecting the external memory 45 to the game apparatus 10. The connector and the insertion opening 11D may be provided on another side surface (for example, right side surface) of the lower housing 11.

As shown in FIG. 1, the first LED 16A for notifying the user an ON/OFF state of the power supply of the game apparatus 10 is provided on the lower side surface of the lower housing 11. Furthermore, as shown in FIG. 2, the second LED 16B for notifying the user of an establishment state of a wireless communication of the game apparatus 10 is provided on the right side surface of the lower housing 11. The game apparatus 10 can perform wireless communication with other devices, and the second LED 16B is lit up when a wireless communication is established with another device. The game apparatus 10 has a function of connecting to a wireless LAN in a method conforming to, for example, IEEE 802.11b/g standard. A wireless switch 19 for enabling/disabling the wireless communication function is provided on the right side surface of the lower housing 11 (refer to FIG. 2).

A rechargeable battery (not shown) acting as a power supply for the game apparatus 10 is accommodated in the lower housing 11, and the battery can be charged through a terminal provided on a side surface (for example, the upper side surface) of the lower housing 11.

In the upper housing 21, the upper LCD 22, two imaging sections (an outer left imaging section 23a and an outer right imaging section 23b), an inner imaging section 24, a 3D adjustment switch 25, and a 3D indicator 26 are provided. The following will describe these components in detail.

As shown in FIG. 1, the upper LCD 22 is accommodated in the upper housing 21. The upper LCD 22 has a horizontally long shape, and is located such that a long side direction thereof corresponds to a long side direction of the upper housing 21. The upper LCD 22 is positioned at the center of the upper housing 21. The area of a screen of the upper LCD 22 is set so as to be greater than the area of the screen of the lower LCD 12, for example. Further, the screen of the upper LCD 22 is horizontally elongated as compared to the screen of the lower LCD 12. Specifically, a rate of the horizontal width in the aspect ratio of the screen of the upper LCD 22 is set so as to be greater than a rate of the horizontal width in the aspect ratio of the screen of the lower LCD 12.

The screen of the upper LCD 22 is provided on the inner side surface (main surface) 21 B of the upper housing 21, and the screen of the upper LCD 22 is exposed at an opening provided in the inner side surface of the upper housing 21. Further, as shown in FIG. 2, the inner side surface of the upper housing 21 is covered with a transparent screen cover 27. The screen cover 27 protects the screen of the upper LCD 22, and integrates the upper LCD 22 and the inner side surface of the upper housing 21 with each other, thereby achieving unity. The number of pixels on the upper LCD 22 is, for example, 640 dots × 200 dots (horizontal x vertical). Although, in the present embodiment, the upper LCD 22 is a liquid crystal display, a display device using EL, or the like may be used. In addition, a display device having any resolution may be used as the upper LCD 22.

The upper LCD 22 is a display device capable of displaying a stereoscopically visible image. The upper LCD 22 is capable of displaying an image for a left eye and an image for a right eye by using substantially the same display area. Specifically, the upper LCD 22 is a display device using a method in which the image for a left eye and the image for a right eye are alternately displayed in the horizontal direction in predetermined units (for example, every other line). Alternatively, the upper LCD 22 may be a display device using a method in which the image for a left eye and the image for a right eye are alternately displayed for a predetermined time period. Further, the upper LCD 22 is a display device capable of displaying an image which is stereoscopically visible with naked eyes. In this case, as the upper LCD 22, a lenticular lens type display device or a parallax barrier type display device is used which enables the image for a left eye and the image for a right eye, which are alternately displayed in the horizontal direction, to be separately viewed by the left eye and the right eye, respectively. In the present embodiment, the upper LCD 22 is of a parallax barrier type. The upper LCD 22 displays, by using the image for a right eye and the image for a left eye, an image (a stereoscopic image) which is stereoscopically visible with naked eyes. That is, the upper LCD 22 allows the user to view the image for a left eye with her/his left eye, and the image for a right eye with her/his right eye by utilizing a parallax barrier, so that a stereoscopic image (a stereoscopically visible image) exerting a stereoscopic effect for the user can be displayed. Further, the upper LCD 22 may disable the parallax barrier. When the parallax barrier is disabled, an image can be displayed in a planar manner (it is possible to display a planar visible image which is in contrast to a stereoscopically visible image as described above. Specifically, a display mode is used in which the same displayed image is viewed with a left eye and a right eye.). Thus, the upper LCD 22 is a display device capable of switching between a stereoscopic display mode for displaying a stereoscopically visible image and a planar display mode (for displaying a planar visible image) for displaying an image in a planar manner. The switching of the display mode is performed by the 3D adjustment switch 25 described below.

An outer imaging section 23 is a generic term of the two imaging sections (the outer left imaging section 23a and the outer right imaging section 23b) provided on an outer side surface 21D of the upper housing 21 (the back surface opposite to the main surface of the upper housing 21 on which the upper LCD 22 is provided). The imaging directions of the outer left imaging section 23a and the outer right imaging section 23b agree with the outward normal direction of the outer side surface 21D, and are parallel to each other. In addition, the outer left imaging section 23a and the outer right imaging section 23b are positioned such that their imaging directions are 180 degrees opposite the normal direction of the display surface (inner surface) of the upper LCD 22. In other words, the imaging direction of the outer left imaging section 23a and the imaging direction of the outer right imaging section 23b are parallel to each other. The outer left imaging section 23a and the outer right imaging section 23b can be used as a stereo camera depending on a program executed by the game apparatus 10. Further, depending on a program, images taken by the two outer imaging sections (the outer left imaging section 23a and the outer right imaging section 23b) may be combined with each other or may compensate for each other, thereby enabling imaging using an extended imaging range. Further, depending on a program, when any one of the two outer imaging sections (the outer left imaging section 23a and the outer right imaging section 23b) is used alone, the outer imaging section 23 may be used as a non-stereo camera. In the present embodiment, the outer imaging section 23 is constituted of the two imaging sections, namely, the outer left imaging section 23a and the outer right imaging section 23b. Each of the outer left imaging section 23a and the outer right imaging section 23b includes an imaging device, such as a CCD image sensor or a CMOS image sensor, having a common predetermined resolution, and a lens. The lens may have a zooming mechanism.

As shown in FIG. 1 with a dashed line, the outer left imaging section 23a and the outer right imaging section 23b included in the outer imaging section 23 are aligned so as to be parallel to the horizontal direction of the screen of the upper LCD 22. Specifically, the outer left imaging section 23a and the outer right imaging section 23b are arranged such that a straight line connecting the outer left imaging section 23a and the outer right imaging section 23b is parallel to the horizontal direction of the screen of the upper LCD 22. Reference numerals 23a and 23b indicated by dashed lines in FIG. 1 respectively represent the outer left imaging section 23a and the outer right imaging section 23b existing on the outer side surface, which is the opposite side of the inner side surface of the upper housing 21. As shown in FIG. 1, when the user views the screen of the upper LCD 22 from the front, the outer left imaging section 23a is positioned on the left side and the outer right imaging section 23b is positioned on the right side. When a program that causes the outer imaging section 23 to function as a stereo camera is executed, the outer left imaging section 23a takes an image for the left eye, which is viewed by the user's left eye, and the outer right imaging section 23b takes an image for the right eye, which is viewed by the user's right eye. The interval between the outer left imaging section 23a and the outer right imaging section 23b is set to be about the interval between the two eyes of a human, and may be set, for example, in a range from 30 mm to 70 mm. However, the interval between the outer left imaging section 23a and the outer right imaging section 23b is not limited to this range.

In the present embodiment, the outer left imaging section 23a and the outer right imaging section 23b are fixed to the housing and directions to which they take images cannot be changed.

The outer left imaging section 23a and the outer right imaging section 23b are arranged at horizontally symmetrical positions with respect to the center of the upper LCD 22 (the upper housing 21). Specifically, the outer left imaging section 23a and the outer right imaging section 23b are arranged at symmetrical positions with respect to a line that divides the upper LCD 22 into two equal parts, i.e., a right part and a left part. Further, when the upper housing 21 is in the opened state, the outer left imaging section 23a and the outer right imaging section 23b are arranged on the back of positions above the upper edge of the screen of the upper LCD 22 in the upper portion of the upper housing 21. Thus, the outer left imaging section 23a and the outer right imaging section 23b are on the outer side surface of the upper housing 21, and if the upper LCD 22 were to be projected onto the outer side surface, the outer left imaging section 23a and the outer right imaging section 23b are disposed above the upper edge of the projection of the screen of the upper LCD 22.

As described above, the two imaging sections (the outer left imaging section 23a and the outer right imaging section 23b) of the outer imaging section 23 are arranged at horizontally symmetrical positions with respect to the center of the upper LCD 22. Therefore, when the user looks at the upper LCD 22 from the front, the imaging directions of the outer imaging section 23 matches the line-of-sight directions of the right and left eyes. Furthermore, since the outer imaging section 23 is arranged on the back of a position above the upper edge of the screen of the upper LCD 22, the outer imaging section 23 and the upper LCD 22 will not interfere with each other inside the upper housing 21. Therefore, when compared to a case where the outer imaging section 23 is arranged directly on the back side of the screen of the upper LCD 22, a thin configuration of the upper housing 21 can be achieved.

The inner imaging section 24 is positioned on the inner side surface (main surface) 21B of the upper housing 21, and acts as an imaging section which has an imaging direction which is the same direction as the inward normal direction of the inner side surface. The inner imaging section 24 includes an imaging device, such as a CCD image sensor and a CMOS image sensor, having a predetermined resolution, and a lens. The lens may have a zooming mechanism.

As shown in FIG. 1, when the upper housing 21 is in the opened state, the inner imaging section 24 is positioned, on the upper portion of the upper housing 21, above the upper edge of the screen of the upper LCD 22. Further, in this state, the inner imaging section 24 is positioned at the horizontal center of the upper housing 21 (on a line which separates the upper housing 21 (the screen of the upper LCD 22) into two equal parts, that is, the left part and the right part). Specifically, as shown in FIG. 1, the inner imaging section 24 is positioned on the inner side surface of the upper housing 21 at a position reverse of the middle position between the outer left imaging section 23a and the outer right imaging section 23b. Specifically, if the outer left imaging section 23a and the outer right imaging section 23b provided on the outer side surface of the upper housing 21 were to be projected on the inner side surface of the upper housing 21, the inner imaging section 24 is arranged in the middle of the projections of the outer left imaging section 23a and the outer right imaging section 23b.

As described above, the inner imaging section 24 takes an image in a direction opposite of the direction of the outer imaging section 23. The inner imaging section 24 is provided on the inner side surface of the upper housing 21, on the back side of a position in the middle of the two sections of the outer imaging sections 23. As a result, when the user is looking at the upper LCD 22 from the front, the inner imaging section 24 can take a frontal image of the user's face. Furthermore, since the inner imaging section 24 will not interfere with the outer left imaging section 23a and the outer right imaging section 23b inside the upper housing 21, a thin configuration of the upper housing 21 can be achieved.

The 3D adjustment switch 25 is a slide switch, and is used for switching a display mode of the upper LCD 22 as described above. Further, the 3D adjustment switch 25 is used for adjusting the stereoscopic effect of a stereoscopically visible image (stereoscopic image) which is displayed on the upper LCD 22. As shown in FIG. 1, the 3D adjustment switch 25 is provided at the end portions of the inner side surface and the right side surface of the upper housing 21, and is positioned at a position at which the 3D adjustment switch 25 is visible to the user when the user views the upper LCD 22 from the front thereof. The 3D adjustment switch 25 has a slider which is slidable to any position in a predetermined direction (along the longitudinal direction of the right side surface), and a display mode of the upper LCD 22 is determined in accordance with the position of the slider.

For example, when the slider of the 3D adjustment switch 25 is positioned at the lowermost position, the upper LCD 22 is set to the planar display mode, and a planar image is displayed on the screen of the upper LCD 22. Alternatively, the upper LCD 22 can be set in the stereoscopic display mode but still display a planar image, by using an identical image for both the image for the left eye and the image for the right eye. On the other hand, when the slider is positioned above the lowermost position, the upper LCD 22 is set to the stereoscopic display mode. In this case, a stereoscopically visible image is displayed on the screen of the upper LCD 22. When the slider is positioned above the lowermost position, a manner in which the stereoscopic image is visible is adjusted in accordance with the position of the slider. Specifically, an amount of deviation in the horizontal direction between a position of an image for a right eye and a position of an image for a left eye is adjusted in accordance with the position of the slider.

The 3D indicator 26 indicates whether or not the upper LCD 22 is in the stereoscopic display mode. For example, the 3D indicator 26 is implemented by an LED, and is lit up when the stereoscopic display mode of the upper LCD 22 is enabled. As shown in FIG. 1, the 3D indicator 26 is positioned near the screen of the upper LCD 22 on the inner side surface of the upper housing 21. Therefore, when the user views the screen of the upper LCD 22 from the front thereof, the user can easily view the 3D indicator 26. Therefore, also when the user is viewing the screen of the upper LCD 22, the user can easily recognize the display mode of the upper LCD 22.

Further, speaker holes 21E are provided on the inner side surface of the upper housing 21. Sound is outputted through the speaker holes 21E from a loudspeaker 44 described below.

An internal configuration of the game apparatus 10 is described next with reference to FIG. 4. FIG. 4 is a block diagram showing one example of the internal configuration of the game apparatus 10.

In FIG. 4, the game apparatus 10 includes, in addition to the components described above, electronic components such as an information processing section 31, a main memory 32, an external memory interface (external memory I/F) 33, an external data storage memory I/F 34, an internal data storage memory 35, a wireless communication module 36, a local communication module 37, a real-time clock (RTC) 38, an acceleration sensor 39, an angular velocity sensor 40, a power supply circuit 41, an interface circuit (I/F circuit) 42, and the like. These electronic components are mounted on an electronic circuit substrate, and accommodated in the lower housing 11 (or the upper housing 21).

The information processing section 31 is information processing means which includes a CPU (Central Processing Unit) 311 for executing a predetermined program, a GPU (Graphics Processing Unit) 312 for performing image processing, and the like. In the present embodiment, a predetermined program is stored in a memory (for example, the external memory 45 connected to the external memory I/F 33 or the internal data storage memory 35) inside the game apparatus 10. The CPU 311 of the information processing section 31 executes image processing and game processes described below, by executing the predetermined program. The program executed by the CPU 311 of the information processing section 31 may be acquired from another device through communication with the other device. Furthermore, the information processing section 31 includes a VRAM (Video RAM) 313. The GPU 312 of the information processing section 31 generates an image in accordance with an instruction from the CPU 311 of the information processing section 31, and renders the image in the VRAM 313. The GPU 312 of the information processing section 31 outputs the image rendered in the VRAM 313, to the upper LCD 22 and/or the lower LCD 12, and the image is displayed on the upper LCD 22 and/or the lower LCD 12.

To the information processing section 31, the main memory 32, the external memory I/F 33, the external data storage memory I/F 34, and the internal data storage memory 35 are connected. The external memory I/F 33 is an interface for detachably connecting to the external memory 45. The external data storage memory I/F 34 is an interface for detachably connecting to the external data storage memory 46.

The main memory 32 is volatile storage means used as a work area and a buffer area for the information processing section 31 (the CPU 311). That is, the main memory 32 temporarily stores various types of data used for image processing or game processing, and temporarily stores a program acquired from the outside (the external memory 45, another device, or the like), for example. In the present embodiment, for example, a PSRAM (Pseudo-SRAM) is used as the main memory 32.

The external memory 45 is non-volatile storage means for storing a program executed by the information processing section 31. The external memory 45 is implemented as, for example, a read-only semiconductor memory. When the external memory 45 is connected to the external memory I/F 33, the information processing section 31 can load a program stored in the external memory 45. A predetermined process is performed by the program loaded by the information processing section 31 being executed. The external data storage memory 46 is implemented as a non-volatile readable and writable memory (for example, a NAND flash memory), and is used for storing predetermined data. For example, images taken by the outer imaging section 23 and/or images taken by another device are stored in the external data storage memory 46. When the external data storage memory 46 is connected to the external data storage memory I/F 34, the information processing section 31 loads an image stored in the external data storage memory 46, and the image can be displayed on the upper LCD 22 and/or the lower LCD 12.

The internal data storage memory 35 is implemented as a non-volatile readable and writable memory (for example, a NAND flash memory), and is used for storing predetermined data. For example, data and/or programs downloaded by wireless communication through the wireless communication module 36 are stored in the internal data storage memory 35.

The wireless communication module 36 has a function of connecting to a wireless LAN by using a method conforming to, for example, IEEE 802.11b/g standard. The local communication module 37 has a function of performing wireless communication with the same type of game apparatus in a predetermined communication method (for example, infrared communication). The wireless communication module 36 and the local communication module 37 are connected to the information processing section 31. The information processing section 31 can perform data transmission to and data reception from another device via the Internet by using the wireless communication module 36, and can perform data transmission to and data reception from the same type of another game apparatus by using the local communication module 37.

The acceleration sensor 39 is connected to the information processing section 31. The acceleration sensor 39 detects magnitudes of accelerations (linear accelerations) in the directions of the straight lines along the three axial directions (xyz axial directions in the present embodiment). The acceleration sensor 39 is provided, for example, inside the lower housing 11. In the acceleration sensor 39, as shown in FIG. 1, the long side direction of the lower housing 11 is defined as x axial direction, the short side direction of the lower housing 11 is defined as y axial direction, and the direction orthogonal to the inner side surface (main surface) of the lower housing 11 is defined as z axial direction, thereby detecting the magnitude of the linear acceleration in each axial direction of the game apparatus 10. The acceleration sensor 39 is, for example, an electrostatic capacitance type acceleration sensor. However, another type of acceleration sensor may be used. The acceleration sensor 39 may be an acceleration sensor for detecting a magnitude of acceleration for one axial direction or two-axial directions. The information processing section 31 can receive data (acceleration data) representing accelerations detected by the acceleration sensor 39, and calculate an orientation and a motion of the game apparatus 10.

The angular velocity sensor 40 is connected to the information processing section 31. The angular velocity sensor 40 detects angular velocities about three axes (X-axis, Y-axis, and Z-axis in the present embodiment) of the game apparatus 10, and outputs data (angular velocity data) indicative of the detected angular velocities, to the information processing section 31. The angular velocity sensor 40 is provided, for example, inside the lower housing 11. The information processing section 31 receives the angular velocity data outputted from the angular velocity sensor 40, and calculates an orientation and a motion of the game apparatus 10.

The RTC 38 and the power supply circuit 41 are connected to the information processing section 31. The RTC 38 counts time, and outputs the time to the information processing section 31. The information processing section 31 calculates a current time (date) based on the time counted by the RTC 38. The power supply circuit 41 controls power from the power supply (the rechargeable battery accommodated in the lower housing 11 as described above) of the game apparatus 10, and supplies power to each component of the game apparatus 10.

The I/F circuit 42 is connected to the information processing section 31. A microphone 43, the loudspeaker 44, and the touch panel 13 are connected to the I/F circuit 42. Specifically, the loudspeaker 44 is connected to the I/F circuit 42 through an amplifier which is not shown. The microphone 43 detects a voice from the user, and outputs a sound signal to the I/F circuit 42. The amplifier amplifies a sound signal outputted from the I/F circuit 42, and a sound is outputted from the loudspeaker 44. The I/F circuit 42 includes a sound control circuit for controlling the microphone 43 and the loudspeaker 44 (amplifier), and a touch panel control circuit for controlling the touch panel 13. The sound control circuit performs A/D conversion and D/A conversion on the sound signal, and converts the sound signal to a predetermined form of sound data, for example. The touch panel control circuit generates a predetermined form of touch position data based on a signal outputted from the touch panel 13, and outputs the touch position data to the information processing section 31. The touch position data represents a coordinate of a position (touch position), on an input surface of the touch panel 13, on which an input is made. The touch panel control circuit reads a signal outputted from the touch panel 13, and generates the touch position data once every predetermined time. The information processing section 31 acquires the touch position data, to recognize a touch position on which an input is made on the touch panel 13.

An operation button 14 includes the operation buttons 14A to 14L described above, and is connected to the information processing section 31. Operation data representing an input state of each of the operation buttons 14A to 14I is outputted from the operation button 14 to the information processing section 31, and the input state indicates whether or not each of the operation buttons 14A to 14I has been pressed. The information processing section 31 acquires the operation data from the operation button 14 to perform a process in accordance with the input on the operation button 14.

The lower LCD 12 and the upper LCD 22 are connected to the information processing section 31. The lower LCD 12 and the upper LCD 22 display images in accordance with instructions from the information processing section 31 (the GPU 312). In the present embodiment, the information processing section 31 causes the lower LCD 12 to display a thumbnail of an image acquired from either the outer imaging section 23 or the inner imaging section 24. Furthermore, in the present embodiment, the information processing section 31 causes the upper LCD 22 to display an image acquired from either the outer imaging section 23 or the inner imaging section 24. Thus, the information processing section 31: causes the upper LCD 22 to display a stereoscopic image (stereoscopically visible image) using an image for the right eye and an image for the left eye which are taken by the outer imaging section 23; causes the upper LCD 22 to display a planar image taken by the inner imaging section 24; and causes the upper LCD 22 to display a planar image using either one of an image for the right eye or an image for the left eye which are taken by the outer imaging section 23.

Specifically, the information processing section 31 is connected to an LCD controller (not shown) of the upper LCD 22, and causes the LCD controller to set the parallax barrier to ON or OFF. When the parallax barrier is set to ON in the upper LCD 22, an image for a right eye and an image for a left eye which are stored in the VRAM 313 of the information processing section 31 (which are taken by the outer imaging section 23) are outputted to the upper LCD 22. More specifically, the LCD controller alternately repeats reading of pixel data of the image for a right eye for one line in the vertical direction, and reading of pixel data of the image for a left eye for one line in the vertical direction, thereby reading, from the VRAM 313, the image for a right eye and the image for a left eye. Thus, the image for the right eye and the image for the left eye are divided into thin-strip images which are each a line of vertically aligned pixels, and the divided thin-strip images obtained from the image for the right eye and the divided thin-strip images obtained from the image for the left eye are alternately arranged to create an image which is then displayed on the screen of the upper LCD 22. When the user views the image through the parallax barrier in the upper LCD 22, the image for the right eye is viewed by the user's right eye, and the image for the left eye is viewed by the user's left eye. As a result, a stereoscopically visible image is displayed on the screen of the upper LCD 22.

The outer imaging section 23 and the inner imaging section 24 are connected to the information processing section 31. The outer imaging section 23 and the inner imaging section 24 take images in accordance with instructions from the information processing section 31, and output image data of the taken images to the information processing section 31. In the present embodiment, the information processing section 31 instructs either the outer imaging section 23 or the inner imaging section 24 to take an image, and an imaging section that received the instruction takes an image and sends image data of the taken image to the information processing section 31. Specifically, the imaging section to be used is selected by a user's operation using the touch panel 13 and the operation button 14. Then, the information processing section 31 (the CPU 311) detects that an imaging section is selected, and the information processing section 31 instructs the outer imaging section 23 or the inner imaging section 24 to take an image.

The 3D adjusting switch 25 is connected to the information processing section 31. The 3D adjusting switch 25 transmits, to the information processing section 31, an electrical signal in accordance with the position of the slider.

The 3D indicator 26 is connected to the information processing section 31. The information processing section 31 controls whether or not the 3D indicator 26 is to be lit up. For example, the information processing section 31 lights up the 3D indicator 26 when the upper LCD 22 is in the stereoscopic display mode.

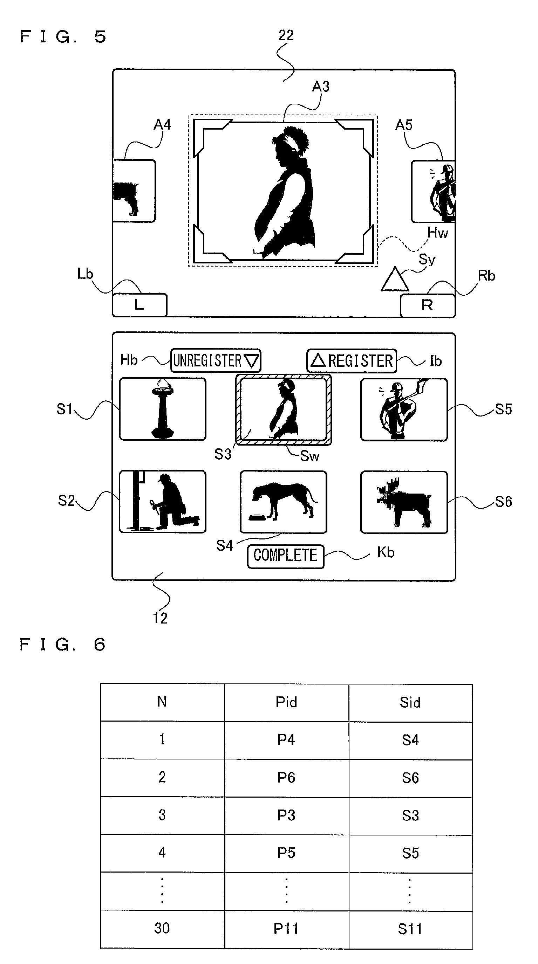

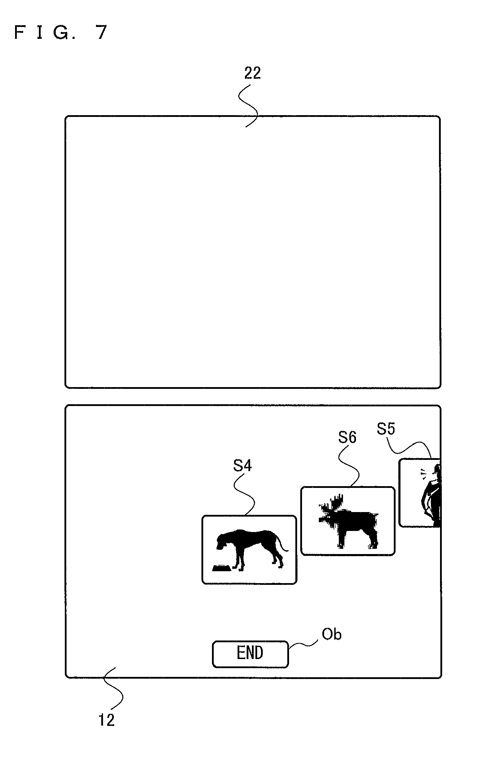

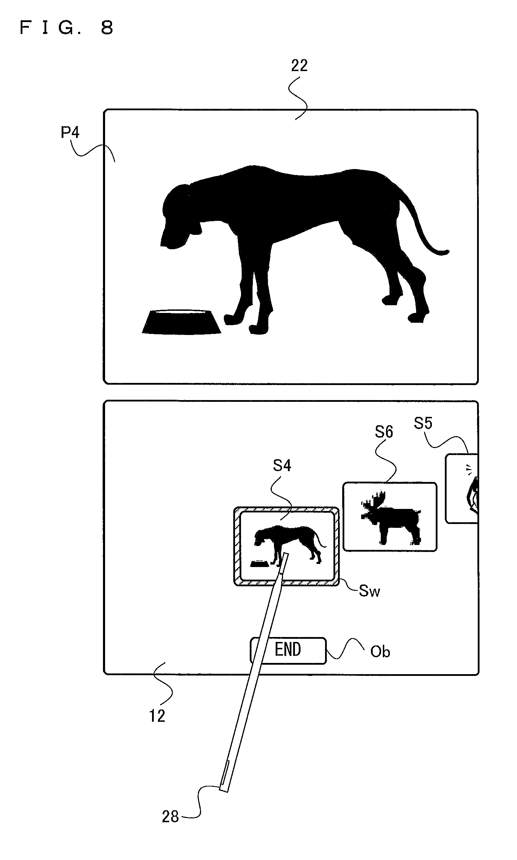

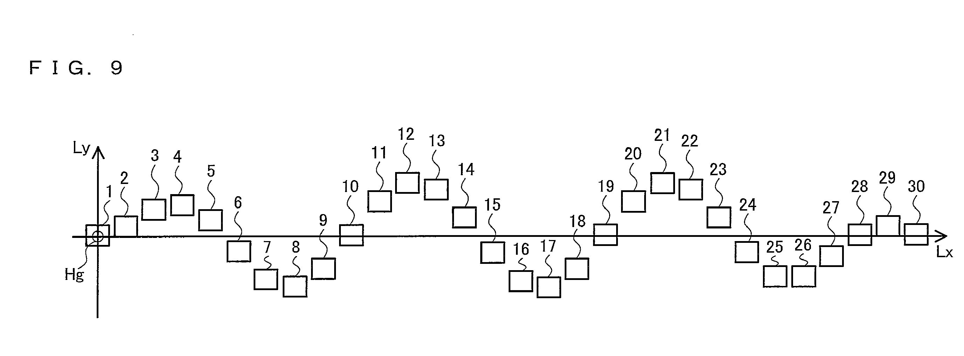

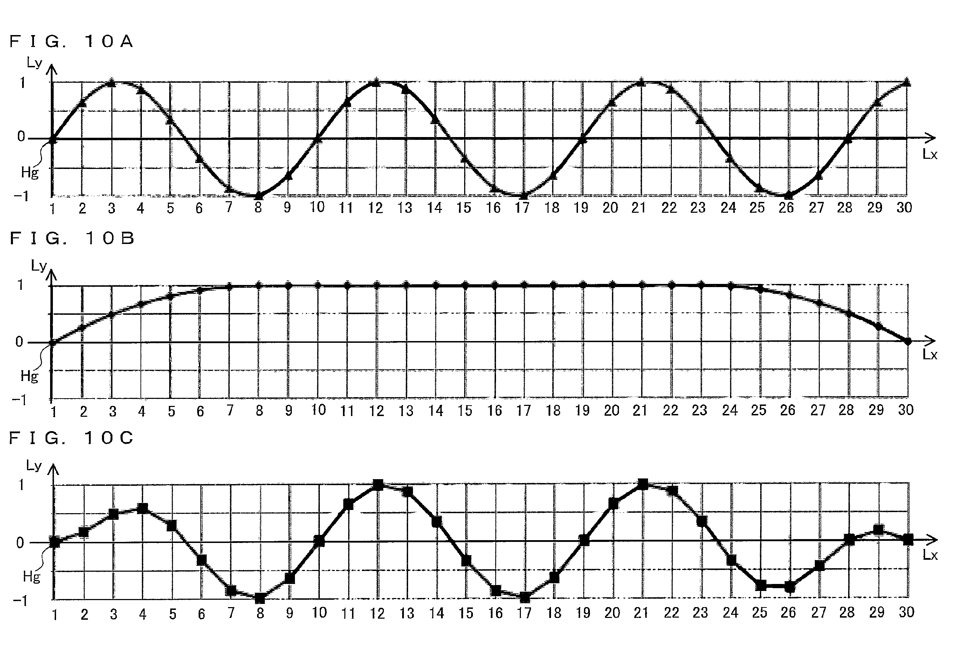

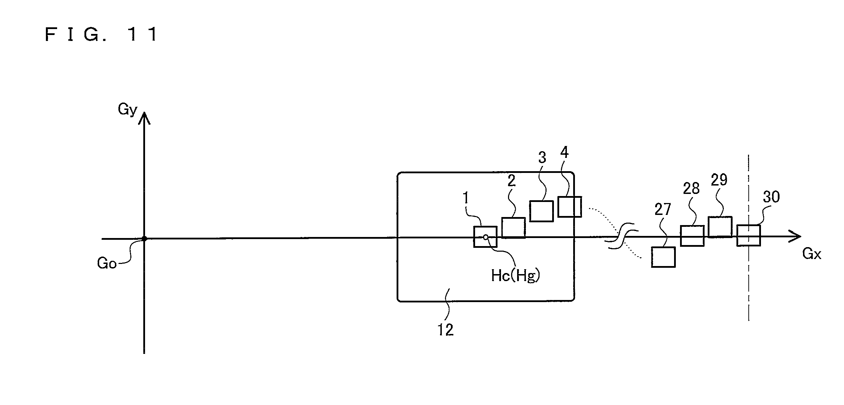

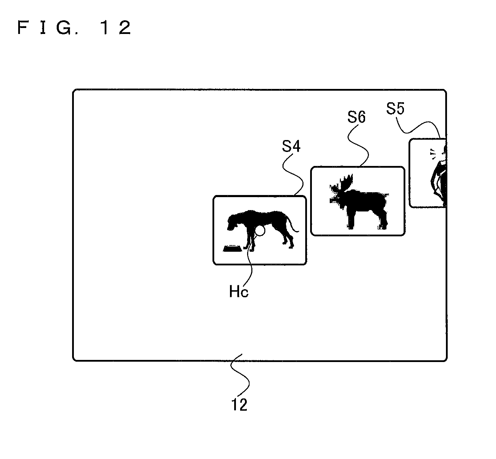

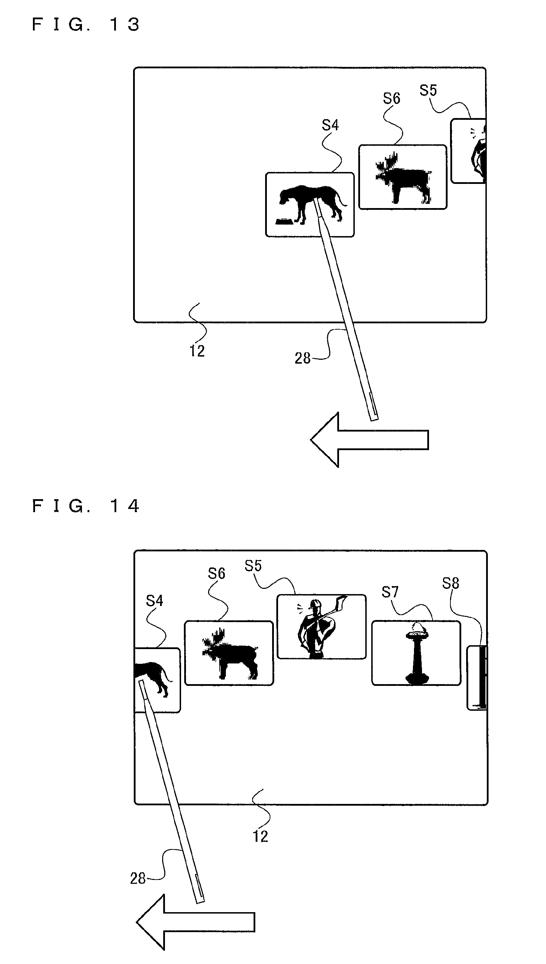

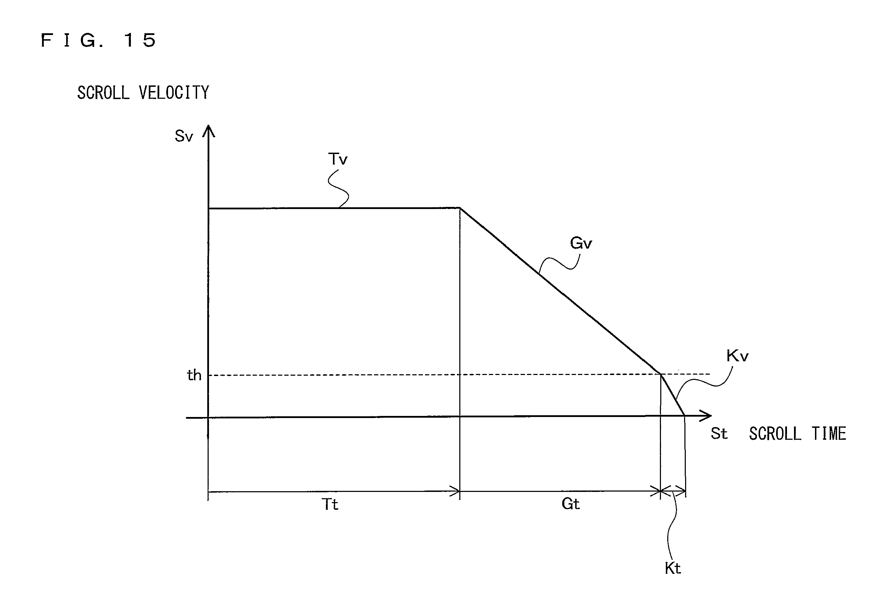

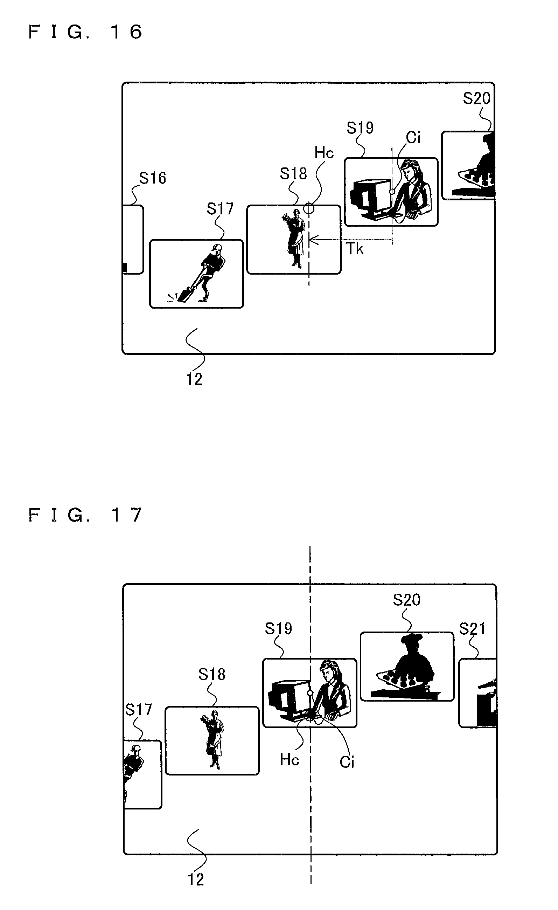

Before describing the specific display control actions performed by the display control program executed by the game apparatus 10, methods for arranging thumbnails, and for scrolling and displaying thumbnails in the present invention are described next with reference to FIG. 5 to FIG. 17. FIG. 5 shows examples of screens displayed when executing an album creation process, for selecting a to-be-registered image from among camera images CI which are taken by a real camera built-in the game apparatus 10 and which are stored in the external data storage memory 46, and for creating an album. In addition, FIG. 6 shows one example of album data Db generated in the album creation process. Furthermore, FIG. 7 shows examples of initial screens displayed at the beginning of an album display process executed when browsing an album created in the album creation process. Further, FIG. 8 shows an example of screens displayed on the upper LCD 22 and the lower LCD 12 when a thumbnail is selected in the album display process. FIG. 9 shows one example of thumbnail arrangement positions in a thumbnail arrangement process. FIG. 10A to FIG. 10C are diagrams for describing a method for calculating a thumbnail arrangement position in the thumbnail arrangement process. FIG. 11 is a diagram for describing one example of an initial position determined based on a calculated thumbnail arrangement position. FIG. 12 shows one example of an initial screen of the lower LCD 12 in the album display process. FIG. 13 and FIG. 14 show examples of display screens representing a follow-scrolling in a scroll display process for scrolling a thumbnail in the album display process. FIG. 15 shows an example of the relationship between scroll time St and scroll velocity Sv in the scroll display process. FIG. 16 to FIG. 17 are diagrams for describing processes involved in a stop-scrolling in the scroll display process. It should be noted that, in the description of the present embodiment, in order to simplify the description, an example is used in which a real world planar image (a planar visible image which is in contrast to a stereoscopically visible image as described above) based on the camera images CI acquired by either the outer imaging section 23 or the inner imaging section 24 is displayed.

In the present embodiment, in one example, an image acquired from either the outer imaging section 23 or the inner imaging section 24 is referred to as a camera image CI. The camera image CI acquired from either the outer imaging section 23 or the inner imaging section 24 is stored in the external data storage memory 46. Additionally in the present embodiment, in one example, when the camera image CI is acquired, image data of a thumbnail representing the image is generated. When the camera image CI is stored in the external data storage memory 46, the generated image data of the thumbnail is also stored in the external data storage memory 46 so as to correspond to the camera image CI. A camera image identifier Pid for identifying a camera image CI stored in the external data storage memory 46 is provided to each of camera images CI. In addition, a thumbnail identifier Sid for identifying a thumbnail stored in the external data storage memory 46 is provided to each of the thumbnails.

Any of the camera images CI stored together with the thumbnails in the external data storage memory 46 can be registered to an album to be browsed on an album-to-album basis. In the present embodiment, as one example, a process of registering a camera image CI to an album is executed as the album creation process. Furthermore, in the present embodiment, as one example, a process of browsing the camera image CI registered in the album is executed as the album display process. First, the album creation process is described below.

In FIG. 5, album creation screens for selecting a camera image CI from the camera images CI stored in the external data storage memory 46 and for registering the selected camera image(s) CI in an album is displayed on the upper LCD 22 and the lower LCD 12. The album creation screens are displayed on the upper LCD 22 and the lower LCD 12 when the album creation process is initiated. When the album creation process is initiated, a "register" button icon Ib for registering a camera image CI to an album, an "unregister" button icon Hb for cancelling the registration to the album, and a "complete" button icon Kb for ending the album creation process are displayed on the lower LCD 12. In addition, when the album creation process is initiated, displayed on the upper LCD 22 include: a frame image Hw indicating an album image which has been selected as a target for processing among the camera images CI registered in the album; an arrow image Sy showing a position in accordance with an order to which an image is to be registered in the album; and an R button ICON Rb and an L button ICON Lb which respectively show that operational inputs using the R button 14H and the L button 14G can be received.

Furthermore, when the album creation screens are being displayed, image data representing thumbnails corresponding to respective camera images CI are read from the external data storage memory 46, and the thumbnails are also arranged and displayed on the lower LCD 12. In the album creation screens shown in FIG. 5, as one example, six thumbnails S1 to S6 are arranged and displayed on the lower LCD 12.

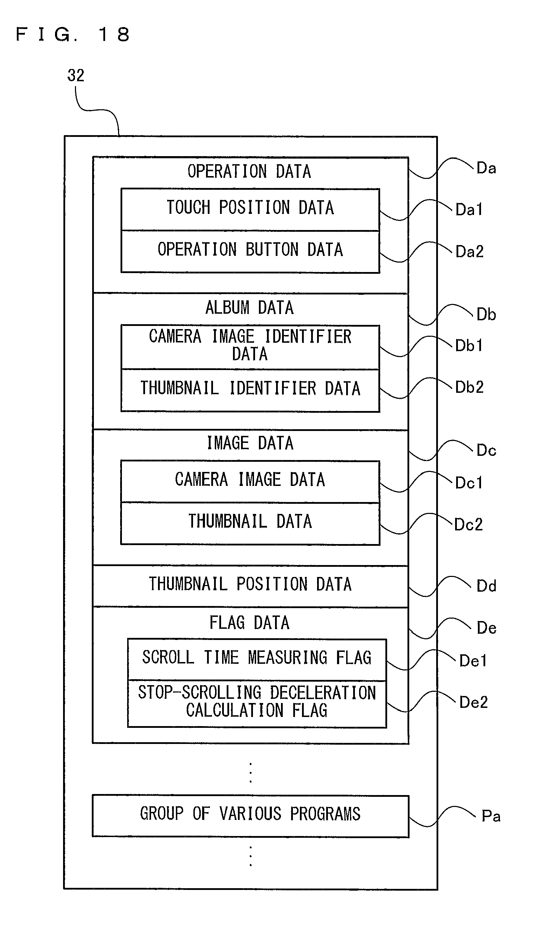

In the present embodiment, as one example, when the album creation screens are displayed, album data (album data Db shown in FIG. 18) for managing camera images CI registered on an album is generated on the main memory 32. There are no camera images CI registered on an album when an album has not been created, therefore, the album data at this time is data that does not include information representing a camera image CI. Described in the present embodiment is one example in which the maximum number of camera images CI that can be registered on a single piece of album data is 30.

The user can register any camera image CI to an album when the album creation screens are displayed. In one example, when registering a camera image CI to an album, the user performs, through the touch panel 13, a touch operation on a thumbnail of a camera image CI that is to be registered. When the user performs the touch operation on a thumbnail, the touched thumbnail is selected, and a selection frame image Sw highlighting the edges of the selected thumbnail is displayed, as shown in FIG. 5 as one example.

If the user performs a touch operation on the "register" button icon Ib when a thumbnail of a camera image CI that is to be registered to an album is selected, a camera image CI represented by the selected thumbnail is registered on an album.

When a camera image CI is registered on an album, for example, a camera image identifier Pid of the registered camera image CI and a thumbnail identifier Sid of the thumbnail representing the camera image CI are registered on the album data. When the camera image identifier Pid and the thumbnail identifier Sid are registered on the album data, basically, a number N indicating a registration order is provided. Detailed description of a case where a number N does not indicate a registration order will be provided later.

Furthermore, when a camera image CI is registered on an album, the register camera image CI is displayed, for example, in the center of the upper LCD 22 as an album image. FIG. 5 shows one example where a camera image CI represented by a selected thumbnail S3 is displayed in the center of the upper LCD 22 as an album image A3. In one example, album images displayed on the upper LCD 22 in the album creation screens are arranged and displayed on the upper LCD 22 so as to be horizontally aligned from the left to the right in the order indicated by each number N of the camera images CI registered on the album. When either the R button 14H or the L button 14G is held down, the album images arranged and displayed on the upper LCD 22 are slidable in a direction in accordance with the button that has been held down. Therefore, a predetermined number of camera images CI among the camera images CI registered in the album may be arranged and displayed on the upper LCD 22 as album images. In FIG. 5, as one example, three album images are arranged on the upper LCD 22 in the horizontal direction in accordance with the number N representing the order of the camera images CI registered on the album; and an album image arranged in the center of the upper LCD 22 is enlarged so as to be displayed larger than other album images.

Typically, in the album creation screens of the present embodiment, a camera image CI can be registered to an album, and also can be selected from among the register camera images CI as a deletion target which is to be deleted from the album. In the album creation screens, the frame image Hw, which indicates an album image (e.g., an image arranged in the vicinity of the center of the upper LCD 22) which has be selected as a target for processing, is displayed so as to surround an album image that has been selected as a target for processing at the present time. In addition, the album images arranged and displayed on the upper LCD 22 are configured to be slidable, as described above. When the user performs a slide operation by holding down the R button 14H or the L button 14G, the album image that has been selected as a target for processing is switched, and an album image that has been selected as a target for processing at the present time is surrounded by the frame image Hw and displayed. Then, when the user performs a touch operation on the "unregister" button icon Hb, a camera image CI corresponding to the album image which is the target for processing and which is surrounded by the frame image Hw is deleted from the album. When a camera image CI is deleted from the album, the thumbnail of the deleted camera image CI is also deleted from the album. Furthermore, when a camera image CI is deleted from the album, the camera image identifier Pid of the deleted camera image CI and the thumbnail identifier Sid of the thumbnail of the camera image CI are deleted from the album data.

When a camera image CI is deleted from an album, a number N indicating the order of the thumbnails and camera images CI registered on the album is corrected so as to be consecutive numbers. When a camera image CI is deleted from an album, the order, represented by a number N, of each of the camera image identifiers Pid and thumbnail identifiers Sid is sequentially moved up for those that are later in the order than a camera image identifier Pid of a camera image CI and a thumbnail identifier Sid of a thumbnail deleted from the album data. By using FIG. 6, a specific case is described next in which a camera image CI having a number N of 3 is deleted. First, a camera image identifier P3 and a thumbnail identifier S3 having a number N of 3 is deleted from the album data. Then, the order of a camera image identifier P5 and a thumbnail identifier S5 registered as having a number N of 4 is moved up by one, and the number N thereof is corrected to 3. Similar to this correction of moving the order up, the order of each of the camera image identifiers Pid and the thumbnail identifiers Sid registered as having a number N of 5 to 30 is moved up by 1, and each number N of those are corrected to be 4 to 29.

Furthermore, in the album creation screens of the present embodiment, typically, a new camera image CI can also be inserted between camera images CI that are already registered and placed in the order represented by the number N. As described above, the album images are horizontally arranged and displayed on the upper LCD 22 from the left to the right in accordance with the order represented by the number N of corresponding camera images CI registered in the album. Furthermore, as described above, the album images arranged and displayed on the upper LCD 22 are configured so as to be slidable. In addition, as shown in FIG. 5 as one example, the arrow image Sy is statically displayed on a position indicating a gap in the horizontal direction with respect to the album images which are arranged and displayed in a slidable manner on the upper LCD 22. Thus, the arrow image Sy displays a position indicating the order to which a camera image CI is inserted and registered in an album with camera images CI that are already registered with the order represented by the number N.

When the user performs a slide operation by holding down the R button 14H or the L button 14G, the position indicated by the arrow image Sy which is statically displayed the upper LCD 22, i.e., the position indicating an order to which an camera image CI will be inserted and registered in the album, is switched and displayed. Then, if the user selects a thumbnail of a camera image CI that is intended to be inserted and registered in the album when the arrow image Sy is indicating a position to which the user wishes the camera image CI to be registered through insertion, and performs a touch operation on the "register" button icon Ib; the camera image CI represented by the selected thumbnail will be inserted and registered in the album, at a number N indicating an order that depends of the position indicated by the arrow image Sy. When the camera image CI is inserted and registered in the album, the thumbnail of the camera image CI which has been registered through insertion is also registered through insertion. When the camera image CI is inserted and registered in the album, the camera image identifier Pid of the inserted and registered camera image CI and the thumbnail identifier Sid of the thumbnail of the camera image CI are given a number N indicating an order and are inserted and registered in the album data.

When a camera image CI is inserted and registered in an album, the number N indicating the order of the camera images CI and the thumbnails, which are registered in the album, is corrected such that the number N will not overlap with each other and will be consecutive numbers. When a camera image CI is inserted and registered in an album, and when the camera image identifier Pid of the camera image CI and the thumbnail identifier Sid of the thumbnail are inserted and registered in the album data with a number N; the order of a camera image identifier Pid and a thumbnail identifier Sid that have been already registered with this number N, and the order of camera image identifiers Pid and thumbnail identifiers Sid following this number N are all sequentially moved down. Described next by using FIG. 6 is a specific case in which a camera image CI is registered through insertion as a camera image CI with a number N of 3. First, camera image identifiers P3 to P11 and thumbnail identifiers S3 to S 11, which have been already registered with number N of 3 and larger, are moved down so as have corrected number N of 4 to 31. Then, a camera image identifier Pid of a camera image CI and a thumbnail identifier Sid of a thumbnail are registered with a number N of 3.

Although a number N indicating a registration order is given to a camera image identifier Pid and a thumbnail identifier Sid when they are registered to the album data; it has been described above that a number N may not indicate a registration order. The case in which a number N does not indicate a registration order will be described below.

In the case where a number N in the album data does not indicate an order in which a camera image CI is registered to an album, there will be instances where the number N is corrected due to the camera image CI being deleted from the album or registered in the album through insertion, as it may be obvious from the description described above. In other words, when the user registers, deletes, or inserts and registers a camera image CI in an album, the user can register a camera image CI in an album such that the number N indicates an arbitrary order.

As it will be obvious from the later descriptions, in the present embodiment, as one example, when determining the arrangement of the thumbnails displayed on the lower LCD 12 in the album display process, the arrangement positions of the thumbnails of the camera images CI registered in the album are determined such that the thumbnails are aligned in the order indicated by the number N from the left to the right. The arranged thumbnails can be scrolled by the user when they are displayed on the lower LCD 12. In the album display process, the user can display and select a desired thumbnail on the lower LCD 12 by scrolling the thumbnails. In the album display process, when the user selects a thumbnail, a camera image CI represented by the selected thumbnail is displayed on the upper LCD 22 so as to be browsable by the user.

Therefore, the user can arrange, in a desired order, the thumbnails which are to be scrolled and selected in the album display process, by registering camera images CI to the album such that number N is set in an arbitrary order in the album creation process.

In the album creation process, after the user finishes registering the camera images CI in the album such that the number N is in an arbitrary order, the user can end the album creation process by performing a touch operation on the "complete" button icon Kb on the lower LCD 12. When the album creation process is ended, the generated album data is transferred from the main memory 32 to the external data storage memory 46 to be stored.

The album data which has been generated and transferred as described above is read-out from the external data storage memory 46 by having the album display process executed. In the album display process, any camera image CI registered in the album data can be browsed. One example of the album display process according to the present embodiment is described in the following.

FIG. 7 shows one example of a screen displayed when the album display process for browsing a camera image CI registered in the album is executed. When the album display process is initiated, the album data generated at the album creation process is loaded from the external data storage memory 46 to the main memory 32. In FIG. 7, one portion of the thumbnails registered in the loaded album data is displayed on the lower LCD 12. Also in FIG. 7, an "end" button icon Ob to stop browsing the album and to end the album display process is displayed on the lower LCD 12.

In the album display process of the present embodiment, as one example, displayed on the upper LCD 22 is a camera image CI represented by a thumbnail on which a touch operation is performed by the user on the lower LCD 12. In FIG. 8, displayed on the lower LCD 12 is the selection frame image Sw that highlights the edge of the thumbnail selected by the user through the touch operation. Furthermore, in FIG. 8, the camera image CI represented by the thumbnail which has been selected by the user is displayed on the whole display screen on the upper LCD 22. In the present embodiment, the user can scroll the thumbnail on the lower LCD 12 by executing the scroll display process, which is described in detail later. In the present embodiment, the user can display and browse, on the upper LCD 22, any camera image CI registered in the album by scrolling and selecting a thumbnail.

In the present embodiment, when the thumbnails registered in the album are displayed on the lower LCD 12 in the album display process, the thumbnails are displayed after the arrangement positions of the thumbnails are obtained in the thumbnail arrangement process. In the present embodiment, as one example, the album data stored on the external data storage memory 46 is read-out when the album display process is initiated. When the album data is read-out in the album display process to be loaded, each of the arrangement positions for displaying, on the lower LCD 12, the thumbnail represented by thumbnail identifier Sid registered in the loaded album data is determined. In the following, the thumbnail arrangement process for determining each of the thumbnail arrangement positions will be described with reference to FIG. 9 to FIG. 11.

In the thumbnail arrangement process of the present embodiment, as shown in FIG. 9 as one example, a virtual Lx Ly coordinate system including an Lx-axis parallel to the horizontal direction of the lower LCD 12 and an Ly-axis parallel to the vertical direction of the lower LCD 12 is created, and an arrangement position of a thumbnail in the coordinate system is determined by using coordinates of the thumbnail in the Lx axial direction and the Ly axial direction. Each of the thumbnails whose arrangement position is determined in the Lx Ly coordinate system is a thumbnail represented by a thumbnail identifier Sid that is registered in the album data read-out from the external data storage memory 46 when the album display process is initiated, as described above.

Shown in FIG. 9 as one example are respective arrangement positions in the Lx Ly coordinate system of thumbnails represented by thumbnail identifiers Sid from 1 to 30 of the order represented by the number N registered in the album data. In the thumbnail arrangement process of the present embodiment, the coordinates in the Lx axial direction for the arrangement positions of the each of the thumbnails are determined such that the thumbnails have equal intervals therebetween, as shown in FIG. 9 as one example. Furthermore, in the present embodiment, as one example, the coordinates in the Lx axial direction for the arrangement positions of each of the thumbnails are determined such that the thumbnails are aligned in the order indicated by the number N registered in the album data from left to right. Furthermore, in the present embodiment, the coordinates in the Ly axial direction for the arrangement positions of the each of the thumbnails are determined such that, when each of the thumbnails are arranged in the Lx Ly coordinate system as a line (hereinafter, referred to as a thumbnail line) as shown in FIG. 9 as one example, the line is in a waveform when the line is viewed in a perpendicular direction from above with respect to the Lx Ly coordinate system.

A method for determining an arrangement position of a thumbnail in the thumbnail arrangement process will be specifically described next. When determining the arrangement positions of each of the thumbnails, a basic position of each of the thumbnails in the Lx Ly coordinate system is obtained as a basic position Ki. The basic position Ki of each of the thumbnails is multiplied by a rate R obtained for every thumbnail. Coordinates obtained by multiplying the rate R to the basic position Ki is used as an arrangement position of a thumbnail. In the present embodiment, as one example, a calculation to obtain an arrangement position by obtaining a basic position Ki of a thumbnail and by multiplying a rate R thereto, is executed for every thumbnail in the order indicated by the number N.

An example of the basic position Ki in the present embodiment is described next.

FIG. 10A shows examples the basic positions Ki of each of the thumbnails in the present embodiment. In FIG. 10A, the numbers 1 to 30 provided in the Lx axial direction correspond to numbers N indicating the order of respective thumbnails registered in the album data.

As described above, in the present embodiment, as one example, the coordinates in the Lx axial direction for the arrangement positions of each of the thumbnails are determined such that the thumbnails are aligned having equal intervals therebetween in the order indicated by the number N registered in the album data from left to right. Therefore, the coordinates in the Lx axial direction for the basic positions Ki of respective thumbnails are determined such that the thumbnails have equal intervals therebetween, in a positive direction of the Lx-axis in the Lx Ly coordinate system from a point of origin Hg in the order indicated by the number N.

Furthermore, as described above, in the present embodiment, as one example, the coordinates in the Ly axial direction for the arrangement positions of the each of the thumbnails are determined such that, when the respective thumbnails are arranged in the Lx Ly coordinate system as the thumbnail line, the thumbnail line is in a waveform when the line is viewed in a perpendicular direction from above with respect to the Lx Ly coordinate system. Specifically, the coordinate in the Ly axial direction for the basic position Ki of each of the thumbnails is obtained through a calculation shown by the following formula (1).

$$Ly = \sin\left(\frac{2(N-1)\pi}{c1}\right) \quad \cdots \quad (1)$$

As shown in formula (1) as one example, in order to obtain the coordinates in the Ly axial direction for the basic positions Ki of respective thumbnails determined so as to have waveform arrangement positions, a sinusoidal function is used, as one example. In the above described formula (1), cl represents the number of thumbnails included in one cycle of a sinusoidal wave form represented by the above described sinusoidal function. In the present embodiment, as one example, cl = 9 is used. FIG. 10A shows a calculation result obtained when cl = 9 is used. Furthermore, N in the above described formula (1) is the number N indicating the order of the thumbnails in the album data. When a number N is assigned to the above described formula (1) and when a calculation is performed, the coordinate in the Ly axial direction for a basic position Ki of a thumbnail at an order indicated by the assigned number N is obtained.

Next, an example of the rate R in the present embodiment will be described. In the present embodiment, as one example, a rate R is obtained for every thumbnail, and multiplied to a coordinate in the Ly axial direction for a basic position Ki.

FIG. 10B shows one example of a plot of the rates R which are for all the thumbnails in the Lx Ly coordinate system and which are multiplied to the coordinates in the Ly axial direction for the basic positions Ki. In FIG. 10B, the numbers 1 to 30 provided in the Lx axial direction correspond to numbers N indicating the registration order in the album data. In the following, for convenience of description, the coordinates in the Lx axial direction for the arrangement positions of the thumbnails having numbers N of 1 and 30 are referred to as being at ends, with respect to the coordinates in the Lx axial direction for the arrangement positions of the thumbnails having numbers N of 15 and 16. In addition, in the thumbnails arranged as shown in FIG. 9 as one example, the coordinates in the Lx axial direction for the arrangement positions of the thumbnails having numbers N of 15 and 16 are referred to as being at the center, with respect to the coordinates in the Lx axial direction for the arrangement positions of the thumbnails at the ends.

As it may be obvious from FIG. 10B, in the present embodiment, as one example, a rate R of 1 is given to the thumbnails excluding seven thumbnails arranged in a line from each of the ends toward the center. Specifically, each of the thumbnails having numbers N of 8 to 23 is given a rate R of 1. Therefore, in the present embodiment, as one example, rates R of the seven thumbnails arranged in a line from each of the ends toward the center are calculated. Specifically, rates R are calculated for thumbnails having numbers N of 1 to 7 and 24 to 30 registered in the album data. The rates R shown in FIG 10B are on a curve obtained through multiplication using a start point rate Rs and an end point rate Re which are respectively obtained from the following formula (2) and formula (3). As it may be obvious from formula (2), among the portions of the curve shown in FIG. 10B, the start point rate Rs represents a portion of the curve in which the rate R gradually increases as the number N is increased from 1 to 7, and reaches 1 when the number N is equal to or larger than 8. On the other hand, as it may be obvious from formula (3), among the portions of the curve shown in FIG. 10B, the end point rate Re represents a portion of the curve in which the rate R gradual decreases as the number N is increased from 24 to 30, and reached 1 when the number N is equal to or larger than 23. Therefore, in the present embodiment, as one example, the start point rate Rs obtained from the calculation of formula (2) is used as the rate R for the thumbnails having numbers N of 1 to 7, and the end point rate Re obtained from the calculation of formula (3) is used as the rate R for the thumbnails having numbers N of 24 to 30.

$$\mathrm{Rs} = 1 - \left( \frac{S - (N-1)}{S} \right)^2 \quad \cdots \quad (2)$$

$$\mathrm{Re} = 1 - \left( \frac{(S - (N\max - N - 2))}{S} \right)^2 \quad \cdots \quad (3)$$

Here, S in formula (2) and formula (3) described above is a numerical value indicating the thumbnails whose coordinates in the Ly axial direction for basic positions Ki are to be changed. For example, when S = 7 is used, the coordinates in the Ly axial direction for the basic positions Ki of seven thumbnails arranged from each of the ends toward the center are changed. Here, to change the coordinate in the Ly axial direction for the basic position Ki, means to use a numerical value other than 1 as the rate R to multiply to the coordinate in the Ly axial direction for the basic position Ki, as described later. In the present embodiment, as one example, descriptions are provided by using S = 7. Therefore, in the description above, the start point rate Rs and the end point rate Re are used for the calculations for the rates R of the thumbnails having numbers N of 1 to 7 and 24 to 30. Furthermore, in the above described formula (3), Nmax is the maximum value of the number N in the album data, and in the present embodiment, Nmax = 30 is used as one example, as it may be obvious from the description above. When the numerical value S and Nmax are set in advance and when calculation is performed after assigning a number N to the above described formula (2) and formula (3), the rate R of the thumbnail at an order indicated by the assigned number N is obtained.

As described above, the coordinate in the Ly axial direction for the basic position Ki and the rate R are obtained for every thumbnail, and through multiplication of these, the coordinate in the Ly axial direction for the arrangement position is determined. FIG. 10C shows one example of arrangement positions of each of the determined thumbnails.

In the present embodiment, as shown in FIG. 10C as one example, through multiplication of the coordinate in the Ly axial direction for the basic position Ki and the rate R obtained for every thumbnail, a coordinate in the Ly axial direction for a peak in the thumbnail line is determined such that the coordinate in the Ly axial direction for the peak is changed to be closer to a coordinate in the Ly axial direction for an object at one of the ends (Ly coordinate = 0 in the example shown in FIG. 10C), as a coordinate in the Lx axial direction for the peak comes closer to a coordinate in the Lx axial direction for a thumbnail at one of the ends.

As described above, the arrangement position of each of the thumbnails is determined in the Lx Ly coordinate system, by using a coordinate in the Ly axial direction obtained by multiplying the coordinate in the Ly axial direction for the basic position Ki to the rate R, and by using coordinates in the Lx axial direction determined such that the intervals of the thumbnails are equal to each other. When the arrangement positions of the thumbnails are determined, initial positions in a global coordinate system are determined based on each of the determined thumbnail arrangement positions, and a content to be displayed on an initial screen of the lower LCD 12 in the album display process is determined based on the determined initial positions.

Before describing how the initial positions of each of the thumbnails are determined, an example of the global coordinate system in the present embodiment will be described. The global coordinate system is a coordinate system that is virtually defined for determining an image to be displayed on the lower LCD 12 from among the images represented by all the thumbnails. The center of an image representing a thumbnail is defined as a position of the thumbnail in the global coordinate system. In the present embodiment, as one example, based on a position of a thumbnail in the global coordinate system, the pixel of an image of a thumbnail included in the display area of the lower LCD 12 in the coordinate system is determined. In the present embodiment, as one example, the global coordinate system is defined such that coordinates in the horizontal direction and the vertical direction of the display area of the lower LCD 12 in the global coordinate system correspond to coordinates in the horizontal direction and the vertical directions of the display screen of the lower LCD 12. Thus, position coordinates of pixels of an image determined to be included in the display area of the lower LCD 12 can be transformed to position coordinates of the corresponding screen coordinate system of the lower LCD 12, by subtracting, from the position coordinates of the pixels, the difference between a point of origin Go of the global coordinate system and a point of origin O in the screen coordinate system of the lower LCD 12. As described above, by transforming position coordinates of the global coordinate system into position coordinates of the screen coordinate system of the lower LCD 12, from among all the thumbnails, pixels of an image of a thumbnail determined to be included in the display area of the lower LCD 12 in the global coordinate system can be displayed on the lower LCD 12.

Next, the manner how the initial positions of each of the thumbnails are determined will be described. When determining the initial positions of each of the thumbnails in the global coordinate system, first, a calculation to match the point of origin Hg of the Lx Ly coordinate system and the center position He of the display area of the lower LCD 12 is performed. Then, the initial positions of each of the thumbnails with respect to the point of origin Go in the global coordinate system are determined so as to maintain the relationship of the arrangement positions of each of the thumbnails to the point of origin Hg of the Lx Ly coordinate system. FIG. 11 shows one example of the initial positions of each of the thumbnails determined as described above and the display area of the lower LCD 12.

FIG. 12 shows one example of the initial screen of the lower LCD 12 in the album display process. In the one example shown in FIG. 12, images of thumbnails are displayed on the lower LCD 12 at positions that are based on the initial positions of each of the thumbnails determined as described above. As described above, since the point of origin Hg is the arrangement position of a thumbnail representing a camera image CI that has been the first to be registered on the album, the initial position of the thumbnail is at the center position He of the lower LCD 12 as shown in FIG. 12 as one example. Furthermore, other than the image of the thumbnail of the first camera image CI, images of thumbnails that are determined to be included in the display area are also displayed on the initial screen of the lower LCD 12 at respective determined initial positions. Specifically, in FIG. 12, images of thumbnails representing the second and third camera images CI that are determined to be included in the display area are also displayed on the initial screen of the lower LCD 12 at respective determined initial positions.

It should be noted that the relative positional relationship of the initial positions of each of the thumbnail included in the thumbnail line determined in the global coordinate system is also maintained when the thumbnails are scrolled, as described later. Furthermore, in the following description, positions of each of the thumbnails after being scrolled from respective initial positions are referred to as scroll positions.

When displaying the initial screen of the lower LCD 12 is completed in the album display process, it becomes possible to scroll the thumbnail line or to select a thumbnail and display a corresponding camera image CI on the upper LCD 22 in accordance with a user operation. In the following, an example of a process for scrolling the thumbnail line in the present embodiment is described. In the following description, among the touch operations by the user, a contact to the touch panel 13 such as a touch by the stylus pen 28 or a user's finger is referred to as a touch-on, and breaking of the contact from the touch panel 13 such as when the stylus pen 28 or the user's finger has been removed from the touch panel 13 is referred to as a touch-off.

In the present embodiment, as one example, the scrolling of the thumbnail line is achieved by the scroll display process which is initiated by a touch-on to the touch panel 13 by the user as being a trigger. Example of display modes resulting from the scroll display process of the present embodiment will be described with reference to FIG. 13 to FIG. 17.

In the present embodiment, as one example, the scroll display process is initiated when a touch-on is performed at a state in which the thumbnails are displayed on the lower LCD 12 as a result of the album display process. When the scroll display process is initiated, in the present embodiment, the thumbnails are horizontally scrolled so as to follow a slide operation by the stylus pen 28 or a finger until a touch-off is performed.

Specifically, after a touch-on is performed with the stylus pen 28 as shown in FIG. 13, when a slide operation including a horizontal direction component either to the left or right is performed by using the stylus pen 28, a follow-scrolling is executed to horizontally scroll the thumbnail line so as to follow a direction in accordance with a horizontal direction component either to the left or right included in the slide operation. When the follow-scrolling is executed, for example, if a slide operation including at least a leftward direction component is performed by using the stylus pen 28, coordinates (hereinafter, referred to as Gx coordinates) indicating horizontal direction positions of the scroll positions of each of the thumbnail in the global coordinates are sequentially subtracted in accordance with a change of a touch position coordinate due to the slide operation. On the other hand, if a slide operation including at least a rightward direction component is performed by using the stylus pen 28, the Gx coordinates of the scroll positions of each of the thumbnails are sequentially added in accordance with a change of the touch position coordinate due to the slide operation. After the calculation of sequentially subtracting or sequentially adding the Gx coordinates of the scroll positions of each of the thumbnails, the images of the thumbnails are actually displayed on the lower LCD 12 by the method described above based on the coordinates of the scroll positions of each of the thumbnails after the calculation, and thereby the follow-scrolling is achieved. In the manner described above, in the present embodiment, as one example, the follow-scrolling is achieved by a calculation to move the positions of each of the thumbnails relative to the display area of the lower LCD 12, which is fixed in the global coordinate system. The similar applies for a uniform-velocity scrolling, a deceleration-scrolling, and a stop-scrolling, which are described later.

Next, if a touch-off is performed while maintaining a slide velocity by the slide operation by using the stylus pen 28, i.e., a velocity in a direction parallel to a plane of the touch panel 13; in the present embodiment, as one example, the thumbnail line is scrolled at a uniform velocity in accordance with the direction of the slide operation for a period determined depending on the number of thumbnails included in the thumbnail line, and a scrolling to gradually decrease the scroll velocity and to stop the thumbnail line is performed.

FIG. 15 shows one example of the relationship between scroll time St and scroll velocity Sv from a start a uniform-velocity scrolling up to when the scrolling stops in the present embodiment. In FIG. 15, St represents scroll time, Tt represents a uniform-velocity scrolling period, Gt represents a deceleration-scrolling period, Kt represents a stop-scrolling period, Tv represents a uniform scroll velocity, Gv represents a deceleration-scrolling velocity, Kv represents a stop-scrolling velocity, and th represents a threshold value pre-determined for the scroll velocity Sv.

In the present embodiment, when the user performs a touch-off while maintaining the slide velocity generated when the slide operation is performed, as shown in FIG. 15 as one example, the thumbnail line is horizontally scrolled in a direction in accordance with the slide operation at the uniform scroll velocity Tv during the uniform-velocity scrolling period Tt. When starting the uniform-velocity scrolling of the thumbnail line, first, measurement of a scroll time St is initiated. As the measuring of the scroll time St starts, the deceleration-scrolling period Gt, the uniform scroll velocity Tv, and the uniform-velocity scrolling period Tt for the uniform-velocity scrolling are obtained.

The uniform-velocity scrolling period Tt can be obtained, in one example, by multiplying a predetermined constant to the number of thumbnails included in the thumbnail line. Therefore, the uniform-velocity scrolling period Tt is obtained as being proportional to the number of thumbnails included in the thumbnail line. In addition, the uniform scroll velocity Tv is obtained based on a slide amount of a touch position TP before the user performs a touch-off. In more detail, for example, touch positions in the horizontal direction within every predetermined time unit in a predetermined period immediately before the user performs a touch-off are used when calculating the uniform scroll velocity Tv, based on a history of the touch position TP. Then, based on the history of the touch position TP during this period, each of the moving distances of the touch position TP in the horizontal direction within every predetermined time unit is obtained as a slide amount (slide velocity). For example an average of the obtained slide amounts is calculated as the uniform scroll velocity Tv. By obtaining the uniform scroll velocity Tv as described above, the uniform-velocity scrolling can be initiated at the uniform scroll velocity Tv in accordance with the slide amount immediately before the user performs a touch-off. Thus, the uniform-velocity scrolling can be initiated at an initial velocity reflecting an operation sensation obtained before the user performs a touch-off. It should be noted that the uniform-velocity scrolling period Tt may be adjusted in accordance with the level of the uniform scroll velocity Tv.

Furthermore, as shown in one example in FIG. 15, the deceleration-scrolling period Gt is obtained as a period that starts at a timing when the scroll time St exceeds an end timing of the uniform-velocity scrolling period Tt and that ends when the deceleration-scrolling velocity Gv decreases from the uniform scroll velocity Tv at a predetermined deceleration (negative acceleration) Ga to become equal or less than a threshold value th.

When the measuring of the scroll time St is initiated, and when the uniform-velocity scrolling period Tt, the uniform scroll velocity Tv, and the deceleration-scrolling period Gt are obtained, the uniform-velocity scrolling at the uniform scroll velocity Tv in accordance with the direction of the slide operation is executed during the uniform-velocity scrolling period Tt. Specifically, the uniform-velocity scrolling is executed until the scroll time St, which measuring thereof has been initiated at a start timing of the uniform-velocity scrolling period Tt, exceeds the end timing of the uniform-velocity scrolling period Tt. When the uniform-velocity scrolling is executed, the calculated uniform scroll velocity Tv is set as the scroll velocity Sv. When the scroll velocity Sv is set, Gx coordinates of the scroll positions of each of the thumbnails are sequentially subtracted or sequentially added, such that the thumbnail line is moved at the scroll velocity Sv set in accordance with the direction of the scroll. After the calculation of sequentially subtracting or sequentially adding the Gx coordinates of the scroll positions of each of the thumbnails, the images of the thumbnails are actually displayed on the lower LCD 12 by the method described above based on the coordinates of the scroll positions of each of the thumbnails after the calculation, as described above with regard to the execution of the follow-scrolling, and thereby the uniform-velocity scrolling is achieved.

When the measured scroll time St exceeds the end timing of the uniform-velocity scrolling period Tt, as shown in FIG. 15 as one example, a deceleration-scrolling of gradually decreasing the scroll velocity Sv is executed. When the deceleration-scrolling is executed, the deceleration-scrolling velocity Gv, which gradually decreases from the uniform scroll velocity Tv at a predetermined deceleration Ga (negative acceleration), is sequentially calculated until the scroll time St exceeds the end timing of the deceleration-scrolling period Gt. Then, the sequentially calculated deceleration-scrolling velocity Gv is sequentially set as the scroll velocity Sv. The deceleration-scrolling is achieved by displaying images indicating the thumbnails on the lower LCD 12, based on the result of sequential calculation of the scroll positions of each of the thumbnails with the sequentially set scroll velocity Sv, by using a method similar to the method described for the uniform-velocity scrolling.

A stop-scrolling is executed when the scroll time St exceeds the end timing of the deceleration-scrolling period Gt after the scroll velocity Sv becomes equal to or less than the threshold value th. As described above, the deceleration-scrolling period Gt is obtained as a period that starts at a timing when the scroll time St exceeds the uniform-velocity scrolling period Tt and that ends when the deceleration-scrolling velocity Gv decreases from the uniform scroll velocity Tv to become equal to or less than the threshold value th. Therefore, logically, a timing when the scroll velocity Sv becomes equal to or less than the threshold value th is when the scroll time St becomes the end timing of the deceleration-scrolling period Gt.

Here, the stop-scrolling is a scrolling to gradually decrease the scroll velocity Sv such that the scroll velocity Sv becomes zero, and is conducted when any one of the thumbnails arrive at the center position Hc of the lower LCD 12. When the stop-scrolling is executed, first, among the thumbnails which are being scrolled, a thumbnail at a scroll position whose Gx coordinate will match that of the center position He next is identified, based on the scroll directions and scroll positions of each of the thumbnails in the global coordinate system as described above. When the thumbnail at the scroll position whose Gx coordinate will match that of the center position Hc next is identified, an interval between a Gx coordinate of the center position Hc and a Gx coordinate the scroll position of the identified thumbnail is obtained as a stopping distance Tk. In the one example shown in FIG. 16 in which a deceleration-scrolling is conducted in the leftward direction, a horizontal distance from a Gx coordinate of the center position He to a Gx coordinate of a scroll position Ci of a thumbnail S 19 whose Gx coordinate will match that of the center position He next is represented as the stopping distance Tk.

When the stopping distance Tk is obtained, a stop-scrolling deceleration velocity Ka (negative acceleration) is obtained such that the scroll velocity Sv will decrease from the deceleration-scrolling velocity Gv, which became equal to or less than the threshold value th, to become zero at the obtained stopping distance Tk. When the stop-scrolling deceleration velocity Ka is obtained, a stop-scrolling velocity Kv, which gradually decreases at the obtained stop-scrolling deceleration velocity Ka from the deceleration-scrolling velocity Gv which became equal to or less than the threshold value th, is sequentially calculated. Then the scroll velocity Sv is sequentially set to be the stop-scrolling velocity Kv. Based on the scroll velocity Sv which is sequentially set to be stop-scrolling velocity Kv, the stop-scrolling is achieved by actually displaying images indicating the thumbnails on the lower LCD 12, based on the result of sequential calculation of the Gx coordinates of the scroll positions of each of the thumbnails by using a method similar to the method described for the deceleration-scrolling. As a result, when the stop-scrolling velocity Kv, which is sequentially calculated so as to gradually decrease, becomes zero, the thumbnail, which have been identified to have a horizontal direction position that matches the center position He at the stopping distance Tk, stops at the horizontal direction position of the center position Hc. In FIG. 17, in the display screen of the lower LCD 12, the scrolling is stopped as the horizontal direction position of the thumbnail S 19, which have been identified as the thumbnail whose horizontal direction position will match the center position He next, matches the horizontal direction position of the center position He.

It should be noted that, in the present embodiment, the stop-scrolling may be immediately executed when the uniform scroll velocity Tv becomes equal to or less than the threshold value th. In this case, the stopping distance Tk of the thumbnail whose horizontal direction position matches that of the center position He when a touch-off is performed is immediately calculated, and the above described stop-scrolling is executed.

Furthermore, when any one of the follow-scrolling, uniform-velocity scrolling, deceleration-scrolling, and stop-scrolling is being executed, in other words, when the scroll display process is being executed, there are cases where the scrolling cannot be continued. Specifically, the scrolling is stopped in mid-course of scrolling the thumbnail line in the rightward direction, when the Gx coordinate of the center position Hc matches the Gx coordinate of a scroll position of a thumbnail positioned at the left end of the thumbnail line. Furthermore, the scrolling is also stopped in mid-course of scrolling the thumbnail line in the leftward direction, when the Gx coordinate of the center position He matches the Gx coordinate of a scroll position of a thumbnail positioned at the right end of the thumbnail line. In such cases, the positions of each of the thumbnails may be calculated such that the Gx coordinate of a scroll position of a thumbnail at the left end or the right end does not exceed the Gx coordinate of the center position He. With this, when scrolling is performed such that the Gx coordinate of a scroll position of a thumbnail positioned at either end of the thumbnail line exceeds that of the center position He, the thumbnail is scrolled and displayed such that the Gx coordinate of the scroll position of the thumbnail stops at the Gx coordinate of the center position He.

Furthermore, in the present embodiment, as one example, after a touch-off is performed in the scroll display process, an automatic scrolling is executed so as to conduct scrolling at the scroll velocity Sv set for the uniform-velocity scrolling period Tt, the deceleration-scrolling period Gt, and the stop-scrolling period Kt, as it may be obvious from the description above. If a touch-on is performed once again by the user when such automatic scrolling is being executed, the automatic scroll may be forcible stopped, and a follow-scrolling in accordance with the above described slide operation may be executed again.

As described above as one example, in the present embodiment, when a slide operation to slide the thumbnails is performed and when a touch-off is performed while maintaining the slide velocity, the uniform-velocity scrolling is initiated for the uniform-velocity scrolling period Tt calculated based on the number of thumbnails. Then, after the uniform-velocity scrolling, the scrolling is stopped after the scroll velocity is gradually decreased by the deceleration-scrolling and the stop-scrolling.

Before describing process actions performed by the game apparatus 10, various data used when executing the display control program will be described next with reference to FIG. 18. FIG. 18 shows examples of the various data stored in the main memory 32 in accordance with the execution of the display control program.

In FIG. 18, operation data Da, album data Db, image data Dc, thumbnail position data Dd, flag data De, and a group of various programs Pa including the display control program and the like are stored in the main memory 32.

Stored in the operation data Da are data (touch position data Da1) indicating a touch position TP in the screen coordinate system, at which the user is touching on the touch panel 13, and data (operation button data Da2) indicating a state of how the user is operating the operation button 14. For example, the state of the operation button 14 and the touch position TP are acquired at every time unit (for example, 1/60 second) in which the game apparatus 10 conducts a game process, and those that are acquired are stored in the touch position data Da1 and the operation button data Da2 to be updated. Furthermore, when a touch operation is performed, the touch position data Da1 indicates a touch position TP; and when a touch operation is not been performed, data indicating a state of not having a touch operation performed is stored in the touch position data Da1 as, for example, "Null." Furthermore, the touch position data Da1 of the present embodiment includes, for example, a history indicating either "Null" or the touch position TP acquired in a predetermined number (e.g., five) of immediately preceding processes. Therefore, in the present embodiment, not only the touch position TP on the touch panel 13 can be determined, but also whether a touch-on or a touch-off is performed on the touch panel 13 can be determined, based on the touch position data Da1. Specifically, if the position indicated by the latest data stored in the touch position data Da1 is a touch position TP indicating a position on which the user is performing a touch operation at the present time point, and if the previous states are "Null"; it can be determined that a touch-on is performed on the touch position TP. On the other hand, if the latest data indicated by the touch position data Da1 is "Null", and if data immediately preceding that is data indicating a touch position TP; it can be determined that a touch-off is performed at the touch position TP.

The album data Db is data stored in the main memory 32 in accordance with execution of the album display process program or the album creation process program included in the display control program. As described above, when the album creation process program is initiated, the album data Db is generated on the main memory 32. Furthermore, when the album display process program is initiated, the album data Db is loaded onto the main memory 32 from the external data storage memory 46, as described above. The album data Db includes camera image identifier data Db1 storing the camera image identifiers Pid of the camera images CI registered in the album, and thumbnail identifier data Db2 storing the thumbnail identifiers Pid of the thumbnails corresponding to the camera images CI. One example of this album data Db is the album data which is described above and shown in FIG. 6.

The image data Dc includes camera image data Dc1 and thumbnail data Dc2. The camera image data Dc1 is data that is read-out when the album display process program is executed. Stored in the camera image data Dc1 are the camera images CI indicated by the camera image identifiers Pid included in the album data Db which is read-out when the album display process program is initiated. The camera images CI stored in camera image data Dc1 are read-out from the external data storage memory 46. Further, the thumbnail data Dc2 is data read-out when the album display process program is executed. Stored in the thumbnail data Dc2 are the thumbnails indicated by the thumbnail identifiers Sid included in the album data Db which is read-out when the album display process program is initiated. The thumbnails stored in the thumbnail data Dc2 are read-out from the external data storage memory 46.

In the present embodiment, as one example, in the album creation process program, the thumbnails and the camera images CI displayed on the above described album creation screens are directly read-out from the external data storage memory 46 if necessary, regardless of the thumbnail identifiers Sid and camera image identifiers Pid included in the album data Db.

The thumbnail position data Dd is data indicating scroll positions of thumbnails in the global coordinate system, and is data that is sequentially updated or generated in the scroll display process.

The flag data De includes a scroll time measuring flag De1 and a stop-scrolling deceleration calculation flag De2. The scroll time measuring flag De1 is flag data indicating whether or not measurement of the scroll time St has started. If the scroll time measuring flag De1 is "ON," it indicates that the measurement of the scroll time St has started; and if the scroll time measuring flag De1 is "OFF," it indicates that the measurement of the scroll time St has not started. In addition, the stop-scrolling deceleration calculation flag De2 is flag data indicating whether or not the stop-scrolling deceleration velocity Ka has been calculated. If the stop-scrolling deceleration calculation flag De2 is "ON," it indicates that the stop-scrolling deceleration velocity Ka has been calculated; and if the stop-scrolling deceleration calculation flag De2 is "OFF," it indicates that the stop-scrolling deceleration velocity Ka has not been calculated.

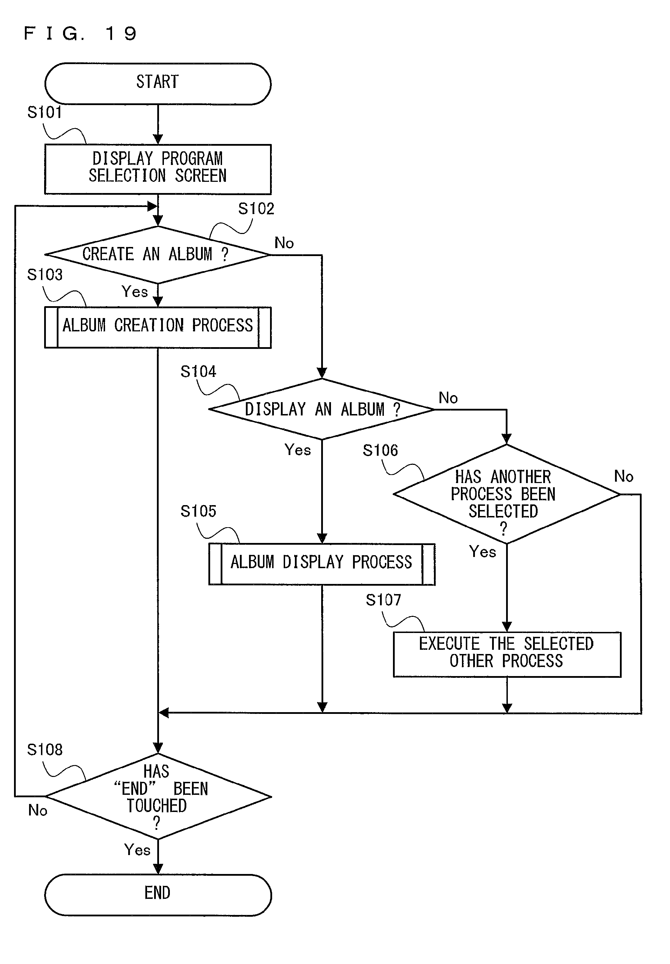

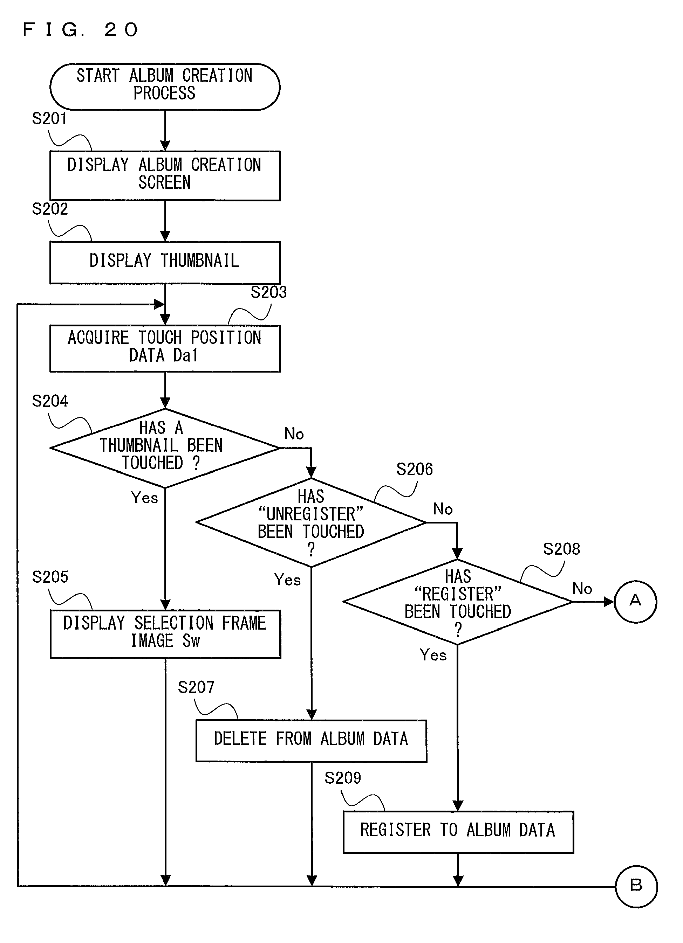

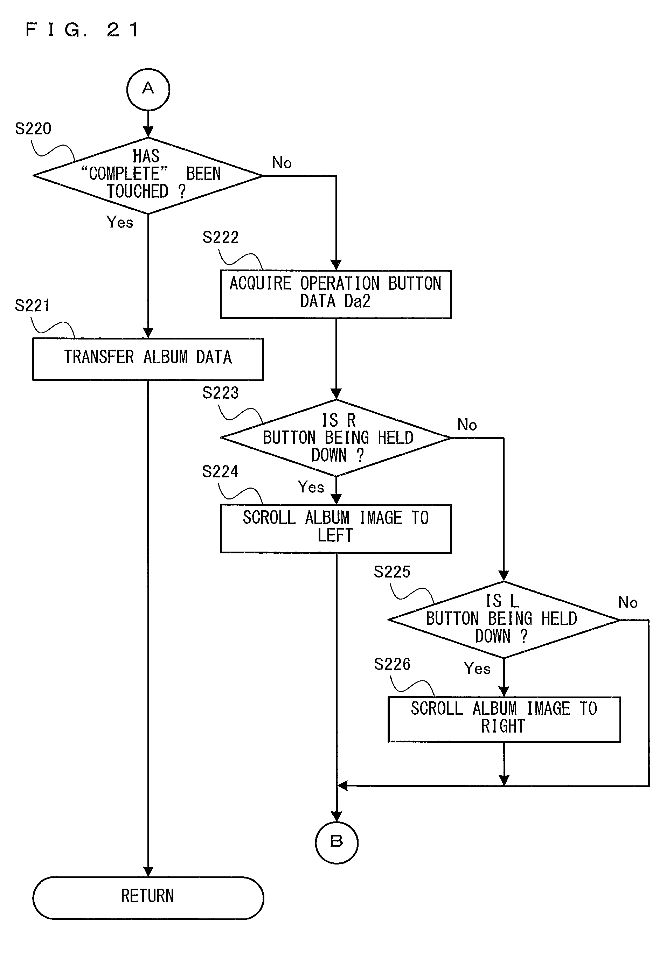

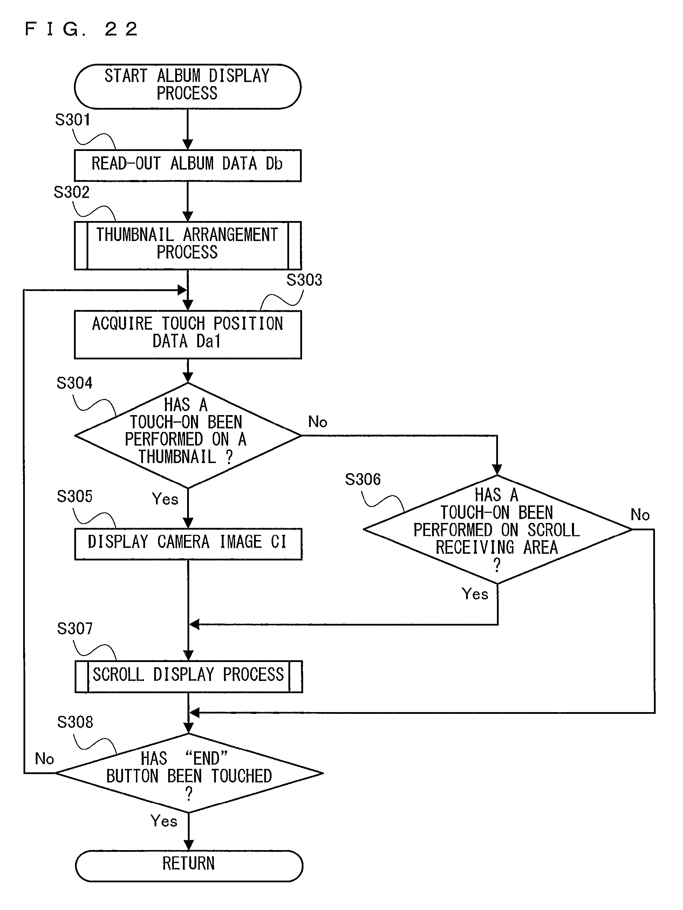

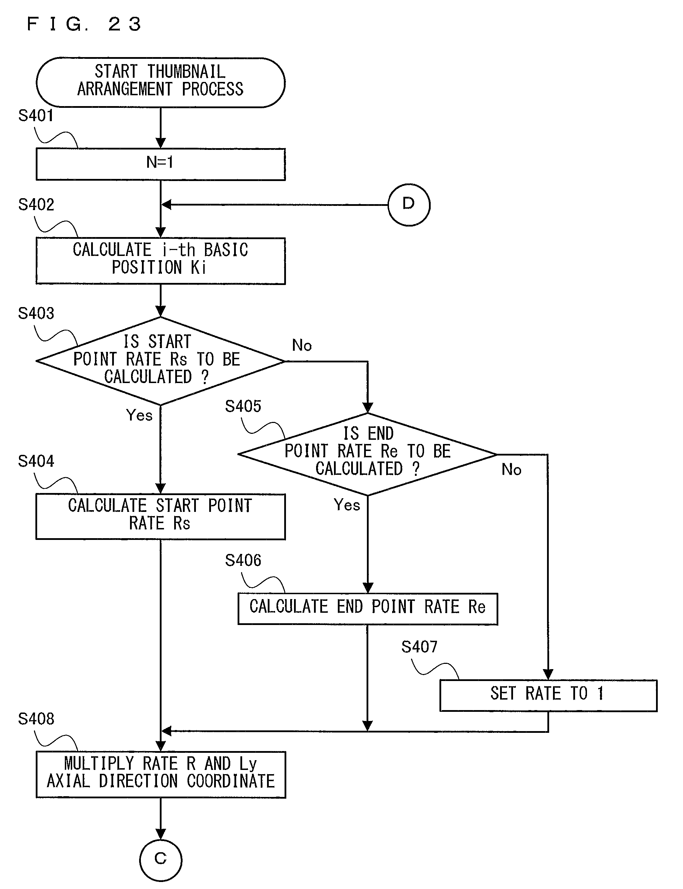

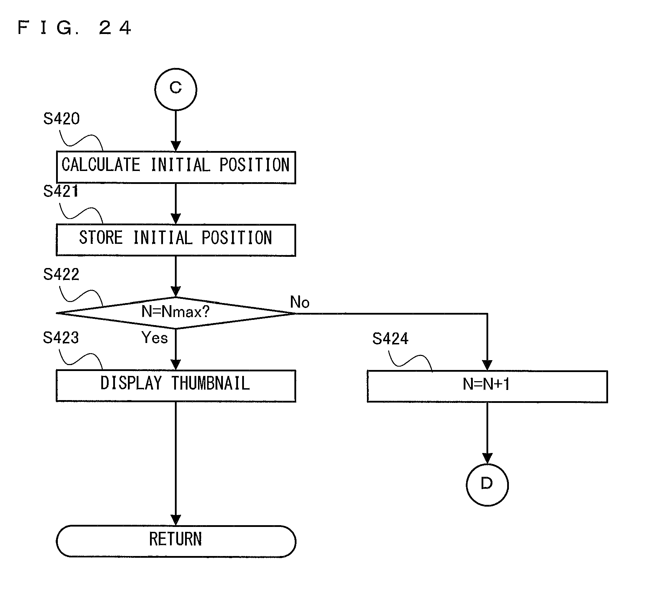

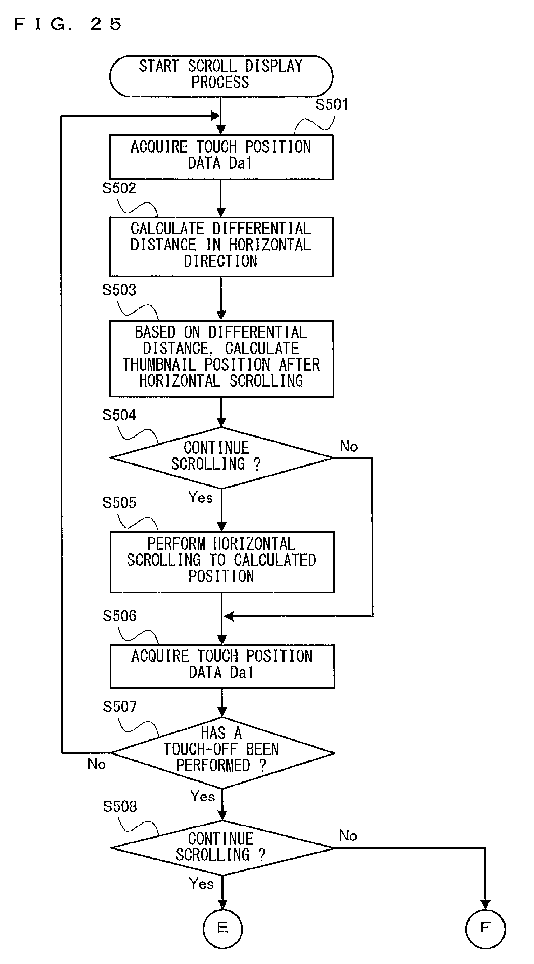

Next, specific process actions by the display control program executed by the game apparatus 10 will be described with reference to FIG. 19 to FIG. 28. FIG. 19 is a flowchart showing one example of how the game apparatus 10 conducts a display control process by executing the display control program. FIG. 20 and FIG. 21 represent subroutines indicating detailed actions of the album creation process executed at step 103. Furthermore, FIG. 22 represents a subroutine indicating detailed actions of the album display process executed at step 105. In addition, FIG. 23 and FIG. 24 represent subroutines indicating detailed actions of the thumbnail arrangement process executed at step 302. Further, FIG. 25 to FIG. 28 represent subroutines indicating detailed actions of the scroll display process executed at step 307. In FIG. 19 to FIG. 28, "step" is abbreviated as "S."

First, in FIG. 19, when the power supply (the power button 14F) of the game apparatus 10 is turned ON, a boot program (not shown) is executed by the CPU 311, and a program that selectively executes a plurality of application programs stored in the external data storage memory 46 is loaded on the main memory 32. The loaded program is executed by the CPU 311, and a program selection screen is displayed on the lower LCD 12 (step 101). Selectable application programs including the album display process program and the album creation process program which is described later are displayed on the program selection screen as, for example, icons; and the user can select an application program by performing a touch operation thereon.

The CPU 311 determines whether or not an album creation application has been selected on the program selection screen, based on the touch position data Da1 (step 102). Specifically, the CPU 311 acquires the touch position data Da1, and if the latest touch position TP indicated by the acquired touch position data Da1 is at a displayed position of an icon of the album creation application on the lower LCD 12, the CPU 311 can determine that the album creation application has been selected. If the CPU 311 determines that the album creation application has been selected (step 102: Yes), the CPU 311 executes the album creation process (step 103). In the following, detail actions of the album creation process performed at the above described step 103 will be described with reference to FIG. 20 and FIG. 21.

In FIG. 20, the CPU 311 displays, on the upper LCD 22 and the lower LCD 12, the album creation screens to have the user create an album (step 201), loads thumbnails and thumbnail identifiers Sid stored in the external data storage memory 46 onto the main memory 32, and displays the thumbnails on the lower LCD 12 (step 202). When the processes at step 201 and step 202 are executed by the CPU 311, the upper LCD 22 and the lower LCD 12 shown in the displayed example of the album creation screens in FIG. 5 are displayed, except for the album images and the selection frame image Sw. When the album creation screens and the thumbnails are displayed, the CPU 311 acquires the touch position data Da1 (step 203). The CPU 311 determines whether or not a touch operation has been performed on any one of the thumbnails displayed on the lower LCD 12, based on the latest touch position TP indicated by the acquire touch position data Da1 (step 204). If the latest touch position TP indicated by the touch position data Da1 matches a displayed position of any one of the thumbnails, the CPU 311 determines that a touch operation is performed on a thumbnail (step 204: Yes), and the CPU 311 displays the selection frame image Sw that highlights the edge of the thumbnail determined as a recipient of the touch operation as shown in FIG. 5 as one example (step 205).

On the other hand, if the CPU 311 determines that a touch operation has not been performed on a thumbnail (step 204: No), the CPU 311 determines whether or not a touch operation has been performed on the "unregister" button icon Hb displayed on the lower LCD 12, based on the latest touch position TP indicated by the touch position data Da1 acquired at step 203 (step 206). If the latest touch position TP indicated by the touch position data Da1 matches the displayed position of the "unregister" button icon Hb, the CPU 311 determines that a touch operation has been performed on the "unregister" button icon Hb (step 206: Yes), and advances the process to step 207 which is next. At step 207, as described above, the CPU 311 deletes, from the album data Db, a camera image identifier Pid of a camera image CI displayed as an album image inside the frame image Hw on the upper LCD 22, and a thumbnail identifier Sid of a thumbnail of the camera image CI; and updates the number N indicating the order as described above.

On the other hand, if the CPU 311 determines that a touch operation has not been performed on the "unregister" button icon Hb (step 206: No), the CPU 311 determines whether or not a touch operation has been performed on the "register" button icon Ib displayed on the lower LCD 12, based on the latest touch position TP indicated by the touch position data Da1 acquired at step 203 (step 208). If the latest touch position TP indicated by the touch position data Da1 acquired at step 203 matches the displayed position of the "register" button icon Ib, the CPU 311 determines that a touch operation has been performed on the "register" button icon Ib (step 208: Yes), and advances the process to step 209 which is next. At step 209, as described above, the CPU 311 registers, to the album data Db, a camera image identifier Pid of a camera image CI represented by the thumbnail whose edge is highlighted by the selection frame image Sw due to the selection performed on the lower LCD 12, and a thumbnail identifier Sid of the thumbnail; and updates the number N indicating the order as described above.

On the other hand, if the CPU 311 determines that a touch operation has not been performed on the "register" button icon Ib (step 208: No), the CPU 311 determines whether or not a touch operation has been performed on the "complete" button icon Kb displayed on the lower LCD 12, based on the latest touch position TP indicated by the touch position data Da1 acquired at step 203 (step 220). If the latest touch position TP indicated by the touch position data Da1 acquired at step 203 matches the displayed position of the "complete" button icon Kb displayed on the lower LCD 12, the CPU 311 determines that a touch operation has been performed on the "complete" button icon Kb (step 220: Yes), transfers the album data Db stored in the main memory 32 to the external data storage memory 46 (step 221), and ends the processes by this subroutine. When the processes by this subroutine end, the above described program selection screen is displayed again.

On the other hand, if the CPU 311 determines that a touch operation has not been performed on the "complete" button icon Kb (step 220: No), the CPU 311 acquires the operation button data Da2 (step 222). The CPU 311 determines whether or not the R button 14H has been held down, based on the operation button data Da2 acquired at step 222 (step 223). If the CPU 311 determines that the R button 14H has been held down (step 223: Yes), the CPU 311 scrolls all the album images to the left such that an album image displayed immediate right to an album image displayed in the center of the upper LCD 22 will be displayed in the center (step 224). On the other hand, if the CPU 311 determines that the R button 14H has not been held down (step 223: No), the CPU 311 determines whether or not the L button 14G has been held down, based on the operation button data Da2 acquired at step 222 (step 225). If the CPU 311 determines that the L button 14G has been held down (step 225: Yes), the CPU 311 scrolls all the album images to the right such that an album image displayed immediate left to an album image displayed in the center of the upper LCD 22 will be displayed in the center (step 226).

If the selection frame image Sw is displayed (step 205), if a thumbnail identifier Sid and a camera image identifier Pid are deleted from the album data Db (step 207), if a thumbnail identifier Sid and a camera image identifier Pid are registered on album data Db (step 209), if the album images are scrolled to the left (step 224), or if the album images are scrolled to the right (step 226); the CPU 311 repeats the process from step 203.

Returning to FIG. 19, if the CPU 311 determines that the album creation application has not been selected (step 102: No), the CPU 311 determines whether or not the album display application has been selected based on the touch position data Da1 (step 104). Specifically, the CPU 311 acquires the touch position data Da1, and if the latest touch position TP indicated by the acquired touch position data Da1 is at a displayed position of the icon of the album display application on the lower LCD 12, the CPU 311 can determine that the album display application has been selected. If the CPU 311 determines that the album display application has been selected (step 104: Yes), the CPU 311 executes the album display process (step 105). In the following, detailed actions of the album display process performed at the above described step 105 will be described with reference to FIG. 22.

In FIG. 22, the CPU 311 reads the album data Db from the external data storage memory 46 and transfers it to the main memory 32 (step 301), and executes the thumbnail arrangement process (step 302). In the following, detailed actions of the thumbnail arrangement process performed in the above described step 302 will be described with reference to FIG. 23 and FIG. 24.

In FIG. 23, the CPU 311 initializes, to 1, the number N indicating the order for recognizing a thumbnail whose arrangement position is to be determined (step 401), and obtains a basic position Ki of a thumbnail represented by, among the thumbnail identifiers Sid stored in the album data Db, a thumbnail identifier Sid stored with the number N as described above (step 402). When the basic position Ki is obtained, the CPU 311 determines whether or not the start point rate Rs is to be calculated as the rate R for the thumbnail with the number N indicating the order (step 403). Specifically, in the present embodiment, as it may be obvious from the description above, the CPU 311 determines that the start point rate Rs is to be calculated as the rate R of the thumbnail when the number N is any of 1 to 7. If the CPU 311 determines that the start point rate Rs is to be calculated as the rate R of the thumbnail (step 403: Yes), the CPU 311 calculates the start point rate Rs from the above described formula (2) and sets the obtained start point rate Rs as the rate R of the thumbnail with the number N (step 404). On the other hand, if the CPU 311 determines that the start point rate Rs is not to be calculated as the rate R of the thumbnail with the number N (step 403: No), the CPU 311 determines whether or not the end point rate Re is to be calculated as the rate R of the thumbnail with the number N (step 405). Specifically, in the present embodiment, as described above, if the number N is any of 24 to 30, the CPU 311 determines that the end point rate Re is to be calculated as the rate R of the thumbnail. If the CPU 311 determines that the end point rate Re is to be calculated as the rate R of the thumbnail (step 405: Yes), the CPU 311 calculates the end point rate Re from the above described formula (3) and sets the obtained end point rate Re as the rate R of the thumbnail with the number N (step 406). On the other hand, if the CPU 311 determines that the end point rate Re is not to be calculated as the rate R of the thumbnail with the number N (step 405: No), the CPU 311 sets the rate R of the thumbnail with the number N as 1 (step 407).

When the rate R of the thumbnail with the number N is set, the CPU 311 multiplies the set rate R to the coordinate in the Ly axial direction for the basic position Ki obtained at step 402, and determines the arrangement position of the thumbnail (step 408). When the arrangement position is determined, the CPU 311 calculates the above described initial position based on the determined arrangement position (step 420), and stores, in the thumbnail position data Dd, the calculated initial position as the initial position of the thumbnail with the number N (step 421). When the initial position is stored, the CPU 311 determines whether or not the number N is equal to a number Nmax, which is the last number of the thumbnails registered in the album data Db (step 422). If the number N is equal the number Nmax which is the last number of the thumbnails registered in the album data Db (step 422: Yes), the CPU 311 determines that the initial positions for all the thumbnails registered in the album data Db have been determined, displays the above described initial screen on the lower LCD 12 based on the determined initial positions (step 423), and ends the processes by this subroutine. On the other hand, if the number N is not equal to the number Nmax, which is the last of those registered in the album data Db (step 422: No), the CPU 311 determines that, among the thumbnails registered in the album data Db, there is a thumbnail whose initial position has not been determined, increases the number N by 1 (step 424), and repeats the process from step 402.

Returning to FIG. 22, the CPU 311 acquires the touch position data Da1 (step 303), and determines whether or not a touch-on has been performed on a thumbnail displayed on the lower LCD 12 based on the acquired touch position data Da1 (step 304). If the latest touch position TP indicated by the touch position data Da1 acquired at step 303 matches any of the displayed positions of the thumbnails displayed on the lower LCD 12, and if it is determined by using the above described method that the touch to the touch position TP is a touch-on, the CPU 311 determines that a touch-on has been performed on a thumbnail (step 304: Yes). Then, the CPU 311 displays on the upper LCD 22 a camera image CI represented by the thumbnail on which the touch-on has been performed (step 305), and advances the process to step 307 which is next. On the other hand, if the CPU 311 determines that a touch-on has not been performed on a thumbnail (step 304: No), the CPU 311 determines whether or not a touch-on has been performed on a scroll receiving area on the lower LCD 12, which excludes the displayed positions of the thumbnails and the "end" button icon Ob, based on the touch position data Da1 acquired at step 303 (step 306). If the latest touch position TP indicated by the touch position data Da1 acquired at step 303 is in the above described scroll area in the lower LCD 12, and if it is determined by the above described method that the touch to the touch position TP is a touch-on, the CPU 311 determines that a touch-on has been performed on the scroll receiving area (step 306: Yes), and advances the process to step 307 which is next.

When the CPU 311 executes the processes from step 304 to step 306, if the user performs a touch-on on a thumbnail, a camera image CI represented by the thumbnail on which the touch-on has been performed is displayed on the upper LCD 22 as an album image, and the process can be shifted to the scroll display process. On the other hand, when the CPU 311 executes the processes from step 304 to step 306, if the user performs a touch-on on an area excluding the thumbnails and the "end" button icon Ob in the display area of the lower LCD 12, the process can be directly shifted to the scroll display process.

If the CPU 311 determines that the latest touch position TP acquired at step 303 is not included in the scroll receiving area (step 306: No), the CPU 311 determines whether or not the touch position TP is at the displayed position of the "end" button icon Ob displayed on the lower LCD 12 (step 308). If the CPU 311 determines that the touch position is at the displayed position of the "end" button icon Ob (step 308: Yes), the CPU 311 determines that a touch operation has been performed on the "end" button icon Ob, and ends the processes by this subroutine. When the processes by this subroutine end, the above described program selection screen is displayed again. On the other hand, if the CPU 311 determines that the touch position is not at the displayed position of the "end" button icon Ob (step 308: No), the CPU 311 repeats the process from step 303.

Returning to FIG. 19, if the CPU 311 determines that the album display application has not been selected (step 104: No), the CPU 311 determines whether or not another application program displayed on the program selection screen has been selected (step 106). Specifically, the CPU 311 acquires the touch position data Da1, and if the latest touch position TP indicated by the acquired touch position data Da1 is at a displayed position of the icon representing another application program on the lower LCD 12, the CPU 311 can determine that another application program has been selected. If the CPU 311 determines that another application program has been selected (step 106: Yes), the CPU 311 executes the selected application program, and then advances the process to step 108. On the other hand, if the CPU 311 determines that another application program has not been selected (step 106: No), the CPU 311 advances the process to step 108.

After finishing the album creation process (step 103), the album display process (step 105), and the process for another application program (step 107), and when another application program has not been selected (step 106: No), the CPU 311 determines whether or not a touch operation has been performed on the "end" button icon on the program selection screen (step 108). Specifically, the CPU 311 acquires the touch position data Da1, and if the latest touch position TP indicated by the acquire touch position data Da1 is at a displayed position of the "end" button icon on the lower LCD 12, the CPU 311 can determine that a touch operation has been performed on the "end" button icon. If the CPU 311 determines that a touch operation has been performed on the "end" button icon (step 108: Yes), the CPU 311 turns OFF the power supply of the game apparatus 10 and ends the processes. On the other hand, if the CPU 311 determines that a touch operation on the "end" button icon has not been performed (step 108: No), the CPU 311 continues displaying the program selection screen to have the user select a program.

Referring to FIG. 22 again, as described above, if the process at step 305 is executed or if it is determined as Yes at step 306, the CPU 311 advances the process to the scroll display process at step 307. In the following, detailed actions of the scroll display process performed at the above described step 307 will be described with reference to FIG. 25 to FIG. 29.

In FIG. 25, the CPU 311 acquires the touch position data Da1 (step 501), and calculates a difference between horizontal direction positions of the latest touch position TP and the second latest touch position TP, as a differential distance (step 502). After calculating the differential distance, the CPU 311 calculates the scroll positions of each of the thumbnails when the thumbnail line is moved in the horizontal direction for the calculated differential distance (step 503).

When the CPU 311 calculates the scroll positions after moving each of the thumbnails, the CPU 311 determines whether or not the thumbnail line can be continued to be scrolled based on the calculated scroll positions (step 504). In more detail, the CPU 311 determines whether the scroll direction is in the rightward direction or the leftward direction, based on the touch position data Da1 acquired at step 501. If the CPU 311 determines that the scroll direction is in the leftward direction, the CPU 311 compares the Gx coordinates of the center position He and a scroll position of a thumbnail at the right end of the thumbnail line after it is being moved. Specifically, if the Gx coordinate of the scroll position of the thumbnail at the right end after being moved matches the Gx coordinate of the center position He, the CPU 311 determines that the scrolling cannot be continued; and if the Gx coordinate of the scroll position of the thumbnail at the right end after being moved is larger than the Gx coordinate of the center position He, the CPU 311 determines that the scrolling can be continued. On the other hand, if the CPU 311 determines that the scroll direction is in the rightward direction, the CPU 311 compares the Gx coordinates of the center position He and a scroll position of a thumbnail at the left end of the thumbnail line after it is being moved. Specifically, if the Gx coordinate of the scroll position of the thumbnail at the left end after being moved matches the Gx coordinate of the center position Hc, the CPU 311 determines that the scrolling cannot be continued; and if the Gx coordinate of the scroll position of the thumbnail at the left end after being moved is smaller than the Gx coordinate of the center position Hc, the CPU 311 determines that the scrolling can be continued. Hereinafter, the CPU 311 uses a similar method to determine whether or not the scrolling can be continued.

If the CPU 311 determines that the scrolling can be continued (step 504: Yes), the CPU 311 executes a horizontal scroll of moving each of the thumbnails to the scroll positions calculated at step 503, and updates the thumbnail position data Dd with the scroll positions of each of the thumbnails after the movement (step 505). By executing the processes in step 502 to step 505, the CPU 311 continues the horizontal scroll of scrolling the thumbnail line by the horizontal direction differential distance between the positions of the latest touch position TP and the second latest touch position TP, until the CPU 311 determines that a touch-off has been performed at step 507. Thus, by executing the processes in step 502 to step 507, the CPU 311 can execute the follow-scrolling of scrolling the thumbnails in accordance with the touch positions TP until a touch-off has been performed.

On the other hand, if the CPU 311 executes the process at step 505, or if the CPU 311 determines that the scrolling cannot be continued (step 504: No); the CPU 311 acquires the touch position data Da1 (step 506). The CPU 311 determines by using the above described method whether or not the user has performed a touch-off, based on the acquired touch position data Da1 (step 507).

If it is determined that the user has not performed a touch-off (step 507: No), the CPU 311 repeats the process from step 501. On the other hand, if it is determined that the user has performed a touch-off (step 507: Yes), the CPU 311 determines by the above described method whether or not the scrolling can be continued when executing the process at step 509 (step 508). If it is determined that the scrolling can be continued (step 508: Yes), the CPU 311 advances the process to step 521. On the other hand, if it is determined that the scrolling cannot be continued, (step 508: No), the CPU 311 advances the process to step 547.

If the CPU 311 determines that the user has not performed a touch-off by executing the process at step 507, the follow-scrolling can be continued by repeating the processes starting from step 501. On the other hand, if the CPU 311 determines that the user has performed a touch-off by executing the process at step 507, and also if the CPU 311 determines that the scrolling can be continued at step 508, the process can be advanced to step 521 to shift to the processes for the uniform-velocity scrolling.

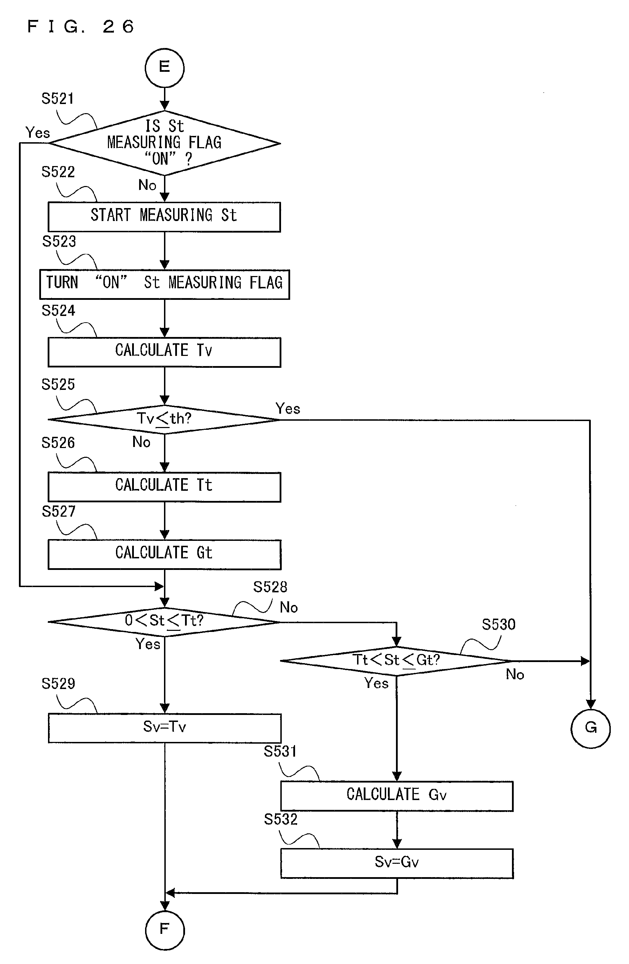

In FIG. 26, the CPU 311 determines whether or not the scroll time measuring flag De1 is "ON" (step 521). If it is determined that the scroll time measuring flag De1 is "ON" (step 521: Yes), the CPU 311 advances the process to step 528. On the other hand, if it is determined that the scroll time measuring flag De1 is not "ON" (step 521: No), the CPU 311 starts measuring the scroll time St from zero based on the counted time outputted from the RTC 38 (step 522), and turns "ON" the scroll time measuring flag De1 stored in the main memory 32 (step 523).

As it will be obvious from the description below, the measurement of the scroll time St being started means the uniform scroll velocity Tv, the uniform-velocity scrolling period Tt, and the deceleration-scrolling period Gt have been calculated. Therefore, the CPU 311 can determine whether or not the uniform scroll velocity Tv, the uniform-velocity scrolling period Tt, and the deceleration-scrolling period Gt have been calculated, by determining whether or not the measurement of the scroll time St has started in the process at step 521. When the CPU 311 determines that the measurement of the scroll time St has started, the CPU 311 can skip the processes to calculate the uniform scroll velocity Tv, the uniform-velocity scrolling period Tt, and the deceleration-scrolling period Gt, and can advance the process to step 528.

When the scroll time measuring flag De1 is turned "ON", the CPU 311 calculates the uniform scroll velocity Tv (step 524). Specifically, the CPU 311 calculates the uniform scroll velocity Tv as described above, based on the history of the touch position TP included in the touch position data Da1. Next, the CPU 311 determines whether or not the calculated uniform scroll velocity Tv is equal to or less than the threshold value th (step 525). If the CPU 311 determines that the calculated uniform scroll velocity Tv is not equal to or less than the threshold value th (step 525: No), the CPU 311 calculates the uniform-velocity scrolling period Tt as described above based on the number of thumbnails included in the thumbnail line (step 526), and calculates the deceleration-scrolling period Gt as described above (step 527). On the other hand, if it is determined that the uniform scroll velocity Tv calculated at step 524 is equal to or less than the threshold value th (step 525: Yes), the CPU 311 advances the process to step 541.

If the uniform scroll velocity Tv calculated at step 525 is equal to or less than the threshold value th, the CPU 311 skips the process to step 541. If the uniform-velocity scrolling is conducted for the uniform-velocity scrolling period Tt even when the uniform scroll velocity Tv is equal to or less than the threshold value th, a smooth scrolling cannot be achieved, since a thumbnail, which has to be stopped at the center position Hc when Gx coordinates of those match, arrives at the center position before the scroll velocity Sv is gradually decreased. Therefore, in the present embodiment, as one example, if the uniform scroll velocity Tv is equal to or less than the threshold value th, the process is skipped to step 541 and the process for the stop-scrolling is immediately executed. With this, at any calculated uniform scroll velocity Tv, by having the scrolling conducted as described above by gradually decreasing the scroll velocity Sv of the thumbnail, a scrolling can be achieved in which a Gx coordinate of the scroll position of the thumbnail, whose Gx coordinate will match that of the center position Hc next, is smoothly stopped at the Gx coordinate of the center position Hc.

When the deceleration-scrolling period Gt is calculated, the CPU 311 determines whether or not the currently measured scroll time St is before the end timing of the uniform-velocity scrolling period Tt (step 528). If the scroll time St is determined to be before the end timing of the uniform-velocity scrolling period Tt (step 528: Yes), the CPU 311 sets the uniform scroll velocity Tv as the scroll velocity Sv for scrolling the thumbnails (step 529). On the other hand, if it is determined that the currently measured scroll time St is not before the end timing of the uniform-velocity scrolling period Tt (step 528: No), the CPU 311 determines whether or not the currently measured scroll time St is before the end timing of the deceleration-scrolling period Gt (step 530). If the CPU 311 determines that the currently measured scroll time St is before the end timing of the deceleration-scrolling period Gt (step 530: Yes), the CPU 311 calculates the deceleration-scrolling velocity Gv as described above by using a predetermined deceleration Ga (step 531), and sets the calculated deceleration-scrolling velocity Gv as the scroll velocity Sv for scrolling the thumbnails (step 532).

If it is determined in the process at step 528 that the scroll time St is not before the end timing of the uniform-velocity scrolling period Tt, and if it is determined at step 530 that the scroll time St is before the end timing of the deceleration-scrolling period Gt; the CPU 311 calculates the deceleration-scrolling velocity Gv (step 531), and sets the calculated deceleration-scrolling velocity Gv as the scroll velocity Sv. Thus, by executing the processes at step 528 and step 530, the CPU 311 can shift from the process for the uniform-velocity scrolling to the process for the deceleration-scrolling if necessary, based on the scroll time St. Furthermore, if the CPU 311 determines at step 530 that the scroll time St is not before the end timing of the deceleration-scrolling period Gt, the CPU 311 can advance the process to step 541 and shift to the process for the stop-scrolling by regarding the scroll time St to be between the start timing and the end timing of the stop-scrolling period Kt.

When the CPU 311 sets the uniform scroll velocity Tv as the scroll velocity Sv (step 529), or sets the deceleration-scrolling velocity Gv as the scroll velocity Sv (step 532), the CPU 311 advances the process to step 547.

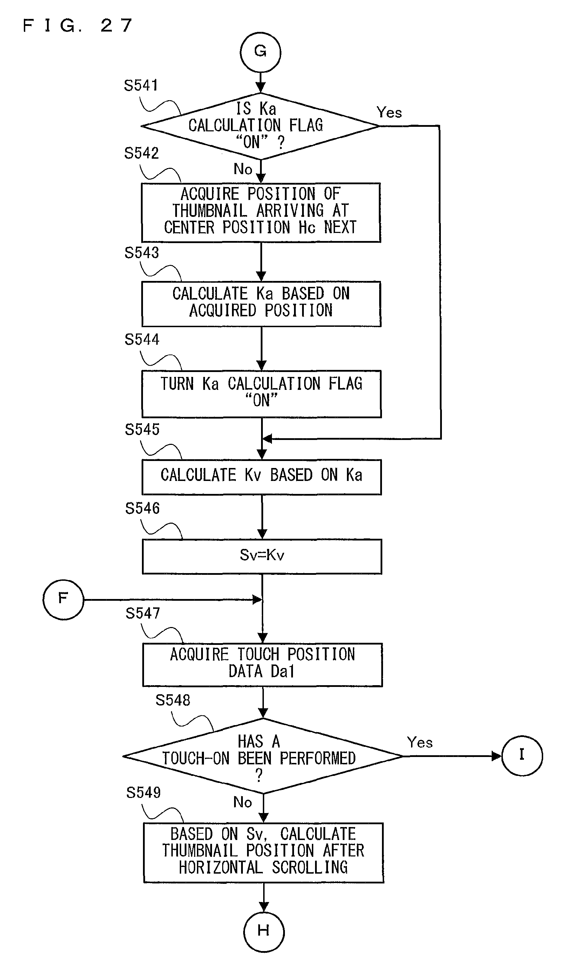

On the other hand, in FIG. 27, if it is determined that the currently measured scroll time St is not before the end timing of the deceleration-scrolling period Gt (step 530: No), or if it is determined that the uniform scroll velocity Tv is equal to or less than the threshold value th (step 525: Yes); the CPU 311 determines whether or not the stop-scrolling deceleration calculation flag De2 is "ON" (step 541). If the stop-scrolling deceleration calculation flag De2 is not "ON" (step 541: No); the CPU 311 determines a thumbnail whose Gx coordinate of the scroll position will match the Gx coordinate of the center position Hc next based on the scroll positions of each of the thumbnails indicated by the thumbnail position data Dd, and acquires the scroll position of the thumbnail (step 542). When the scroll position of the thumbnail whose Gx coordinate will match that of the center position Hc next is acquired, the CPU 311 calculates the stop-scrolling deceleration velocity Ka as described above based on the acquired scroll position (step 543), and turns "ON" the stop-scrolling deceleration calculation flag De2 stored in the main memory 32 so as to indicate that the stop-scrolling deceleration velocity Ka has been calculated (step 544). If stop-scrolling deceleration calculation flag De2 is turned "ON" (step 544), or if the stop-scrolling deceleration calculation flag De2 is determined to be "ON" (step 541: No), the CPU 311 calculates the stop-scrolling velocity Kv as described above based on the calculated stop-scrolling deceleration velocity Ka (step 545), and sets the stop-scrolling velocity Kv as the scroll velocity Sv for scrolling the thumbnails (step 546).

As it may be obvious from the description above, in one example of the present embodiment, if once the stop-scrolling deceleration velocity Ka is calculated, it does not have to be calculated until the scroll display process is initiated again. Thus, if the CPU 311 determines at step 541 that the stop-scrolling deceleration velocity Ka has been calculated, the CPU 311 can skip the process to step 545.

If the CPU 311 sets the uniform scroll velocity Tv (step 529), the deceleration-scrolling velocity Gv (step 532), or the stop-scrolling velocity Kv (step 546), as the scroll velocity Sv for scrolling the thumbnails; the CPU 311 acquires the touch position data Da1 (step 547). The CPU 311 determines by the method described above whether or not a touch-on has been performed by the user, based on the acquired touch position data Da1 (step 548). If it is determined that a touch-on has not been performed (step 548: No), the CPU 311 calculates the scroll positions of each of the thumbnails when a horizontal scrolling is conducted by using the scroll velocity Sv which has been set (step 549).

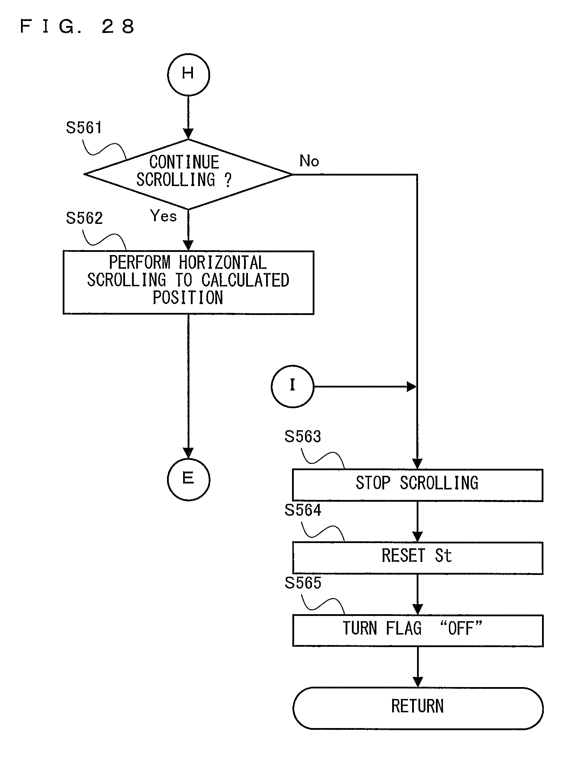

In FIG. 28, the CPU 311 determines by using the method described above whether or not the scrolling can be continued, based on the scroll positions of each of the thumbnails calculated by using the scroll velocity Sv (step 561). If the CPU 311 determines that the scrolling can be continued (step 561: Yes), the CPU 311 moves and scrolls each of the thumbnails to the scroll positions calculated at step 549, updates the thumbnail position data Dd with the scroll positions of each of the thumbnails after the calculation (step 562), and repeats the process from step 521.

On the other hand, if the CPU 311 determines that the scrolling cannot be continued (step 561: No), or determines that a touch-on has been performed (step 548: Yes), the CPU 311 stops the scrolling of the thumbnails (step 563), stops the measurement of the scroll time St and resets the scroll time St to zero (step 564), turns "OFF" both the scroll time measuring flag De1 and the stop-scrolling deceleration measuring flag De2 (step 565), and ends the processes by this subroutine.

In the present embodiment, as one example, after the scroll velocity Sv is set at step 529, step 532, or step 546 as described above, the positions of each of the thumbnails after the scrolling are not immediately calculated, but it is determined whether or not a touch-on has been performed by the user in the processes from step 547 to step 548. As a result, when a touch-on is performed when automatic scrolling of the uniform-velocity scrolling, the deceleration-scrolling, or the stop-scrolling is being executed, the CPU 311 can skip the process to step 563 and stop the scrolling. In this case, returning to the flowchart in FIG. 22, at step 308, the CPU 311 determines whether or not the touch operation has been performed on the "end" button icon Ob based on the touch position TP of the touch-on determined at step 548. Then, if it is determined that the touch operation has been performed on the "end" button icon Ob, the CPU 311 can repeat the process from step 303 and shift to the above described process for the follow-scrolling.

The above is the description of the one example of the display control process performed by the game apparatus 10 of the present embodiment. In the present embodiment, as described above, in the thumbnail arrangement process, the coordinates in the vertical direction (Ly axial direction) of the lower LCD 12 with regard to the arrangement positions of each of the thumbnails are determined by using a sinusoidal function such that each of the coordinates of the thumbnails in the vertical direction is different from at least that of another thumbnail. By arranging each of the thumbnails at the arrangement positions as determined above, the thumbnail line can be displayed on a display means so as to be in a waveform. By having a waveform thumbnail line as described above, visual characteristics of each thumbnail can be given to the arrangement positions. Specifically, for example, such characteristics include a characteristic of arranging a certain thumbnail at a peak position (more specifically, a position where a peak is generated as a local maximum point or a local minimum point in the waveform represented by a sinusoidal wave) of the waveform, and a characteristic of arranging a certain thumbnail in the middle between neighboring such peak positions. Therefore, with the game apparatus 10 according to the present embodiment, by arranging the thumbnails to form a waveform thumbnail line, visual characteristics are intuitively recognized by the user and a guide for searching for an intended thumbnail is naturally provided to the user, and thereby the user can locate the intended thumbnail in a small time period.

Furthermore, in the description above, in the thumbnail arrangement process, the coordinates in the vertical direction (Ly axial direction) of the lower LCD 12 with regard to the arrangement positions of each of the thumbnails are determined by using a sinusoidal function such that each of the coordinates of the thumbnails in the vertical direction is different from at least that of another thumbnail. However, the arrangement positions of each of the thumbnails does not necessarily have to be determined by using a sinusoidal function, as long as the coordinates in the vertical direction (Ly axial direction) of the lower LCD 12 with regard to the arrangement positions of each of the thumbnails are determined such that each of the coordinates of the thumbnails in the vertical direction is different from at least that of another thumbnail. As a result, a thumbnail can be visually recognized by the user at a coordinate that is set so as to be different from at least that of another thumbnail in vertical direction of the lower LCD 12, and the user can use the coordinate as a guide and can locate the intended thumbnail in a short time period.

In the description above, visual characteristics are given to the arrangement positions of each thumbnail by arranging the thumbnail line in a waveform. However, in another one embodiment, the arrangement positions of each of the thumbnails may be determined such that the coordinates of neighboring thumbnails in the vertical direction of the lower LCD 12 change successively. As a result, the user can comprehend the approximate positions of each of the thumbnails by using the coordinates in the vertical direction for each of the thumbnails as a guide, since the coordinates successively change in the vertical direction (Ly axial direction) of the lower LCD 12 for the thumbnails whose arrangement positions in the horizontal direction (Lx axial direction) of the lower LCD 12 are determined to be in a line.

Furthermore, in another one embodiment, the arrangement positions of each of the thumbnails may be determined such that the thumbnail line is a straight line in a diagonal direction (diagonally right up direction or diagonally right down direction). Even when the thumbnail line is a straight line as described above, visual characteristics can be given to the arrangement positions of each of the thumbnails in the vertical direction of the lower LCD 12. Specific examples of such visual characteristics include a visual characteristic of arranging a certain thumbnail in the upward direction or downward direction of the lower LCD 12 with respect to an adjoining thumbnail. Thus, even when the thumbnail line is a straight line, the user can intuitively recognize a visual characteristic and can be naturally given a guide for searching for the intended thumbnail. However, characteristics obtained when the thumbnail line is in a waveform, including arranging a certain thumbnail at a peak position of the waveform and arranging a certain thumbnail in the middle between neighboring peak positions, are more recognizable to the user than the characteristics obtained when the thumbnail line is in a straight line.

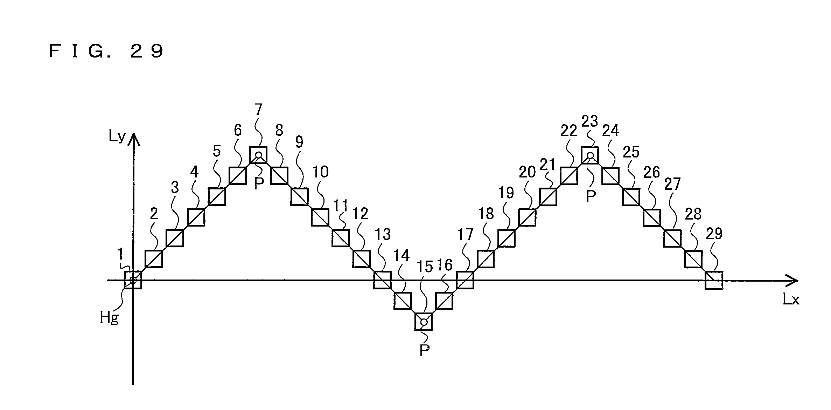

Furthermore, in the description above, the arrangement positions of the thumbnails are determined by using a sinusoidal function, and the thumbnail line is in a waveform. However, the arrangement positions of the thumbnails are not limit to those obtained from a sinusoidal function, and the thumbnail line may be formed in a waveform by using a cosine function. In addition, the arrangement positions of the thumbnails is not limit to that from a sinusoidal function or a cosine function, and, as shown in FIG. 29 as one example, the thumbnail line may be formed from thumbnails arranged along a shape of a triangular wave as long as the shape includes peaks P. By having the thumbnail line formed from thumbnails arranged along the shape that includes the peaks P, the user can use a thumbnail positioned at a peak P as a guide and can visually memorize thumbnails positioned in proximity of the peak P, and thereby can easily locate an intended thumbnail.

Furthermore, when the thumbnails are arranged along the shape including the peaks P, a thumbnail does not necessarily have to be arranged at a peak P. When a thumbnail is not arranged at a peak P, the user will visually recognize a thumbnail arranged in proximity of a peak P as being positioned at the peak. Therefore, even when a thumbnail is not arranged at a peak P, the user can easily locate an intended thumbnail by using, as a guide, the thumbnail that has been recognized as being at the peak position. Another one example of a shape including peaks P includes, for example, a sawtooth waveform determined by using a sawtooth wave function.

Furthermore, as described above, by using commonly known shapes such as a sinusoidal function, a cosine function, a triangular wave function, and a sawtooth wave function; the thumbnail line can be formed in a shape that is familiar to the user. As a result, based on a familiar shape, the user can easily recognize a thumbnail arranged at a peak or in the vicinity of the peak which are used as a guide, and can locate an intended thumbnail in a short time period.

Furthermore, by arranging the thumbnails along a shape determined by a sinusoidal function, a cosine function, a triangular wave function, a sawtooth wave function, or the like as described above, in other words, along a shape that results in periodical peaks, the user can use the multiple peaks that appears periodically as guides and can locate an intended thumbnail in a short time period.

Furthermore, in the description above, the coordinates in the horizontal direction (Lx axial direction) of the lower LCD 12 with regard to the arrangement positions of the thumbnails are determined to have equal intervals therebetween in accordance with the order indicated by the number N. In addition, the coordinates in the vertical direction (Ly axial direction) of the lower LCD 12 with regard to the arrangement positions of the thumbnails are determined by using a sinusoidal function with the number N indicating equally-spaced coordinates as a parameter. The same applies when determining the coordinates in the vertical direction (Ly axial direction) of the lower LCD 12 with regard to the arrangement positions of the thumbnails by using a cosine function, a triangular wave function, and a sawtooth wave function. Furthermore, the coordinates in the horizontal direction (Lx axial direction) of the lower LCD 12 with regard to the arrangement positions of the thumbnails does not necessarily have to have equal intervals therebetween, and may have any intervals therebetween in the Lx axial direction. When arbitrary intervals are used for the coordinates in the horizontal direction (Lx axial direction) of the lower LCD 12 with regard to the arrangement positions of the thumbnails, the coordinates in the vertical direction (Ly axial direction) of the lower LCD 12 may be determined by using a sinusoidal function, a cosine function, a triangular wave function, and a sawtooth wave function that use a Lx axial direction coordinate value as a parameter.

Furthermore, in the description above, a case in which the arrangement positions of the thumbnails are determined by using a sinusoidal function is described as one example. When the arrangement positions of the thumbnails are determined by using a sinusoidal function as described above, a coordinate in the Ly axial direction for the determined arrangement positions, in other words, an amount of displacement from the Lx-axis in a direction parallel to the Ly axial direction repeatedly increases and decreases in accordance with the order of the aligned thumbnails. Thus, in the present embodiment, as one example, the arrangement positions of the thumbnails can be determined such that the thumbnails will not shift outward of the display area in the vertical direction when being displayed on the lower LCD 12. In addition, since the amount of increases and decreases can also be adjusted to appropriate levels such that the thumbnails will not shift outward of the display area of the lower LCD 12 in the vertical direction, the user can easily distinguish and recognize the arrangement positions of each of the thumbnails in the vertical direction (Ly axial direction) of the lower LCD 12.

Furthermore, in the description above, the arrangement positions of the thumbnails in the vertical direction (Ly axial direction), which is orthogonal to the scroll direction, of the lower LCD 12 are determined such that each of the coordinates of the thumbnails in the vertical direction is different from at least that of another thumbnail. As a result, when the user is scrolling the thumbnails and each of the thumbnails appears on the display screen, the fact that the thumbnails being scrolled can be shown as changes in coordinates in the vertical direction when the thumbnails appear on the lower LCD 12, since the thumbnails appear at mutually different coordinates in the vertical direction of the lower LCD 12. Furthermore, in the description above, the arrangement positions of the thumbnails in the vertical direction (Ly axial direction), which is orthogonal to the scroll direction, of the lower LCD 12 are determined by using a sinusoidal function so as to successively change, such that each of the coordinates of the thumbnails in the vertical direction is different from at least that of another thumbnail. As a result, the scroll velocity when the user is scrolling the thumbnails can be represented as a degree of change in the coordinate in vertical direction of the lower LCD 12 when each of the thumbnails appears on the display screen. As a result, by determining the arrangement positions of the thumbnails such that each of the coordinates of the thumbnails in the vertical direction is different from at least that of another thumbnail in a direction different from the scroll direction, the scroll velocity, the fact that the thumbnails are being scrolled, or the like can be shown to the user without displaying a scroll bar on the display area of the lower LCD 12. The same applies not only when a sinusoidal function is used, but also when a cosine function, a triangular wave function, a sawtooth wave function, and the like described above is used.

Furthermore, in the description above, by using the rate R, a coordinate in the Ly axial direction for a peak in the thumbnail line is determined such that the coordinate in the Ly axial direction for the peak is changed to be closer a coordinate in the Ly axial direction for an object at one of the ends (Ly coordinate = 0 in the example shown in FIG. 10C), as a coordinate in the Lx axial direction for the peak comes closer to a coordinate in the Lx axial direction for a thumbnail at one of the ends. As a result, when a coordinate becomes larger in the vertical direction (Ly axial direction) of the lower LCD 12 with regard to an arrangement position of a peak in the thumbnails which are scrolled and displayed on the display screen of the lower LCD 12, the user can visually recognize that the coordinate in the scroll direction for a displayed thumbnail is at the center. On the other hand, when a coordinate becomes smaller in the vertical direction (Ly axial direction) of the lower LCD 12 with regard to an arrangement position of peak in the thumbnails scrolled and displayed on the display screen of the lower LCD 12, the user can visually recognize that the coordinate in the scroll direction for a displayed thumbnail is at either one of the ends.

To which a coordinate in the Ly axial direction is changed to be closer, as a coordinate in the Lx axial direction for a periodically generated peak comes closer to a coordinate in the Lx axial direction for a thumbnail at either one of the end sides, does not have to be a position resulting in Ly coordinate = 0; as long as the coordinates are mutually identical at both ends. Furthermore, a shape, in which a coordinate in the vertical direction of a periodically generated peak is changed to be closer to a Ly coordinate (in the present embodiment, a position resulting in Ly coordinate = 0) of thumbnails both ends, as a coordinate in the horizontal direction of the peak comes closer to that of either one of the ends of the thumbnail line, is a shape of a function such as a sinusoidal function, whose amplitude periodically increases and decreases to become closer (smaller) to be zero.

Furthermore, in another embodiment, by using the rate R, a coordinate in the Ly axial direction for a peak in the thumbnail line may be determined such that the coordinate in the Ly axial direction for the peak is changed to be farther away from a coordinate in the Ly axial direction for an object at one of the ends (Ly coordinate = 0 in the example shown in FIG. 10C), as a coordinate in the Lx axial direction for the peak comes closer to a coordinate in the Lx axial direction for a thumbnail at one of the ends. As a result, when a coordinate becomes larger in the vertical direction (Ly axial direction) of the lower LCD 12 with regard to an arrangement position of a peak in the thumbnails which are scrolled and displayed on the display screen of the lower LCD 12, the user can visually recognize that the coordinate in the scroll direction for a displayed thumbnail is at either one of the end sides. On the other hand, when a coordinate becomes smaller in the vertical direction (Ly axial direction) of the lower LCD 12 with regard to an arrangement position of peak in the thumbnails scrolled and displayed on the display screen of the lower LCD 12, the user can visually recognize that the coordinate in the scroll direction for a displayed thumbnail is at the center.

It has been described above that the coordinates in the horizontal direction (Lx axial direction) of the lower LCD 12 with regard to the arrangement positions of the thumbnails may have any intervals therebetween; and for example, the intervals may be determined so as to be wider or narrower as approaching the center from the ends of the thumbnail line in the Lx axial direction. As a result, when the intervals in the horizontal direction (Lx axial direction) of the lower LCD 12 with regard to the arrangement positions of the thumbnails scrolled and displayed on the display screen of the lower LCD 12 become narrower or wider, the user can visually recognize that the position of the displayed thumbnail in the scroll direction is at the center or at either one of the ends of the thumbnail line.

Furthermore, in the description above, one example has been described in which a plurality of thumbnails are arranged in the order indicated by the number N in the horizontal direction (Lx axial direction) of the lower LCD 12, such that each of the coordinates in the vertical direction (Ly axial direction) of the lower LCD 12 with regard to the thumbnails is different from a coordinate of at least another thumbnail. Here, the horizontal direction in the lower LCD 12 matches the scroll direction in the scroll display process. Therefore, in the description above, described as one example is a case where the scroll direction and the direction in which the thumbnails are arranged match each other. By arranging the thumbnails in a direction that matches the scroll direction in the order indicated by the number N and by scrolling them, the user can use the order of the thumbnails registered in the album as a guide, and can locate an intended thumbnail in a short time period.

Furthermore, in the description above, the camera image identifiers Pid and the thumbnail identifiers Sid are stored in the album data Db. However, in another one embodiment, the camera images CI and the thumbnails may be directly stored in the album data Db.

Furthermore, in the description above, one example has been described in which a curve representing the rate R is bilaterally symmetrical, as shown in FIG. 10B as one example. However, in another one embodiment, the curve representing the rate R does not have to be bilaterally symmetrical.

(Modification)

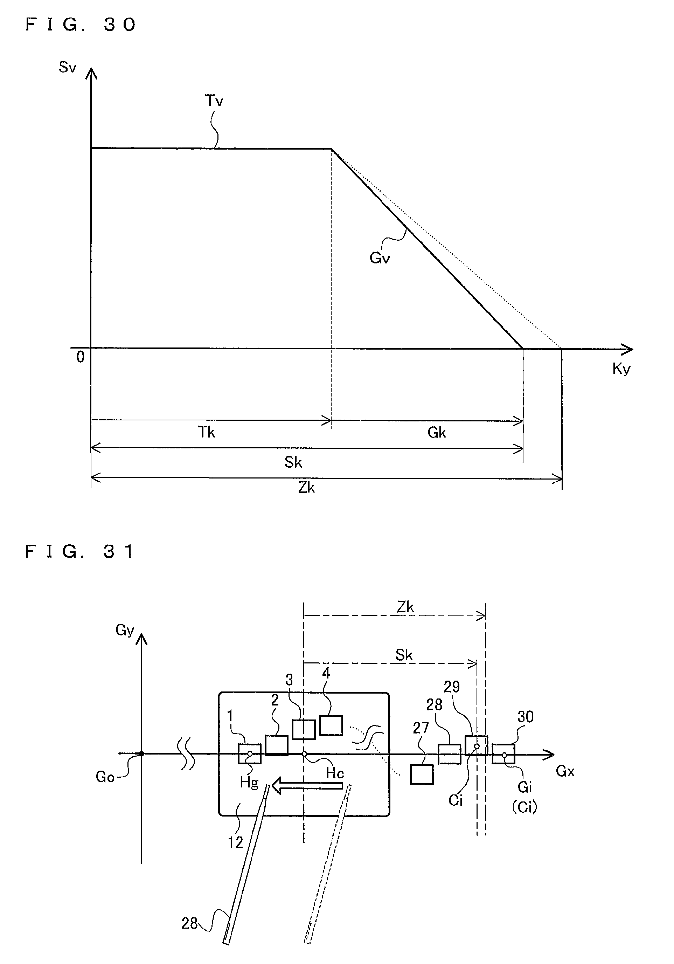

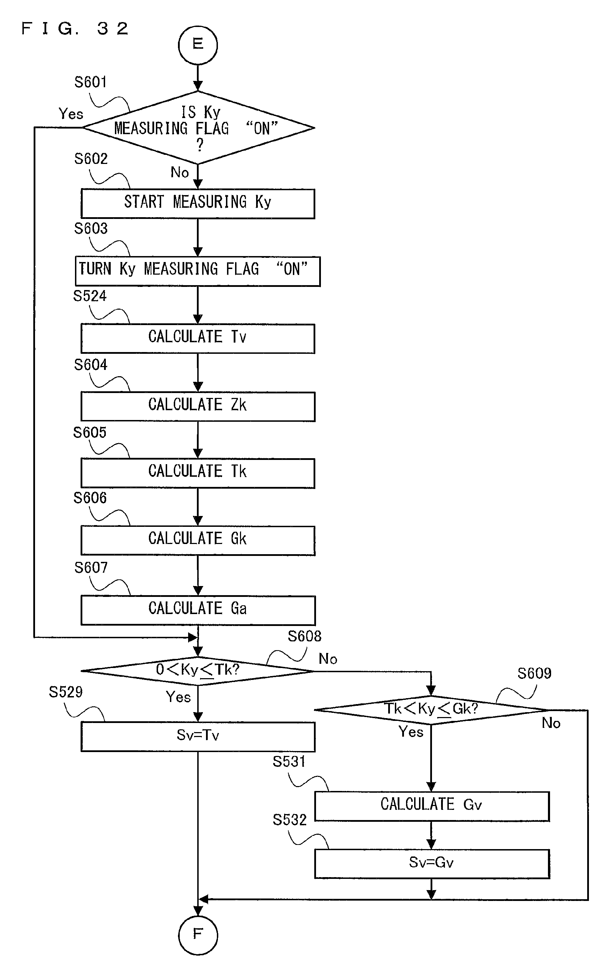

In the first embodiment described above, in the scroll display process, scrolling of the thumbnails is controlled based on the scroll time St while the scroll time St is being measured. In another one embodiment, scrolling of the thumbnails may be controlled based on a scrolling distance. In the following, a scroll display process in the present modification will be described with reference to FIG. 30 to FIG. 32. FIG. 30 shows one example of the relationship between scroll velocity and scrolling distance from a start of the uniform-velocity scrolling up to when the scrolling stops in the present modification. In addition, FIG. 31 shows one example of a calculated scrolling distance Zk and a total scrolling distance Sk in the present modification. Further, FIG. 32 represents a subroutine indicating detailed actions of the scroll display process in the present modification.

In FIG. 30, Ky represents scrolling distance, Tk represents a uniform-velocity scrolling distance, Gk represents a deceleration-scrolling distance, Sk represents a total scrolling distance, and Zk represents a calculated scrolling distance.

In the present modification, as shown in FIG. 30 as one example, when the user performs a touch-off while maintaining the slide velocity generated when the slide operation is performed, the thumbnails are horizontally scrolled in a direction in accordance with the slide operation at a uniform velocity. In the present modification, the scrolling of the thumbnails is stopped after the uniform-velocity scrolling and the deceleration-scrolling. When starting the uniform-velocity scrolling, first, measurement of a scrolling distance Ky is initiated. As the measuring of the scrolling distance Ky starts, the total scrolling distance Sk, the calculated scrolling distance Zk, a uniform-velocity scrolling distance Tk for the uniform-velocity scrolling, the uniform scroll velocity Tv, and the deceleration-scrolling distance Gk for the deceleration-scrolling are obtained.

FIG. 31 shows one example of the total scrolling distance Sk and the calculated scrolling distance Zk calculated by using as a standard the center position He when the touch-off has been performed on the lower LCD 12. When the uniform-velocity scrolling is initiated, as shown in FIG. 31 as one example, the calculated scrolling distance Zk is calculated in accordance with the number of thumbnails included in the thumbnail line, by using as a standard the center position He when the touch-off has been performed. For example, the calculated scrolling distance Zk is calculated by multiplying a predetermined constant to the number of thumbnails included in the thumbnail line. Therefore, the calculated scrolling distance Zk is obtained as being proportional to the number of thumbnails included in the thumbnail line. However, the calculated scrolling distance Zk calculated by multiplying a predetermined constant to the number of thumbnails, sometimes does not coincide with a distance from the center position He to a scroll position Ci of one of the thumbnails, as shown in FIG. 31 as one example. Therefore, when scrolling is conducted for the calculated scrolling distance Zk, there are cases where the center of the lower LCD 12 is not positioned at any one of the thumbnails after the scrolling stops.

Therefore, in the present modification, the calculated scrolling distance Zk is calculated, and a distance to a scroll position Ci of a thumbnail closest to the obtained calculated scrolling distance Zk is defined as the total scrolling distance Sk.

When the total scrolling distance Sk is obtained, next, the uniform-velocity scrolling distance Tk and the deceleration-scrolling distance Gk are obtained. In the present modification, the uniform-velocity scrolling distance Tk is obtained, for example, by multiplying a predetermined constant to the number of thumbnails included in the thumbnail line. Thus, in the present modification, as one example, the uniform-velocity scrolling distance Tk is obtained so as to be proportional to the number of thumbnails included in the thumbnail line. Furthermore, the deceleration-scrolling distance Gk is obtained by subtracting the uniform-velocity scrolling distance Tk from the total scrolling distance Sk. In the present modification, as obvious from FIG. 31, since the scrolling is stopped by having the deceleration-scrolling executed without executing the stop-scrolling described in the first embodiment, the deceleration-scrolling deceleration velocity Ga is calculated such that the scroll velocity Sv becomes zero at the deceleration-scrolling distance Gk. Furthermore, in the present modification, the uniform scroll velocity Tv is calculated by a method similar to the method described in the first embodiment.

When the uniform-velocity scrolling distance Tk and the uniform scroll velocity Tv are obtained, the uniform-velocity scrolling is executed in accordance with the direction of the slide operation that causes the uniform scroll velocity Tv, until the scrolling distance Ky exceeds the uniform-velocity scrolling distance Tk. Also in the present modification, when the uniform-velocity scrolling is executed, the calculated uniform scroll velocity Tv is set as the scroll velocity Sv, similar to the first embodiment; and the uniform-velocity scrolling is achieved by sequentially calculating the Gx coordinates of the scroll positions of each of the thumbnails.

When the measured scrolling distance Ky exceeds the uniform-velocity scrolling distance Tk, as shown in FIG. 30 as one example, the deceleration-scrolling for gradually decreasing the scroll velocity Sv is executed. When the deceleration-scrolling is initiated, the deceleration-scrolling velocity Gv, which gradually decreases from the uniform scroll velocity Tv at the calculated deceleration-scrolling deceleration velocity Ga, is sequentially calculated. Then, the deceleration-scrolling velocity Gv is sequentially set as the scroll velocity Sv.

Similar to the first embodiment, the deceleration-scrolling is achieved by sequentially calculating the Gx coordinates of the scroll positions of each of the thumbnails, based on the sequentially set scroll velocity Sv. When the deceleration-scrolling velocity Gv becomes zero, the scrolling is stopped, and a thumbnail is stopped at the center position He of the lower LCD 12.

Specific process actions by the display control program executed by the game apparatus 10 of the present modification will be described next with reference to FIG. 32. The display control program of the present modification is similar to that of the first embodiment, except for one part of the scroll display process shown in FIG. 32. Thus, only those that are different from the first embodiment will be described with reference to FIG. 32 for the description of the display control program of the present modification. In the present modification, although it is not show, a scrolling distance measuring flag De3 is included in the flag data De instead of the scroll time measuring flag De1 described in the first embodiment. The scrolling distance measuring flag De3 is a flag data that is turned "ON" when measuring of the scrolling distance Ky has started and that is turned "OFF" when measuring of the scrolling distance Ky has not started.

In the present modification, if the CPU 311 determines that the scrolling can be continued (step 508: Yes), the CPU 311 advances the process to step 601 in FIG. 32. In FIG. 32, the CPU 311 determines whether or not the scrolling distance measuring flag De3, which indicates if the scrolling distance Ky is currently measured, is "ON" (step 601). If the CPU 311 determines that the scrolling distance measuring flag De3 is "ON" (step 601: Yes), the CPU 311 advances the process to step 608. On the other hand, if the CPU 311 determines that the scrolling distance measuring flag De3 is not "ON" (step 601: No), the CPU 311 starts the measurement of the scrolling distance Ky from zero (step 602), and turns the scrolling distance measuring flag De3 "ON" (step 603). The scrolling distance Ky measured here can be obtained by measuring an amount of change in the Gx coordinate from an initial position of a scroll position of any one of the thumbnails at the beginning of the scrolling. When the scrolling distance measuring flag De3 is turned "ON", the CPU 311 calculates the uniform scroll velocity Tv as described above (step 524), and calculates the calculated scrolling distance Zk, the uniform-velocity scrolling distance Tk, the deceleration-scrolling distance Gk, and the deceleration-scrolling deceleration velocity Ga (step 604 to step 607).

When the calculated scrolling distance Zk, the uniform-velocity scrolling distance Tk, the deceleration-scrolling distance Gk, and the deceleration-scrolling deceleration velocity Ga are calculated, the CPU 311 determines whether or not the measured scrolling distance Ky is equal to or less than the uniform-velocity scrolling distance Tk (step 608). If the CPU 311 determines that the currently measured scrolling distance Ky is equal to or less than the uniform-velocity scrolling distance Tk (step 608: Yes), the CPU 311 sets the uniform scroll velocity Tv as the scroll velocity Sv for scrolling the thumbnails (step 529). On the other hand, if the CPU 311 determines that the currently measured scrolling distance Ky is not equal to or less than the uniform-velocity scrolling distance Tk (step 608: No), the CPU 311 determines whether or not the currently measured scrolling distance Ky is within the deceleration-scrolling distance Gk (step 609). If the CPU 311 determines that the currently measured scrolling distance Ky is within the deceleration-scrolling distance Gk (step 609: Yes), the CPU 311 calculates the deceleration-scrolling velocity Gv by using the deceleration-scrolling deceleration velocity Ga (step 531). On the other hand, if the CPU 311 determines that the currently measured scrolling distance Ky is not within the deceleration-scrolling distance Gk, the CPU 311 advances the process to step 547.

In the present modification, if it is determined in the process at step 608 that the scrolling distance Ky is not within the uniform-velocity scrolling distance Tk, and if it is determined at step 609 that the scrolling distance Ky is within the deceleration-scrolling distance Gk, the CPU 311 calculates the deceleration-scrolling velocity Gv (step 531), and sets the calculated deceleration-scrolling velocity Gv as the scroll velocity Sv. Thus, in the present modification, by executing the processes at step 608 and step 609, the CPU 311 can shift the process for the uniform-velocity scrolling to the process for the deceleration-scrolling if necessary, based on the scrolling distance Ky.

The above is the description of one example of the display control process performed by the game apparatus 10 according to the modification of the first embodiment. In the first embodiment, the scrolling of the thumbnail line is controlled based on the scroll time St; whereas, in the present modification, the scrolling of the thumbnail line is controlled based on the scrolling distance Ky. As described above, the scrolling of the thumbnail line can be controlled similar to the first embodiment, based on the scrolling distance Ky.

Furthermore, in the present embodiment, as one example, in the scroll display process, when the user performs a touch-on, a slide operation, and then a touch-off while performing the slide operation on the touch panel 13; the uniform-velocity scrolling, the deceleration-scrolling, and the stop-scrolling are executed to gradually decrease the scroll velocity Sv at the predetermined deceleration Ga and to stop the scrolling. Furthermore, in the present embodiment, as one example, the uniform-velocity scrolling period Tt for the uniform-velocity scrolling is calculated based on the number of thumbnails included in the thumbnail line.

As described above, in both the first embodiment and the modification of the first embodiment (hereinafter, simply referred to as modification), in the scroll display process, as one example, when the user performs a touch-on, a slide operation, and then a touch-off while performing the slide operation on the touch panel 13, the deceleration-scrolling and the stop-scrolling are executed after the uniform-velocity scrolling is executed. In the first embodiment, as one example, the uniform-velocity scrolling period Tt for executing the uniform-velocity scrolling is calculated based on the number of thumbnails included in the thumbnail line (so as to be proportional thereto); and, in the modification, as one example, the uniform-velocity scrolling distance Tk for executing the uniform-velocity scrolling is calculated based on the number of thumbnails included in the thumbnail line (so as to be proportional thereto). Thus, described as one example in the description above are cases where the uniform-velocity scrolling is executed after the uniform-velocity scrolling period Tt or the uniform-velocity scrolling distance Tk is calculated based on the number of thumbnails included in the thumbnail line.

For example, if only the scrolling that gradually decreases the scroll velocity Sv is conducted without executing the uniform-velocity scrolling of the present embodiment, it takes a long time period to display an intended thumbnail when a relatively large number of thumbnails exists. Furthermore, in this case where only the scrolling that gradually decreases the scroll velocity Sv is conducted, in order to reduce the time required for an intended thumbnail to be displayed when a relatively large number of thumbnails exist, it is possible to reduce the predetermined deceleration. However, in such a case, a slow scrolling with low velocity will continue as the intended thumbnail approaches, and thereby the user will experience a hassle.

Thus, in the scroll display process in the first embodiment and the modification, the uniform-velocity scrolling is executed before the scrolling that gradually decreases the scroll velocity Sv. By gradually decreasing the scroll velocity Sv after executing the uniform-velocity scrolling for the uniform-velocity scrolling period Tt or the uniform-velocity scrolling distance Tk, the time period required for displaying an intended thumbnail can be reduced even when a relatively large number of thumbnails exists, and the user can be prevented from experiencing a hassle.

Furthermore, in one example of the present embodiment described above, since the uniform-velocity scrolling period Tt is changed in accordance with the number of thumbnails included in the thumbnail line, the scroll velocity Sv can be gradually decreased after executing the uniform-velocity scrolling in the appropriate uniform-velocity scrolling period Tt.

Furthermore, in one example of the present embodiment described above, since the uniform-velocity scrolling period Tt is changed in accordance with the number of thumbnails included in the thumbnail line, the scroll velocity Sv can be gradually decreased at the predetermined deceleration. Therefore, according to one example of the first embodiment described above, an identical deceleration for stopping the scrolling is used even when albums having different numbers of registered thumbnails are selected, and thereby the user can have a unified operation sensation and can be prevented from experiencing a sense of discomfort. The same applies to a case where the uniform-velocity scrolling period Tt is changed in accordance with the size of an object.

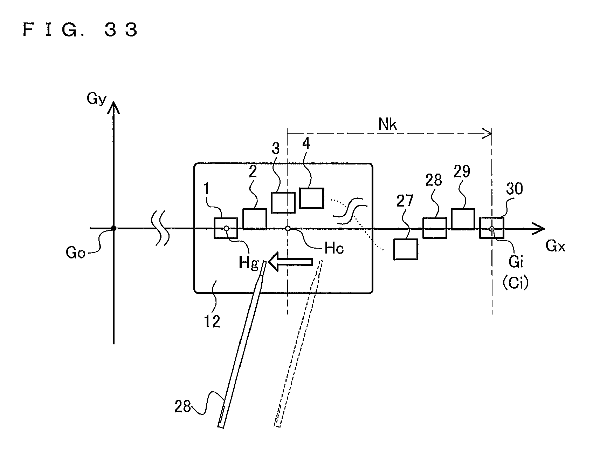

Furthermore, in the first embodiment, the uniform-velocity scrolling period Tt is calculated based on the number of thumbnails included in the thumbnail line; and in the modification, the uniform-velocity scrolling distance Tk is calculated based on the number of thumbnails included in the thumbnail line. Thus, in the description above, the uniform-velocity scrolling period Tt or the uniform-velocity scrolling distance Tk is calculated as one example of a uniform-velocity scrolling parameter representing a uniform-velocity scrolling amount for executing a uniform-velocity scrolling. However, in another one embodiment, for example, the uniform-velocity scrolling parameter including the uniform-velocity scrolling period Tt and the uniform-velocity scrolling distance Tk may be calculated based on the number of thumbnails remaining in the scroll direction from the center position Hc when a touch-off has been performed, as shown in FIG. 33 as one example. In the one example shown in FIG. 33, a total of 27 thumbnails, from the fourth to the twenty ninth thumbnail, remain in the scroll direction from the center position Hc when the touch-off is performed. When the uniform-velocity scrolling period Tt or the uniform-velocity scrolling distance Tk is calculated based on the number of thumbnails remaining in the scroll direction, the uniform-velocity scrolling period Tt or the uniform-velocity scrolling distance Tk may be calculated so as to be proportional to the number of thumbnails remaining in the scroll direction. As a result, the uniform-velocity scrolling period Tt or the uniform-velocity scrolling distance Tk can be made to be longer as the number of thumbnails remaining in the scroll direction becomes larger; and thereby the time period required to display an intended thumbnail can be reduced. Furthermore, other than the uniform-velocity scrolling period Tt or the uniform-velocity scrolling distance Tk, a similar advantageous effect can be obtained when, for example, the calculated scrolling distance Zk described in the modification is calculated based on the number of thumbnails remaining in the scroll direction.

In the descriptions for the first embodiment and the modification, the uniform-velocity scrolling period Tt, the uniform-velocity scrolling distance Tk, and the calculated scrolling distance Zk are calculated based on the number of thumbnails included in the thumbnail line. However, in another one embodiment, the uniform-velocity scrolling period Tt, the uniform-velocity scrolling distance Tk, the calculated scrolling distance Zk, and the like may be calculated based on a distance scrollable in the scroll direction (scrollable amount). FIG. 33 shows one example where a distance Nk, from the center position He when a touch-off has been performed to a scroll position Ci of a thumbnail positioned at the end in the scroll direction, is used as one example of the distance scrollable in the scroll direction. Based on the scrollable distance in the scroll direction such as the distance Nk shown in FIG. 33 as one example, for example, by calculating the uniform-velocity scrolling period Tt, the uniform-velocity scrolling distance Tk, or the calculated scrolling distance Zk so as to be longer as the scrollable distance becomes longer such that these values will be proportional to the scrollable distance in the scroll direction, the time period required for displaying an intended thumbnail can be reduced.

Furthermore, in the description above, one example has been described in which a thumbnail line including a plurality of thumbnails is scrolled as a scroll target. However, in another one embodiment, the scroll target for scrolling may be a display object line or a display object group consisting of a plurality of arbitrary display objects. In such a case, similar to calculating the uniform-velocity scrolling period Tt, the uniform-velocity scrolling distance Tk, or the calculated scrolling distance Zk based on the number of thumbnails included in the thumbnail line as described above; the uniform-velocity scrolling period Tt, the uniform-velocity scrolling distance Tk, or the calculated scrolling distance Zk may be calculated based on the number of display objects included in the display object line or the display object group. Furthermore, similar to calculating the uniform-velocity scrolling period Tt, the uniform-velocity scrolling distance Tk, and the calculated scrolling distance Zk based on the number of thumbnails remaining in the scroll direction as described above; the uniform-velocity scrolling period Tt, the uniform-velocity scrolling distance Tk, or the calculated scrolling distance Zk may be calculated based on the number of display objects remaining in the scroll direction.

Furthermore, in the description above, one example has been described in which scrolling and displaying have been performed by using the whole display area of the display screen on the lower LCD 12. However, in another one embodiment, the above described scrolling and displaying may be performed by using one part of the display screen on the lower LCD 12.

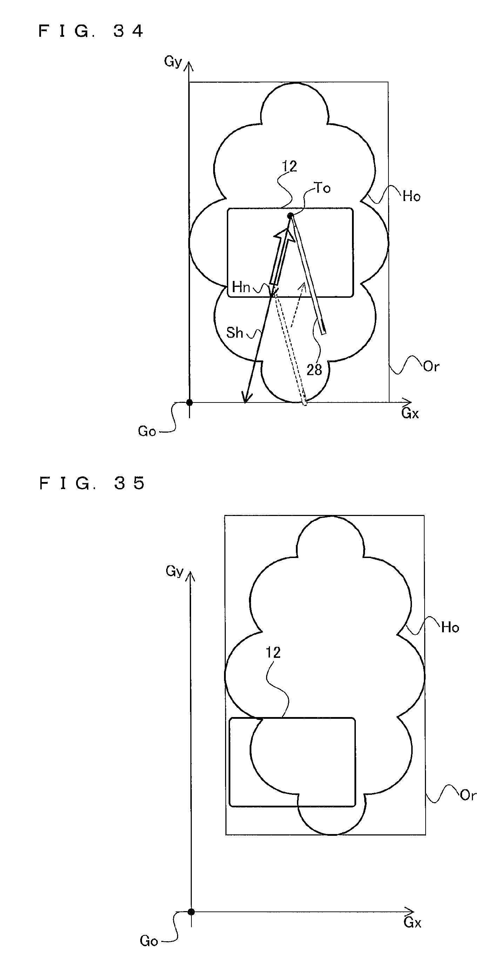

Furthermore, in the description above, it has been described that an object group or an object line consisting of a plurality of objects can be used as the scroll target. However, in another one embodiment, any single object can be used as the scroll target. In this case, the uniform-velocity scrolling period Tt, the uniform-velocity scrolling distance Tk, the calculated scrolling distance Zk, and the like may be calculated based on a ratio of the size of the display area of the lower LCD 12 with respect to the whole size of the single object which is the scroll target. FIG. 34 and FIG. 35 show one example in which, when scrolling a display object Ho, the uniform-velocity scrolling period Tt, the uniform-velocity scrolling distance Tk, the calculated scrolling distance Zk, and the like are calculated based on the ratio of the size of the display area of the lower LCD 12a with respect to a size Or of the display object Ho.

FIG. 34 shows one example of a positional relationship between the display object Ho and the display area of the lower LCD 12 in the global coordinate system, in a case where a touch-off following a slide operation has been performed on the touch panel 13 when the one part of the single display object Ho is displayed on the display area of the lower LCD 12. In FIG. 34, "To" represents the position where the touch-off has been performed on the display area of the lower LCD 12. FIG. 35 shows a positional relationship between the display object Ho and the display area of the lower LCD 12 in the global coordinate system, when scrolling is conducted after the touch-off is performed as shown in FIG. 34 as one example. As shown in FIG. 34 and FIG. 35, when scrolling the display object Ho in the display area of the lower LCD 12, the uniform-velocity scrolling period Tt, the uniform-velocity scrolling distance Tk, and the calculated scrolling distance Zk may be calculated based on the ratio of the size of the display area of the lower LCD 12 with respect to the size Or of the display object Ho. Specifically, as one example, the uniform-velocity scrolling period Tt, the uniform-velocity scrolling distance Tk, or the calculated scrolling distance Zk may be calculated so as to be proportional to a ratio of the size Or of the display object Ho with respect to the size of the display area of the lower LCD 12.

Furthermore, in the one example shown in FIG. 34 and FIG. 35, a size of a quadrangle having the maximum width and the maximum height of the display object Ho is used as the size Or of the display object Ho when obtaining the ratio of the display area of the lower LCD 12. However, an area size of the shape of the display object Ho may be used as the size Or of the display object Ho.

FIG. 34 also shows a remaining distance vector Sh which indicates a distance from a touch-off position to an end of the size Or of the display object Ho in a direction opposite to the slide direction in which the slide operation has been performed from the touch-off position To. In another one embodiment, for example, the uniform-velocity scrolling period Tt, the uniform-velocity scrolling distance Tk, the calculated scrolling distance Zk, and the like may be calculated based on the size (length) of the remaining distance vector Sh shown in FIG. 34 as one example. Specifically, any one of the uniform-velocity scrolling period Tt, the uniform-velocity scrolling distance Tk, the calculated scrolling distance Zk, and the like may be calculated so as to be proportional to the size (length) of the remaining distance vector Sh. Based on the calculated result, as shown in FIG. 35 as one example, the display object Ho may be scrolled such that a portion of the display object Ho in the direction of the remaining distance vector Sh is displayed on the display area of the lower LCD 12. In this case, the length of the remaining distance vector Sh becomes a scrollable length.

Furthermore, FIG. 34 also shows a remaining display distance vector which indicates a distance from the touch-off position to an end of the display area in a direction opposite to the slide direction in which the slide operation has been performed from the touch-off position To. In another one embodiment, for example, the uniform-velocity scrolling period Tt, the uniform-velocity scrolling distance Tk, the calculated scrolling distance Zk, and the like may be calculated based on a ratio between the length of the remaining distance vector Sh and the length of the remaining display distance vector Hn as shown in FIG. 34 as one example. Specifically, as one example, any one of the uniform-velocity scrolling period Tt, the uniform-velocity scrolling distance Tk, the calculated scrolling distance Zk, and the like may be calculated so as to be proportional to the ratio of the length of the remaining distance vector Sh with respect to the length of the remaining display distance vector Hn.

Furthermore, in the first embodiment and the modification, one example has been described in which the thumbnails included in the thumbnail line are lined up in the horizontal direction (Lx axial direction) of the lower LCD 12 and are scrolled in the horizontal direction, based on, among the direction components of the slide operation performed on the touch panel 13, the horizontal direction component which is identical to the direction in which the thumbnails are lined up, while the vertical direction component has been ignored. By matching the scroll direction and the direction in which the thumbnails are lined up, the user can be prevented from losing track of a thumbnail due to the scroll direction and the arrangement direction of the thumbnail being different, and can execute the scrolling operation with a sensation as if touching the thumbnails. The same can also be applied not only to the scrolling in the horizontal direction but also when the scrolling is performed in other directions.

Furthermore, in the first embodiment and the modification, as described above, the uniform scroll velocity Tv is obtained based on a slide amount of a touch position TP before the user performs a touch-off. By obtaining the uniform scroll velocity Tv as described above, the uniform-velocity scrolling can be initiated at the uniform scroll velocity Tv in accordance with the slide amount immediately before the user performs a touch-off. Thus, the uniform-velocity scrolling can be initiated at an initial velocity reflecting an operation sensation obtained before the user performs a touch-off. It should be noted that the uniform-velocity scrolling period Tt may be adjusted in accordance with the level of the uniform scroll velocity Tv.

Furthermore, in the first embodiment, the uniform-velocity scrolling period Tt is obtained as a parameter that indicates a scroll amount in a uniform-velocity scrolling, and the uniform-velocity scrolling is controlled based on the scroll time St and the uniform-velocity scrolling period Tt. By controlling the uniform-velocity scrolling with time, the time required for the uniform-velocity scrolling can be prevented from becoming excessively long, and the user will not experience any hassle.

Furthermore, in the modification, the uniform-velocity scrolling distance Tk is obtained as a parameter representing a scroll amount in a uniform-velocity scrolling, and the uniform-velocity scrolling is controlled based on the scrolling distance Ky and the uniform-velocity scrolling distance Tk. By controlling the uniform-velocity scrolling with distance as described above, a target thumbnail can be prevented from shifting away from the display area and being out of the user's sight due to over-scrolling caused by performing the uniform-velocity scrolling for an excessively long distance.

Furthermore, in the modification, the deceleration-scrolling distance Gk is calculated as the remaining scroll amount by subtracting the uniform-velocity scrolling distance Tk from the total scrolling distance Sk, and the deceleration-scrolling deceleration velocity Ga is calculated such that the scroll velocity Sv is reduced from the uniform scroll velocity Tv to zero in the deceleration-scrolling distance Gk. By calculating the deceleration based on the remaining scroll amount as described above, the scrolling can be stopped with an appropriate smoothness, regardless of the length of the uniform-velocity scrolling distance Tk in the total scrolling distance Sk when the uniform-velocity scrolling is controlled by the distance obtained based on the uniform-velocity scrolling distance Tk. The same applies when the uniform-velocity scrolling is controlled by time obtained based on the uniform-velocity scrolling period Tt. Therefore, by calculating the deceleration based on the remaining scroll amount, the scrolling can be stopped with an appropriate smoothness, regardless of the scroll amount of the uniform-velocity scrolling in the whole scrolling motion.

Furthermore, in the first embodiment, when the uniform-velocity scrolling is controlled with time, the stop-scrolling is performed to gradually decrease the scroll velocity Sv such that the scroll velocity Sv becomes zero to stop the scrolling when any one of the thumbnails arrives at the center position He of the lower LCD 12. Furthermore, in the above described modification, when the uniform-velocity scrolling is controlled with distance, as a result of taking into consideration of a case where the calculated scrolling distance Zk, which is calculated by multiplying a predetermined constant to the number of thumbnails, does not coincide with a distance from the center position Hc to a scroll position Ci of one of the thumbnails, the calculated scrolling distance Zk is calculated and a distance to a scroll position Ci of a thumbnail closest to the obtained calculated scrolling distance Zk is defined as the total scrolling distance Sk. Thus, in the description above, a case is described in which, the scrolling is stopped such that positions in the horizontal direction of a thumbnail and the center position Hc of the lower LCD 12 match each other, regardless of the control method of uniform-velocity scrolling. As a result, an identical touch position TP can be used for the thumbnails after the scrolling stops, and the user can easily select a thumbnail after the scrolling stops.

Furthermore, in the description above, one example is described in which the arrangement direction and the scroll direction of the plurality of thumbnails are identical to the horizontal direction of the lower LCD 12. However, in another one embodiment, the arrangement direction and the scroll direction of the plurality of thumbnails may be the vertical direction of the lower LCD 12.

Furthermore, in the description above, one example is described in which calculation for moving and scrolling the thumbnail line or the display object is conducted by fixing the display area of the lower LCD 12 in the global coordinate system. However, in another one embodiment, calculation for moving and scrolling the display area of the lower LCD 12 may be conducted by fixing the thumbnail line or the display object in the global coordinate system.

Furthermore, in the description above, the period of the sinusoidal function used for changing the thumbnail line into a waveform is constant. However, in another one embodiment, the length of the period of the sinusoidal function used for changing the thumbnail line into a waveform may be changed in accordance with the number of thumbnails included in the thumbnail line. The same applies not only when using a sinusoidal function but also when a cosine function, a triangular wave function, a sawtooth wave function, or the like is used to determine the arrangement positions of the thumbnails.

Furthermore, in the description above, one example is described in which the arrangement positions of the thumbnails are determined by using the Lx-axis and Ly-axis which are orthogonal to each other. However, in another one embodiment, it is not necessary to use mutually orthogonal coordinate axes, and the arrangement positions of the thumbnails may be determined by using, as the coordinate axes, axes in any two directions, as long as the two directions are not parallel to each other.

Furthermore, in the description above, the uniform-velocity scrolling period Tt, the uniform-velocity scrolling distance Tk, or the uniform scroll velocity Tv can be considered as a parameter representing the scroll amount of the uniform-velocity scrolling. Furthermore, in the description above, the deceleration-scrolling period Gt, the deceleration-scrolling velocity Gv, or the deceleration-scrolling distance Gk can be considered as a parameter representing the scroll amount of the deceleration-scrolling. Furthermore, in the description above, the stop-scrolling period Kt or the stop-scrolling velocity Kv can be considered as a parameter representing the scroll amount of the stop-scrolling. Therefore, in the description above, the period, velocity, and distance of the scrolling can be considered as a parameter representing a scroll amount.

Furthermore, in the description above, one example is described in which scrolling that always includes a uniform-velocity scrolling is performed when scrolling the thumbnail line. However, in another one embodiment, when scrolling a scroll target such as an arbitrary object or object group, a scrolling that does not include a uniform-velocity scrolling may be performed. In more detail, in the other one embodiment, when scrolling a scroll target, a scrolling that does not include a uniform-velocity scrolling may be performed, if a parameter representing a scroll amount for which the scroll target is scrolled from a start to a stop of the scrolling is calculated, based on the size of the scroll target, or on the number of objects included in the scroll target or on a scrollable amount for which the scroll target is scrollable in a scroll direction determined in accordance with a scrolling operation. Even when a scrolling that does not include a uniform-velocity scrolling is performed, if an optimal parameter is calculated based on the size of the scroll target, or on the number of objects included in the scroll target or on a scrollable amount for which the scroll target is scrollable in a scroll direction determined in accordance with a scrolling operation (for example, if a parameter is calculated so as to be proportional to any one of these values); a scrolling that does not cause the user to experience a hassle when finding an object can be performed.

Furthermore, in the first embodiment, when an album display application is selected in accordance with a touch operation using the touch panel 13, the album display process is initiated and the thumbnails are arranged in the thumbnail arrangement process. Furthermore, in the first embodiment, the scrolling that includes a uniform-velocity scrolling is controlled by detecting a slide amount or a touch operation using the touch panel 13. However, in another one embodiment, the album display process and the album creation process may be executed by detecting an operation state of the operation button 14, instead of a slide amount or a touch operation using the touch panel 13. Specifically, the album creation process or the album display process is executed when one of those is determined to be selected, based on an operation state of the operation button 14 on the program selection screen. Furthermore, in the album creation process, various button icons may be allowed to be selected based on an operation state of the operation button 14, and processes similar to the processes described in the first embodiment may be executed in accordance with a selected button icon. Furthermore, in the album display process, when any one of the thumbnails is determined to be selected based on an operation state of the operation button 14, a camera image CI represented by the selected thumbnail may be displayed on the upper LCD 22. Furthermore, in the album display process, when an input in the horizontal direction is detected based on an operation state of the cross button 14A, a scroll velocity may be gradually increased in the corresponding scroll direction so as to be proportional to an input time, and a uniform-velocity scrolling as described above may be initiated by using, as an initial velocity, the scroll velocity obtained when the input cannot to be detected further.

Furthermore, in another one embodiment, a scrolling may be controlled based on coordinate information outputted from other pointing devices, such as coordinate information outputted from a mouse. For example, when a scrolling is controlled based on coordinate information outputted from a mouse, a process for a follow-scrolling can be shifted to a process for a uniform-velocity scrolling in a manner similar that described above and a scroll display process can be executed in a manner similar to that described above, if a so-called drag operation of holding down an arbitrary button and moving the mouse is detected as an operation equivalent to the slide operation to execute the above described follow-scrolling, and if a change from a state in which the drag operation is performed to a state in which the button is not been held down is detected as an operation equivalent to the touch-off. Furthermore, when a mouse is used instead of the touch panel 13, a scroll display process can be executed in a manner similar to those described above, if a rotation operation performed on a scroll wheel, which is typically provided to a mouse, is detected as an operation equivalent to the above described slide operation, and if a change from a rotating state to a non-rotating state of the scroll wheel is detected as an operation equivalent to the above described touch-off. Furthermore, instead of a mouse, a scrolling can be similarly controlled by using a trackpad, a trackball, or the like as input means.

Furthermore, other modes of pointing devices are also conceivable when using a stationary game apparatus in which the user holds a game controller and enjoys a game. For example, a camera fixed on a housing of a game controller can also be used as a pointing device. In such a case, an image taken by the camera changes in accordance with a change in the position pointed by the housing of the game controller. Therefore, a coordinate pointed on a display screen by the housing can be calculated by analyzing this taken image. It is needless to say that the present invention is also achievable if the pointing device such as the touch panel 13 and the like is not disposed on the game apparatus 10 itself.

Furthermore, in order to simplify the description, in the first embodiment, description has been provided by using an example in which a displayed image is a planar image of the real world. However, it is needless to say that the present invention is also applicable to a case where a stereoscopically visible image is displayed as a camera image CI. When a stereoscopically visible image is displayed as a camera image CI, image data of a thumbnail representing the image is generated by using a left-eye image portion of the image, and the image data is stored in the external data storage memory 46 so as to correspond to the camera image CI.

Furthermore, in the description above, one example has been described in which the number of camera images CI registered in the album data Db is 30. However, the number of camera images CI that can be registered in the album data Db may be any number as long as it is equal to or larger than 2.

Furthermore, in another one embodiment, multiple album data Db, each of which having partially or totally different camera images CI registered therein, may be stored in the external data storage memory 46. In such a case, in the program selection screen which is described at step 101 and which is displayed when the program that selectively executes a plurality of application programs is executed, icons representing the album data Db are displayed so as to be individually selectable, and album data Db corresponding to a selected icon is read-out.

Furthermore, in the first embodiment, the upper LCD 22 is a parallax barrier type liquid crystal display, and switching can be conducted between a stereoscopic display and a planar display by controlling ON/OFF of the parallax barrier. In another one embodiment, for example, displaying a stereoscopic image and a planar image may be achieved by using a lenticular lens type liquid crystal display as the upper LCD 22. Also in a case with a lenticular lens type, an image can be stereoscopically displayed, by dividing two images taken by the outer imaging section 23 into thin strips in the vertical direction, and alternately arranging those. Also in the case with the lenticular lens type, an image can be displayed in a planar manner, by having the right and left eyes of a user to visually recognize a single image taken by the inner imaging section 24. More specifically, also in the case with the lenticular lens type liquid crystal display, a single image is divided into thin strips in the vertical direction, and these divided images are alternately arranged such that the right and left eyes of a user can visually recognize the same image. With this, an image taken by the inner imaging section 24 can be displayed as a planar image.

Furthermore, in the above described embodiment, as one example of a liquid crystal display section having two screens, a case has been described in which the lower LCD 12 and the upper LCD 22 are physically separated and are arranged one above the other (a case with two screens arranged one above the other). However, other configurations may be used as the configuration of the two display screens. For example, the lower LCD 12 and the upper LCD 22 may be disposed side by side on a main surface of the lower housing 11. Furthermore, a longwise sized LCD having the same width but twice the vertical length of the lower LCD 12 (i.e., a physically-single LCD that has a display size of two vertically arranged screens) may be arranged on a main surface of the lower housing 11, and two images (e.g., a taken image and an image showing an operation description screen, etc.) may be displayed one above the other (i.e., displayed one above the other in an adjacent manner without a boundary). Furthermore, a horizontally long sized LCD having the same height but twice the horizontal length of the lower LCD 12 may be arranged on a main surface of the lower housing 11, and two images may be displayed side by side in the horizontal direction (i.e., displayed side by side in an adjacent manner without a boundary). Thus a physically-single screen may be divided into two and may display two images. When dividing a physically-single screen into two and using it to display the two images described above, the touch panel 13 may be arranged on the whole screen surface.

Furthermore, in the above described embodiment, although the touch panel 13 is integrally disposed on the game apparatus 10, it is needless to say that the present invention is also achievable when the game apparatus and the touch panel are separate bodies. Furthermore, the touch panel 13 may be disposed on the upper surface of the upper LCD 22 and images displayed on the lower LCD 12 may be displayed on the upper LCD 22, while images displayed on the upper LCD 22 may be displayed on the lower LCD 12.

Furthermore, in the above described embodiment, although the portable game apparatus 10 and a stationary game apparatus have been described, the present invention can be achieved by having the image processing program of the present invention executed on an information processing apparatus such as a general personal computer or the like. Furthermore, in another embodiment, instead of a game apparatus, any portable electronic device including, for example, a PDA (Personal Digital Assistant), a mobile phone, a personal computer, a camera or the like may be used. For example, a mobile phone with a single housing including on a main surface thereof two displaying sections and a real image camera may be used.

Furthermore, the shape of the game apparatus 10, the shapes, numbers, installation positions and the like of the various operation buttons 14, the analog stick 15, and the touch panel 13 are merely examples; and it is needless to say that the present invention can be achieved by other shapes, numbers, and installation positions for those. Furthermore, the process sequences, setting values, values used for determinations, and the like which are used in the above described display control process are merely examples; and it is needless to say that the present invention can be achieved by using other sequences and values.

Furthermore, the above described display control program (game program) may be supplied to the game apparatus 10 not only via external storage media including the external memory 45, the external data storage memory 46, and the like, but also may be supplied to the game apparatus 10 via a wired or wireless communication line. Furthermore, the above described program may be prestored in a nonvolatile storage device included in the game apparatus 10. It should be noted that information storage media for storing the above described program include, other than the nonvolatile memory, optical disc-type storage media such as a CD-ROM, a DVD, or the like, flexible disks, hard disks, magneto-optical discs, magnetic tapes, and the like. Furthermore, a volatile memory that can temporarily store the above described program may be used as the information storage medium.

Furthermore, in the description above, although an example is used in which the above described display control program is executed by the information processing section 31, at least one part of the display control program may be executed by an information processing section that is formed from at least a CPU, and that is included in a separate device capable of communicating with the information processing section 31. For example, when the game apparatus 10 is capable of communicating with another device (e.g., a server), the processes of the display control program may be cooperatively executed by the game apparatus 10 and the other device. As one example, the display control program may be executed on a display control system which is formed such that the display control program is executed on another device, and the touch panel 13 and the lower LCD 12 of the game apparatus 10 are used for detecting operations necessary to execute the program such as the touch-on, touch-off, and slide operation, and for performing, as a display device, the display necessary for executing the program.

While the invention has been described in detail, the foregoing description is in all aspects illustrative and not restrictive. It is to be understood that numerous other modifications and variations can be devised without departing from the scope of the invention. It is also to be understood that the scope of the invention is indicated by the appended claims rather than by the foregoing description. It is also to be understood that the detailed description herein enables one skilled in the art to make changes coming within the meaning and equivalency range of the present invention. It should be also understood that the terms as used herein have definitions typically used in the art unless otherwise mentioned. Thus, unless otherwise defined, all scientific and technical terms have the same meanings as those generally used by those skilled in the art to which the present invention pertain. If there is contradiction, the present specification (including the definitions) precedes.

**Claims**

1. A display control program executed by a computer (31) of a display control apparatus for integrally scrolling an object or a group of objects as a scroll target, and displaying one part of the scroll target in a display area representing one part or the whole of a display screen (12), the display control program causing the computer to function as:

   scrolling operation accepting means (31, S501) for accepting a scrolling operation to scroll the scroll target in the display screen;
   scrolling motion setting means (31, S529) for calculating, in accordance with the scrolling operation accepted by the scrolling operation accepting means, a uniform-velocity scrolling parameter representing a scroll amount for which the scroll target is scrolled at a uniform velocity, based on a size of the scroll target, or on the number of objects included in the scroll target or on a scrollable amount for which the scroll target is scrollable in a scroll direction determined in accordance with the scrolling operation, and for setting a scrolling motion which includes, at least as one part of the motion, a uniform-velocity scrolling for the scroll amount determined based on the uniform-velocity scrolling parameter; and
   scrolling means (31, S562) for scrolling the scroll target in accordance with the scrolling motion set by the scrolling motion setting means.

2. The display control program according to claim 1, wherein the scrolling motion setting means uses, as the scrollable amount, the number of objects existing in the scroll direction among the objects included in the scroll target, and calculates the uniform-velocity scrolling parameter based on said number of the objects existing in the scroll direction.

3. The display control program according to claim 1, wherein the scrolling motion setting means uses, as the scrollable amount, a length to an object existing at an end in the scroll direction among the objects included in the scroll target, and calculates the uniform-velocity scrolling parameter based on the length to the object at the end.

4. The display control program according to claim 1, wherein the scrolling motion setting means calculates the uniform-velocity scrolling parameter based on a ratio between the scrollable amount and a length of the display area corresponding to the scrollable amount.

5. The display control program according to claim 1, wherein the scrolling motion setting means calculates the uniform-velocity scrolling parameter based on the scrollable amount.

6. The display control program according to claim 1, wherein when the scrolling motion setting means calculates the uniform-velocity scrolling parameter based on said number of the objects included in the scroll target, the uniform-velocity scrolling parameter is calculated so as to be proportional to said number.

7. The display control program according to claim 2, wherein when the scrolling motion setting means uses, as the scrollable amount, said number of the objects existing in the scroll direction determined in accordance with the scrolling operation among the objects included in the scroll target, and calculates the uniform-velocity scrolling parameter based on said number of the objects existing in the scroll direction; the uniform-velocity scrolling parameter is calculated so as to be proportional to said number.

8. The display control program according to claim 3, wherein when the scrolling motion setting means uses, as the scrollable amount, the length to the object existing at the end in the scroll direction among the objects included in the scroll target, and calculates the uniform-velocity scrolling parameter based on the length to the object at the end; the uniform-velocity scrolling parameter is calculated so as to be proportional to the length to the object at the end.

9. The display control program according to claim 4, wherein when the scrolling motion setting means calculates the uniform-velocity scrolling parameter based on the ratio between the scrollable amount and the length of the display area corresponding to the scrollable amount, the uniform-velocity scrolling parameter is calculated so as to be proportional to a ratio of the scrollable amount with respect to the length of the display area corresponding to the scrollable amount.

**10.** The display control program according to claim 5, wherein when the scrolling motion setting means calculates the uniform-velocity scrolling parameter based on the scrollable amount, the uniform-velocity scrolling parameter is calculated so as to be proportional to the scrollable amount.

**11.** The display control program according to any one of claims 1 to 3 and 6 to 8, wherein:

the display control program causes the computer to further function as object arrangement means for arranging the group of objects as the scroll target, such that each of the objects in the group is aligned in a predetermined direction; and
the scrolling motion setting means sets the scrolling motion so as to scroll the scroll target in the predetermined direction.

**12.** The display control program according to any one of claims 1 to 11, wherein:

the scrolling operation accepting means includes
coordinate instruction detection means for detecting a coordinate instruction by a user using an input device, and
slide velocity detection means for detecting, when the scroll target is selected and slid, a slide velocity obtained immediately before releasing the selected scroll target, based on the coordinate instruction detected by the coordinate instruction detection means; and
the scrolling motion setting means determines the initial velocity of the scrolling motion based on the slide velocity detected by the slide velocity detection means.

**13.** The display control program according to any one of claims 1 to 12, wherein the scrolling motion setting means calculates, as the uniform-velocity scrolling parameter, a length of time for which the scroll target is scrolled at a uniform velocity.

**14.** The display control program according to any one of claims 1 to 12, wherein the scrolling motion setting means calculates, as the uniform-velocity scrolling parameter, a length of a distance for which the scroll target is scrolled at a uniform velocity.

**15.** The display control program according to any one of claims 1 to 14, wherein after the uniform-velocity scrolling, the scrolling motion setting means sets the scrolling motion so as to further include a deceleration-scrolling of decelerating a scroll velocity at a predetermined deceleration regardless of the magnitude of the uniform-velocity scrolling parameter.

**16.** A display control program executed by a computer (31) of a display control apparatus for integrally scrolling an object or a group of objects as a scroll target, and displaying one part of the scroll target in a display area representing one part or the whole of a display screen (12), the display control program causing the computer to function as:

scrolling operation accepting means (31, S501) for accepting a scrolling operation to scroll the scroll target in the display screen;
scrolling motion setting means (31, S529) for calculating, in accordance with the scrolling operation accepted by the scrolling operation accepting means, a scroll parameter representing a scroll amount for which the scroll target is scrolled from a start to a stop of the scrolling, based on a size of the scroll target, or on the number of objects included in the scroll target or on a scrollable amount for which the scroll target is scrollable in a scroll direction determined in accordance with the scrolling operation, and for setting a scrolling motion having a scroll amount determined based on the scroll parameter; and
scrolling means (31, S562) for scrolling the scroll target in accordance with the scrolling motion set by the scrolling motion setting means.

**17.** A display control method executed by a display control apparatus for integrally scrolling an object or a group of objects as a scroll target, and displaying one part of the scroll target in a display area representing one part or the whole of a display screen (12), the method comprising:

a scrolling operation accepting step (S501) of accepting a scrolling operation to scroll the scroll target in the display screen;
a scrolling motion setting step (S529) of calculating, in accordance with the scrolling operation accepted at the scrolling operation accepting step, a uniform-velocity scrolling parameter representing a scroll amount for which the scroll target is scrolled at a uniform velocity, based on a size of the scroll target, or on the number of objects included in the scroll target or on a scrollable amount for which the scroll target is scrollable in a scroll direction determined in accordance with the scrolling operation, and setting a scrolling motion which includes, at least as one part of the motion, a uniform-velocity scrolling for the scroll amount determined based on the uniform-velocity scrolling parameter; and
a scroll step (S562) of scrolling the scroll target in accordance with the scrolling motion set at the scrolling motion setting step.

18. A display control system, which includes a single device or a plurality of devices capable of communicating with each other, for integrally scrolling an object or a group of objects as a scroll target, and displaying one part of the scroll target in a display area representing one part or the whole of a display screen (12), the display control system comprising:

scrolling operation accepting means (31, S501) for accepting a scrolling operation to scroll the scroll target in the display screen;
scrolling motion setting means (31, S529) for calculating, in accordance with the scrolling operation accepted by the scrolling operation accepting means, a uniform-velocity scrolling parameter representing a scroll amount for which the scroll target is scrolled at a uniform velocity, based on a size of the scroll target, or on the number of objects included in the scroll target or on a scrollable amount for which the scroll target is scrollable in a scroll direction determined in accordance with the scrolling operation, and for setting a scrolling motion which includes, at least as one part of the motion, a uniform-velocity scrolling for the scroll amount determined based on the uniform-velocity scrolling parameter; and
scrolling means (31, S562) for scrolling the scroll target in accordance with the scrolling motion set by the scrolling motion setting means.

FIG. 1

F I G. 2

F I G. 3

F I G. 4

| 32 | MAIN MEMORY | ⟷ | 31 INFORMATION PROCESSING SECTION | ⟵ | OPERATION BUTTON | 14 |

```
32 ── MAIN MEMORY ⟷

33 ── EXTERNAL MEMORY
        I/F            ⟷

45 ── EXTERNAL MEMORY ─↑

34 ── EXTERNAL DATA
        STORAGE MEMORY ⟷
        I/F

46 ── EXTERNAL DATA
        STORAGE MEMORY ─↑

35 ── INTERNAL DATA
        STORAGE MEMORY ⟷

36 ── WIRELESS
        COMMUNICATION  ⟷
        MODULE

37 ── LOCAL
        COMMUNICATION  ⟷
        MODULE

38 ── RTC             ⟷

39 ── ACCELERATION    ⟶
        SENSOR

40 ── ANGULAR         ⟶
        VELOCITY SENSOR

16 ── VARIOUS LEDs    ⟵

26 ── 3D INDICATOR    ⟵
```

31 — INFORMATION PROCESSING SECTION

311 — CPU

312 — GPU

313 — VRAM

14 — OPERATION BUTTON

15 — ANALOG STICK

12 — LOWER LCD

22 — UPPER LCD

23 — 
23a — OUTER LEFT IMAGING SECTION
23b — OUTER RIGHT IMAGING SECTION

24 — INNER IMAGING SECTION

25 — 3D ADJUSTING SWITCH

13 — TOUCH PANEL

43 — MICROPHONE

44 — LOUDSPEAKER

42 — I/F CIRCUIT

41 — POWER CIRCUIT

44

FIG. 5

FIG. 6

| N | Pid | Sid |
|---|-----|-----|
| 1 | P4 | S4 |
| 2 | P6 | S6 |
| 3 | P3 | S3 |
| 4 | P5 | S5 |
| ⋮ | ⋮ | ⋮ |
| 30 | P11 | S11 |

F I G. 7

FIG. 8

F I G. 9

F I G. 1 0 A

F I G. 1 0 B

F I G. 1 0 C

FIG. 11

F I G.  1 2

FIG. 13

FIG. 14

F I G. 1 5

SCROLL VELOCITY

Sv

Tv

Gv

Kv

St  SCROLL TIME

Kt

Gt

Tt

th

F I G.　1 6

F I G.　1 7

FIG. 18

32

| | |
|---|---|
| **OPERATION DATA** | Da |
| TOUCH POSITION DATA | Da1 |
| OPERATION BUTTON DATA | Da2 |
| **ALBUM DATA** | Db |
| CAMERA IMAGE IDENTIFIER DATA | Db1 |
| THUMBNAIL IDENTIFIER DATA | Db2 |
| **IMAGE DATA** | Dc |
| CAMERA IMAGE DATA | Dc1 |
| THUMBNAIL DATA | Dc2 |
| THUMBNAIL POSITION DATA | Dd |
| **FLAG DATA** | De |
| SCROLL TIME MEASURING FLAG | De1 |
| STOP-SCROLLING DECELERATION CALCULATION FLAG | De2 |

⋮

| | |
|---|---|
| GROUP OF VARIOUS PROGRAMS | Pa |

⋮

F I G. 1 9

```
                        ┌────────────────────┐
                        │       START        │
                        └────────────────────┘
                                 │
     S101                        ▼
                        ┌────────────────────┐
                        │  DISPLAY PROGRAM   │
                        │  SELECTION SCREEN  │
                        └────────────────────┘
                                 │
                                 ▼        S102
                           ◇─────────────◇         No
                        ◇  CREATE AN ALBUM ? ◇──────────────┐
                           ◇─────────────◇                  │
     S103                      │ Yes                        │
                        ┌──────▼─────────────┐              │
                        │ ALBUM CREATION     │              │
                        │ PROCESS            │              │
                        └────────────────────┘              │
                              │          S104                │
                              │      ◇─────────────◇    No   │
                              │   ◇  DISPLAY AN ALBUM ? ◇────┐
                              │      ◇─────────────◇          │
                              │           │ Yes     S106     │
                              │           │       ◇──────────◇   No
                              │           │    ◇ HAS ANOTHER   ◇──┐
                              │           │    ◇ PROCESS BEEN   ◇  │
                              │   S105    │    ◇ SELECTED ?     ◇  │
                              │           │       ◇──────────◇     │
                              │  ┌────────▼────────┐  │ Yes        │
                              │  │ ALBUM DISPLAY   │  │            │
                              │  │ PROCESS         │  │  S107      │
                              │  └─────────────────┘  │            │
                              │           │   ┌───────▼────────┐   │
                              │           │   │ EXECUTE THE    │   │
                              │           │   │ SELECTED OTHER │   │
                              │           │   │ PROCESS        │   │
                              │           │   └────────────────┘   │
                              │           └───────────┐  └─────────┘
     S108                     ▼                        
                        ◇─────────────◇
                     ◇  HAS "END" BEEN  ◇
              No     ◇  TOUCHED ?       ◇
                        ◇─────────────◇
                              │ Yes
                        ┌─────▼──────────────┐
                        │        END         │
                        └────────────────────┘
```

FIG. 20

```
        ┌──────────────────────────┐
        │   START ALBUM CREATION   │
        │         PROCESS          │
        └──────────────────────────┘
                     │
 S201                ▼
        ┌──────────────────────────┐
        │   DISPLAY ALBUM CREATION │
        │          SCREEN          │
        └──────────────────────────┘
                     │
 S202                ▼
        ┌──────────────────────────┐
        │     DISPLAY THUMBNAIL     │
        └──────────────────────────┘
                     │
                     │         S203
                     ▼
        ┌──────────────────────────┐
        │   ACQUIRE TOUCH POSITION │
        │         DATA Da1         │
        └──────────────────────────┘
                     │
 S204                ▼
              ╱────────────╲      No
             ╱   HAS A      ╲─────────────┐
             ╲ THUMBNAIL BEEN╱             │
              ╲  TOUCHED ?  ╱      S206    ▼
               ╲──────────╱         ╱──────────────╲    No
                  │ Yes            ╱      HAS        ╲───────────┐
                  │               ╲  "UNREGISTER"    ╱           │
                  │                ╲ BEEN TOUCHED ? ╱    S208     ▼
 S205             │                 ╲────────────╱        ╱────────────╲   No
                  ▼                      │ Yes           ╱      HAS      ╲──────( A )
        ┌──────────────────────┐        │              ╲  "REGISTER"     ╱
        │ DISPLAY SELECTION    │        │               ╲ BEEN TOUCHED ? ╱
        │ FRAME IMAGE Sw       │        │                ╲────────────╱
        └──────────────────────┘        │                     │ Yes
                  │         S207         ▼
                  │          ┌──────────────────────┐
                  │          │  DELETE FROM ALBUM    │
                  │          │         DATA          │
                  │          └──────────────────────┘
                  │            S209    │
                  │                    │    ┌──────────────────────────┐
                  │                    │    │   REGISTER TO ALBUM DATA  │
                  │                    │    └──────────────────────────┘
                  │                    │                   │
                  ▼                    ▼                   ▼
     ─────────────────────────────────────────────────────────( B )
```

FIG. 21

F I G. 2 2

START ALBUM DISPLAY PROCESS

S301
READ-OUT ALBUM DATA Db

S302
THUMBNAIL ARRANGEMENT PROCESS

S303
ACQUIRE TOUCH POSITION DATA Da1

S304
HAS A TOUCH-ON BEEN PERFORMED ON A THUMBNAIL ? — No

Yes

S305
DISPLAY CAMERA IMAGE CI

S306
HAS A TOUCH-ON BEEN PERFORMED ON SCROLL RECEIVING AREA ? — No

Yes

S307
SCROLL DISPLAY PROCESS

S308
HAS "END" BUTTON BEEN TOUCHED ? — No

Yes

RETURN

F I G. 2 3

```
        ┌─────────────────────────────┐
        │    START THUMBNAIL          │
        │   ARRANGEMENT PROCESS       │
        └─────────────────────────────┘
                      │
S401                  ▼
        ┌─────────────────────────────┐
        │            N=1              │
        └─────────────────────────────┘
                      │
S402                  ▼◄──────────────────( D )
        ┌─────────────────────────────┐
        │    CALCULATE i-th BASIC     │
        │        POSITION Ki          │
        └─────────────────────────────┘
                      │
S403                  ▼
              ╱────────────╲              No
            ╱   IS START     ╲──────────────────┐
           ╱ POINT RATE Rs TO BE ╲               │
            ╲   CALCULATED ?    ╱                │
              ╲────────────╱                     │
                   │ Yes          S405           ▼
                   │            ╲   ╱────────────╲
                   │             ╲ ╱   IS END     ╲       No
S404               │            ╱ POINT RATE Re TO BE ╲──────┐
   ┌───────────────▼───────┐     ╲   CALCULATED ?   ╱       │
   │  CALCULATE START POINT │      ╲────────────╱           │
   │       RATE Rs          │           │ Yes               │
   └───────────────────────┘            │                   │
                   │        S406         ▼                   │
                   │     ┌─────────────────────────────┐     │
                   │     │ CALCULATE END POINT RATE Re │     │
                   │     └─────────────────────────────┘     │
                   │                │        S407            │
                   │                │                  ┌─────▼──────────────┐
                   │                │                  │   SET RATE TO 1    │
                   │                │                  └────────────────────┘
S408               ▼◄───────────────┘◄────────────────────────┘
   ┌───────────────────────────┐
   │  MULTIPLY RATE R AND Ly   │
   │ AXIAL DIRECTION COORDINATE │
   └───────────────────────────┘
                   │
                   ▼
                 ( C )
```

F I G. 2 4

```
              ( C )
                │
                ▼
S420  ┌─────────────────────────────┐
      │ CALCULATE INITIAL POSITION  │
      └─────────────────────────────┘
                │
                ▼
S421  ┌─────────────────────────────┐
      │   STORE INITIAL POSITION    │
      └─────────────────────────────┘
                │
                ▼
S422        ◇─────────◇
          ◇  N=Nmax?   ◇───── No ──────────────────┐
            ◇─────────◇                             │
                │                                   │
               Yes                                  ▼
S423  ┌──────────────────────┐       S424  ┌──────────────────────┐
      │  DISPLAY THUMBNAIL    │             │        N=N+1         │
      └──────────────────────┘             └──────────────────────┘
                │                                   │
                ▼                                   ▼
      (    RETURN    )                           ( D )
```

FIG. 25

```
                  ┌─────────────────────┐
                  │  START SCROLL DISPLAY │
                  │       PROCESS         │
                  └─────────────────────┘
                            │
                            ▼                    S501
                  ┌─────────────────────┐
                  │  ACQUIRE TOUCH POSITION │
                  │       DATA Da1        │
                  └─────────────────────┘
                            │
      S502                  ▼
                  ┌─────────────────────┐
                  │  CALCULATE DIFFERENTIAL │
                  │  DISTANCE IN HORIZONTAL │
                  │       DIRECTION       │
                  └─────────────────────┘
                            │
      S503                  ▼
                  ┌─────────────────────┐
                  │  BASED ON DIFFERENTIAL │
                  │  DISTANCE, CALCULATE  │
                  │ THUMBNAIL POSITION AFTER │
                  │  HORIZONTAL SCROLLING │
                  └─────────────────────┘
                            │
      S504                  ▼
                       ╱─────────╲          No
                      ╱  CONTINUE  ╲─────────┐
                      ╲  SCROLLING ? ╱        │
                       ╲─────────╱            │
                            │ Yes             │
      S505                  ▼                 │
                  ┌─────────────────────┐     │
                  │  PERFORM HORIZONTAL │     │
                  │ SCROLLING TO CALCULATED │ │
                  │      POSITION       │     │
                  └─────────────────────┘     │
                            │                 │
      S506                  ▼◄────────────────┘
                  ┌─────────────────────┐
                  │  ACQUIRE TOUCH POSITION │
                  │       DATA Da1        │
                  └─────────────────────┘
                            │
      S507                  ▼
                       ╱─────────╲
              No      ╱   HAS A    ╲
          ┌──────────╲ TOUCH-OFF BEEN╱
          │           ╲ PERFORMED ? ╱
          │            ╲─────────╱
          │                 │ Yes
      S508 │                ▼
          │            ╱─────────╲        No
          │           ╱  CONTINUE  ╲──────────┐
          │           ╲  SCROLLING ? ╱         │
          │            ╲─────────╱             │
          │                 │ Yes              │
          │                 ▼                  ▼
          │               ( E )              ( F )
```

F I G. 2 6

```
                        ( E )
                          │
                          ▼
S521                ┌─────────────┐
         Yes        │   IS St      │
      ◄─────────────│ MEASURING FLAG │
                    │   "ON" ?      │
                    └─────────────┘
                          │ No
S522                      ▼
                 ┌──────────────────┐
                 │ START MEASURING St │
                 └──────────────────┘
                          │
S523                      ▼
                 ┌────────────────────────┐
                 │ TURN "ON" St MEASURING FLAG │
                 └────────────────────────┘
                          │
S524                      ▼
                 ┌──────────────┐
                 │ CALCULATE Tv  │
                 └──────────────┘
                          │
S525                      ▼
                    ┌──────────┐      Yes
                    │  Tv≤th?   │──────────────────────────┐
                    └──────────┘                           │
                          │ No                             │
S526                      ▼                                │
                 ┌──────────────┐                          │
                 │ CALCULATE Tt  │                         │
                 └──────────────┘                          │
                          │                                │
S527                      ▼                                │
                 ┌──────────────┐                          │
                 │ CALCULATE Gt  │                         │
                 └──────────────┘                          │
                          │                                │
                          ▼                  S528          │
                    ┌──────────┐     No                    │
                    │ 0<St≤Tt?  │──────────────┐           │
                    └──────────┘               │           │
                          │ Yes                ▼    S530    │
S529                      │              ┌──────────┐       │
                          │              │ Tt<St<Gt? │──────┼──┐
                 ┌──────────────┐        └──────────┘  No   │  │
                 │   Sv=Tv       │             │ Yes        │  │
                 └──────────────┘             │             │  ▼
                          │          S531      ▼            │ ( G )
                          │         ┌──────────────┐        │
                          │         │ CALCULATE Gv   │       │
                          │         └──────────────┘        │
                          │          S532      │            │
                          │         ┌──────────────┐        │
                          │         │   Sv=Gv       │        │
                          │         └──────────────┘        │
                          │                │                │
                          ◄────────────────┘                │
                          ▼
                        ( F )
```

FIG. 27

G

S541 IS Ka CALCULATION FLAG "ON" ?
Yes

No

S542 ACQUIRE POSITION OF THUMBNAIL ARRIVING AT CENTER POSITION Hc NEXT

S543 CALCULATE Ka BASED ON ACQUIRED POSITION

S544 TURN Ka CALCULATION FLAG "ON"

S545 CALCULATE Kv BASED ON Ka

S546 Sv=Kv

F

S547 ACQUIRE TOUCH POSITION DATA Da1

S548 HAS A TOUCH-ON BEEN PERFORMED ?
Yes
I

No

S549 BASED ON Sv, CALCULATE THUMBNAIL POSITION AFTER HORIZONTAL SCROLLING

H

FIG. 28

S561 CONTINUE SCROLLING ?

No

Yes

S562 PERFORM HORIZONTAL SCROLLING TO CALCULATED POSITION

E

I

S563 STOP SCROLLING

S564 RESET St

S565 TURN FLAG "OFF"

RETURN

FIG. 29

FIG. 30

FIG. 31

F I G. 3 2

E

S601  IS Ky MEASURING FLAG "ON" ?

Yes

No

S602  START MEASURING Ky

S603  TURN Ky MEASURING FLAG "ON"

S524  CALCULATE Tv

S604  CALCULATE Zk

S605  CALCULATE Tk

S606  CALCULATE Gk

S607  CALCULATE Ga

S608  $0 < Ky \leq Tk$?

No

Yes

S529  Sv=Tv

S609  $Tk < Ky \leq Gk$?

Yes

No

S531  CALCULATE Gv

S532  Sv=Gv

F

FIG. 33

F I G. 3 4

F I G. 3 5

Europäisches
Patentamt

European
Patent Office

Office européen
des brevets

## EUROPEAN SEARCH REPORT

Application Number

EP 11 18 1630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/132789 A1 (ORDING BAS [US] ET AL) 14 June 2007 (2007-06-14) * paragraphs [0009], [0015], [0048], [0057], [0058], [0072] * ----- | 1-18 | INV. G06F3/048 |
| | | | |
| | | | TECHNICAL FIELDS SEARCHED (IPC) G06F |

The present search report has been drawn up for all claims

| Place of search | Date of completion of the search | Examiner |
|---|---|---|
| Munich | 13 December 2011 | Wiedmeyer, Vera |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P04C01)

**ANNEX TO THE EUROPEAN SEARCH REPORT**
**ON EUROPEAN PATENT APPLICATION NO.**

EP 11 18 1630

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2011

| Patent document cited in search report | Publication date | Patent family member(s) | Publication date |
|---|---|---|---|
| US 2007132789 A1 | 14-06-2007 | AU 2006321681 A1 | 14-06-2007 |
| | | AU 2008100502 A4 | 10-07-2008 |
| | | CN 101336407 A | 31-12-2008 |
| | | DE 112006003309 T5 | 08-01-2009 |
| | | DE 212006000076 U1 | 31-07-2008 |
| | | EP 1958048 A2 | 20-08-2008 |
| | | EP 2107447 A1 | 07-10-2009 |
| | | JP 4707745 B2 | 22-06-2011 |
| | | JP 2009518758 A | 07-05-2009 |
| | | KR 20080082683 A | 11-09-2008 |
| | | KR 20090081019 A | 27-07-2009 |
| | | US 2007132789 A1 | 14-06-2007 |
| | | WO 2007067858 A2 | 14-06-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010210910 A

- JP 2007018040 A